# EUROPEAN PATENT APPLICATION

(11) **EP 4 471 071 A1**
(43) Date of publication of application: **04.12.2024**
(21) Application number: 22924216.9
(22) Date of filing: 27.12.2022
(51) Int. Cl.: C08F 297/04, C08L 23/00, C08L 53/02, C08L 101/00

(54) **HYDROGENATED BLOCK COPOLYMER, HYDROGENATED BLOCK COPOLYMER COMPOSITION, AND MOLDED ARTICLE**

(30) Priority: 25.01.2022 JP 2022009153
(71) Applicant: Asahi Kasei Kabushiki Kaisha, Tokyo 1000006 (JP)
(72) Inventor: SONODA, Yuya, Tokyo 100-0006 (JP); KAMIMURA, Satoshi, Tokyo 100-0006 (JP)
(74) Representative: Strehl Schübel-Hopf & Partner
(86) International application number: PCT/JP2022/048199
(87) International publication number: WO 2023/145369

(57) **Abstract**

The present invention provides a hydrogenated block copolymer satisfying the following conditions (1) to (4):
Condition (1):
the hydrogenated block copolymer contains a polymer block (a) principally containing a vinyl aromatic monomer unit, and a content of the polymer block (a) is 10% by mass or more and 40% by mass or less;
Condition (2):
the hydrogenated block copolymer contains at least one hydrogenated copolymer block (b) containing a vinyl aromatic monomer unit and a conjugated diene monomer unit, and a content of the vinyl aromatic monomer unit in the hydrogenated copolymer block (b) is 30% by mass or more and 79% by mass or less;
Condition (3):
the hydrogenated block copolymer has a value of instantaneous hardness measured with a type A durometer in accordance with JIS K6253 of 60 or more, and a value of instantaneous hardness measured with a type D durometer of 65 or less; and
Condition (4):
the hydrogenated block copolymer has an MFR value measured under conditions of a temperature of 230°C and a load of 2.16 kg in accordance with JIS K7210 of 10 or more.

## Description

### Technical Field

The present invention relates to a hydrogenated block copolymer, a hydrogenated block copolymer composition, and a molded article.

### Background Art

A hydrogenated product of a block copolymer containing a conjugated diene compound and a vinyl aromatic compound has elasticity equivalent to that of vulcanized natural rubber or synthetic rubber at normal temperature even when not vulcanized, and has processability equivalent to that of a thermoplastic resin at a high temperature, and therefore, is widely used in the fields of materials of a modifying agent of plastics, a viscous adhesive, vehicle components, medical instruments and the like. The hydrogenated product of the block copolymer is excellent in weather resistance and heat resistance, and hence is practically used widely as materials of vehicle components and medical instruments in particular.

The hydrogenated product of a block copolymer containing a conjugated diene compound and a vinyl aromatic compound, such as a hydrogenated styrene-based elastomer (hereinafter sometimes simply abbreviated as "TPS material") is, however, inferior in wear resistance, and hence has a problem of restriction on the use.

To solve this problem, Patent Document 1 proposes a resin composition containing a random copolymer styrene-based elastomer having a content of a vinyl aromatic monomer unit of 40% by mass or more and less than 95% by mass, and a polypropylene resin, and a molded article of the resin composition, and discloses that this molded article is excellent in wear resistance.

Besides, in recent years, attentions are being paid, as a new direction of vehicles, to self-driving system and mobility service. Owing to this trend, performances required of vehicle interior materials have been changed. For example, it is predicted that vehicles will have a stronger sense as a living space due to the self-driving system. Therefore, for creating a space where passengers can be comfortable, interiors have been increased in grades, and interior design has become highly diversified. As a result, resin compositions used as materials of vehicle interior materials are required to have good processability and appearance so that more detailed designs than conventional ones can be molded.

From the viewpoint of the mobility service, in accordance with spread of car sharing, a long life and cleanliness of vehicles will be probably required. Therefore, the number of times of cleaning vehicle interior materials will increase, and hence resin compounds used as the materials of the vehicle interior materials will need higher wear resistance.

In this manner, due to the spread of the self-driving system and the mobility service, polymers used as materials of resin compositions need better processability and appearance, and higher wear resistance than those of conventional products.

For example, Patent Document 2 discloses the following technique: By introducing, into a hydrogenated block copolymer, a hydrogenated polymer block C of a conjugated diene polymer having a vinyl bond content of 30% by mass or more, oil bleeding is suppressed, an addable amount of process oil is increased, and processability is improved with heat resistance and wear resistance retained in a resin composition that is a mixture with polypropylene. This technique has, however, a problem that high processability level required in these years is not attained, and the processability is required to be further improved.

In general, processability and wear resistance are physical properties that tend to be exhibited by contradictory polymer structures. For example, the processability of a resin composition containing a hydrogenated block copolymer can be improved by reducing the molecular weight of the hydrogenated block copolymer to attain a high MFR, but the tackiness of the polymer itself is thus increased, and hence the wear resistance of the resin composition tends to be deteriorated.

Besides, the tackiness increase of the polymer itself also tends to harmfully affect production of products.

In more detail, a hydrogenated block copolymer is usually used in the form of a pellet, and when the hydrogenated block copolymer pellet has high tackiness, supply and transportation to an apparatus, and measurement tend to be difficult in producing and shipping processes, and producing and processing processes of final products. Besides, during storage of pellets, what is called a blocking phenomenon that the pellets stick together to form a large block occurs, and as a result, there arises a problem that the pellets gather in a storage tank and hence cannot be discharged, or that the pellets gather in a bag or container in which the pellets are filled, and hence are difficult to be used. The blocking phenomenon is conspicuous as the external temperature during the storage is higher, or the range of temperature is wider during the storage.

As a method for preventing blocking of pellets, for example, a method in which the pellets are coated with any of various fatty acids, a method in which the pellets are coated with any of various fatty acid amides, a method in which the pellets are coated with any of various waxes, a method in which the pellets are coated with an inorganic fine powder such as silica, talk, or mica, and a method in which the surfaces of the pellets are coated with an anti-tack agent are known.

### Citation List

### Patent Document

Patent Document 1: International Publication No. WO2003/035705
Patent Document 2: International Publication No. WO2006/088187

### Summary of Invention

### Technical Problem

It is, however, difficult to suppress the blocking of pellets that have particularly high tackiness and high blocking property even when an anti-tack agent is added thereto. On the contrary, the blocking may be suppressed by excessively adding an anti-tack agent in some cases, but the anti-tack agent may harmfully affect physical properties of a final product, and transparency, mechanical properties, adhesiveness, appearance and the like may be impaired. Besides, there arises a problem that an anti-tack agent such as calcium stearate aggregates in a molding device, which tends to pollute the device.

Therefore, an object of the present invention is to provide a hydrogenated block copolymer, in which blocking is difficult to occur, and which can exhibit excellent processability, heat resistance and wear resistance when formed into a resin composition with an olefin-based resin, and a resin composition containing the hydrogenated block copolymer.

### Solution to Problem

The present inventors have made earnest studies to solve the above-described problems of the conventional techniques, resulting in finding the following: In a hydrogenated block copolymer having a specific structure, when a ratio of a polymer block principally containing a vinyl aromatic monomer unit in the hydrogenated block copolymer, a ratio of the vinyl aromatic monomer unit in a block containing a vinyl aromatic monomer unit and a conjugated diene monomer unit, hardness, and an MFR are specified respectively to appropriate ranges, a hydrogenated block copolymer in which blocking is difficult to occur, and processability, heat resistance, and wear resistance can be improved when formed into a resin composition with an olefin-based resin can be provided, and as a result, the present invention has been accomplished.

Specifically, the present invention is:
[1] A hydrogenated block copolymer that is a hydrogenated product of a block copolymer containing a vinyl aromatic monomer unit and a conjugated diene monomer unit, satisfying the following conditions (1) to (4) :
   <Condition (1)>:
      the hydrogenated block copolymer contains at least one polymer block (a) principally containing a vinyl aromatic monomer unit, and a content of the polymer block (a) principally containing the vinyl aromatic monomer unit is 10% by mass or more and 40% by mass or less;
   <Condition (2)>:
      the hydrogenated block copolymer contains at least one hydrogenated copolymer block (b) containing a vinyl aromatic monomer unit and a conjugated diene monomer unit, and a content of the vinyl aromatic monomer unit in the hydrogenated copolymer block (b) is 30% by mass or more and 79% by mass or less;
   <Condition (3)>:
      the hydrogenated block copolymer has a value of instantaneous hardness measured with a type A durometer in accordance with JIS K6253 of 60 or more, and a value of instantaneous hardness measured with a type D durometer of 65 or less; and
   <Condition (4)>:
      the hydrogenated block copolymer has an MFR value measured under conditions of a temperature of 230°C and a load of 2.16 kg in accordance with JIS K7210 of 10 or more.
[2] The hydrogenated block copolymer according to [1],
   wherein the value of instantaneous hardness measured with a type A durometer in accordance with JIS K6253 is 85 or more, and the value of instantaneous hardness measured with a type D durometer is 45 or less.
[3] The hydrogenated block copolymer according to [1] or [2],
   wherein the content of the polymer block (a) principally containing the vinyl aromatic monomer unit is 25% by mass or more and 35% by mass or less.
[4] The hydrogenated block copolymer according to any one of [1] to [3],
   wherein the MFR value measured under conditions of a temperature of 230°C and a load of 2.16 kg in accordance with JIS K7210 is 50 or more.
[5] The hydrogenated block copolymer according to any one of [1] to [4],
   wherein the content of the vinyl aromatic monomer unit in the hydrogenated copolymer block (b) is 45% by mass or more and 70% by mass or less.
[6] The hydrogenated block copolymer according to any one of [1] to [5], wherein a content of all vinyl aromatic monomer units is 60% by mass or more and 80% by mass or less.
[7] The hydrogenated block copolymer according to any one of [1] to [6], wherein a vinyl bond content in the hydrogenated copolymer block (b) is 30% by mass or more.
[8] The hydrogenated block copolymer according to any one of [1] to [7], containing:
   at least one hydrogenated polymer block (c) principally containing a conjugated diene monomer unit,
   wherein a content of the hydrogenated polymer block (c) principally containing the conjugated diene monomer unit is 3% by mass or more.
[9] The hydrogenated block copolymer according to any one of [1] to [8], containing:
   at least one hydrogenated polymer block (c) principally containing a conjugated diene monomer unit,
   wherein a content of the hydrogenated polymer block (c) principally containing the conjugated diene monomer unit is 3% by mass or more and 20% by mass or less.
[10] A hydrogenated block copolymer composition, containing:
   1% by mass or more and 50% by mass or less of the hydrogenated block copolymer (I) according to any one of [1] to [9];
   5% by mass or more and 90% by mass or less of at least one olefine-based resin (II);
   1% by mass or more and 50% by mass or less of at least one thermoplastic resin (III); and
   5% by mass or more and 90% by mass or less of at least one softener (IV).
[11] The hydrogenated block copolymer composition according to [10],
   wherein the olefine-based resin (II) contains at least one polypropylene-based resin.
[12] A molded article of the hydrogenated block copolymer composition according to [10] or [11].
[13] The molded article according to [12], being a foam body.

### Advantageous Effects of Invention

According to the present invention, a hydrogenated block copolymer having high blocking resistance, and exhibiting excellent processability, heat resistance and wear resistance when formed into a resin composition with an olefin-based resin is obtained.

### Description of Embodiments

Now, an embodiment for practicing the present invention (hereinafter referred to as the "present embodiment") will be described in detail. It is noted that the present embodiment described below is merely illustrative for describing the present invention and is not intended to limit the present invention, and that the present invention can be variously modified and changed within the scope thereof.

### [Hydrogenated Block Copolymer]

The hydrogenated block copolymer of the present invention (hereinafter sometimes referred to as the hydrogenated block copolymer (I)) is a hydrogenated product of a block copolymer containing a vinyl aromatic monomer unit and a conjugated diene monomer unit, and satisfies the following conditions (1) to (4):
<Condition (1)>:
   The hydrogenated block copolymer contains at least one polymer block principally containing a vinyl aromatic monomer unit (a), and a content of the polymer block (a) principally containing the vinyl aromatic monomer unit is 10% by mass or more and 40% by mass or less.
<Condition (2)>:
   The hydrogenated block copolymer contains at least one hydrogenated copolymer block (b) containing a vinyl aromatic monomer unit and a conjugated diene monomer unit, and a content of the vinyl aromatic monomer unit in the hydrogenated copolymer block (b) is 30% by mass or more and 79% by mass or less.
<Condition (3)>:
   The hydrogenated block copolymer has a value of instantaneous hardness measured with a type A durometer in accordance with JIS K6253 of 60 or more, and a value of instantaneous hardness measured with a type D durometer of 65 or less.
<Condition (4)>:
   The hydrogenated block copolymer has an MFR value measured under conditions of a temperature of 230°C and a load of 2.16 kg in accordance with JIS K7210 of 10 or more.

It is herein noted that a substance in a state before being incorporated into a polymer is described as a "compound", and a substance in a state of being incorporated into a polymer is described as a "monomer unit".

### (Vinyl Aromatic Monomer Unit)

The hydrogenated block copolymer (I) of the present embodiment contains a vinyl aromatic monomer unit.

Examples of a vinyl aromatic compound forming the vinyl aromatic monomer unit include, but are not limited to, monomer units derived from styrene, α-methylstyrene, p-methylstyrene, divinyl benzene, 1,1-diphenyl ethylene, N,N-dimethyl-p-aminoethylstyrene, and N,N-diethyl-p-aminoethylstyrene.

In particular, from the viewpoint of balance between cost and mechanical strength of a resin composition containing the hydrogenated block copolymer, styrene is preferred.

One of these monomer units may be singly used, or two or more of these may be used together.

### (Conjugated Diene Monomer Unit)

The hydrogenated block copolymer (I) of the present embodiment contains the conjugated diene monomer unit.

The conjugated diene monomer unit refers to a monomer unit derived from a diolefin having a pair of conjugated double bonds.

Examples of such a diolefin include, but are not limited to, 1,3-butadiene, 2-methyl-1,3-butadiene (isoprene), 2,3-dimethyl-1,3-butadiene, 1,3-pentadiene, 2-methyl-1,3-pentadiene, and 1,3-hexadiene.

In particular, from the viewpoint of balance between good molding processability and mechanical strength, 1,3-butadiene and isoprene are preferred.

One of these may be singly used, or two or more of these may be used together.

### (Vinyl Bond Content in All Conjugated Diene Monomer Units)

In the hydrogenated block copolymer (I) of the present embodiment, a vinyl bond content in all conjugated diene monomer units is not especially limited, and is preferably 5% by mass or more. The vinyl bond content is more preferably 10% by mass or more, and further preferably 15% by mass or more.

Herein, the vinyl bond content refers to a total amount, in all conjugated dienes, of conjugated diene monomer units bonded via a 1,2-vinyl bond (conjugated diene incorporated into a polymer via a 1,2-bond) and a 3,4-vinyl bond (conjugated diene incorporated into a polymer via a 3,4-bond) (which is, however, a 1,2-vinyl bond content when 1,3-butadiene is used as the conjugated diene), and is a concept encompassing a state where the 1,2-vinyl bond or the 3,4-vinyl bond is hydrogenated ex post facto to become a single bond. Specifically, although "vinyl" is a name indicating a double bond state, the "vinyl bond content" herein encompasses the amount of single bonds resulting from hydrogenation of what is called vinyl bonds. When measurement is performed in production process of the hydrogenated block copolymer, a total amount of 1,2-vinyl bonds and 3,4-vinyl bonds in all conjugated dienes measured before hydrogenation process corresponds to the "vinyl bond content".

When the vinyl bond content in all conjugated diene monomer units of the hydrogenated block copolymer (I) is 5% by mass or more, it is possible to suppress precipitation of a hydrogenated conjugated diene block from a solution due to crystallization in hydrogenation process.

The vinyl bond content in all conjugated diene monomer units of the hydrogenated block copolymer (I) can be controlled to fall in the above-described numerical range by, for example, using a modifier such as a tertiary amine compound or an ether compound described below.

The vinyl bond content in all conjugated diene monomer units of the hydrogenated block copolymer (I) can be measured by nuclear magnetic resonance (NMR) using a block copolymer before hydrogenation as a sample, or with an infrared spectrophotometer described in Examples below. Alternatively, it may be calculated, in the measurement by the nuclear magnetic resonance (NMR) using the hydrogenated block copolymer as a sample, by counting a sum of vinyl structures not hydrogenated and structures having single bonds resulting from hydrogenation.

### (Content of All Vinyl Aromatic Compounds)

In the hydrogenated block copolymer (I) of the present embodiment, a content of all vinyl aromatic monomer units is preferably 50% by mass or more and 80% by mass or less, more preferably 55% by mass or more and 80% by mass or less, and further preferably 60% by mass or more and 80% by mass or less.

When the content of all vinyl aromatic monomer units is 50% by mass or more, the hydrogenated block copolymer (I) of the present embodiment tends to be good in oil resistance. When the oil resistance is good, the hydrogenated block copolymer may be used in a use that requires more severe oil resistance of vehicle materials and the like. For example, when it is used as a material, among vehicle interior materials and the like, of a molded article thinner than a general molded article, or of a more complicated/larger molded article, there is a tendency that deformation, appearance failure, and the like can be suppressed even in a longer term use.

Herein, the term "general molded article" is defined as a small molded article with a thickness of about 2 mm in a simple flat plate shape of about 150 mm square. It has been confirmed that a thinner molded article, or a more complicated/larger molded article than such a "general molded article" tends to be degraded in various properties such as oil resistance, wear resistance, scratch resistance, appearance, low-temperature property, sense of touch, and shape retention.

When the oil resistance of the hydrogenated block copolymer (I) is good, the upper limit of a compounding amount of the hydrogenated block copolymer (I) in a hydrogenated block copolymer composition of the present embodiment described below is increased, and thus freedom in the compounding tends to be improved.

In general, as the compounding amount of the hydrogenated block copolymer (I) in the hydrogenated block copolymer composition of the present embodiment described below is smaller, the oil resistance tends to be better, but as the compounding amount of the hydrogenated block copolymer (I) is larger, wear resistance and sense of touch tend to be better, and therefore, the upper limit of the compounding amount is preferably higher.

It is noted that the content of all vinyl aromatic monomer units in the hydrogenated block copolymer (I) of the present embodiment can be measured with a UV spectrophotometer using a block copolymer before hydrogenation or the hydrogenated block copolymer as a sample.

The content of all vinyl aromatic monomer units in the hydrogenated block copolymer (I) can be controlled to fall in the above-described numerical range by principally adjusting the amount of a vinyl aromatic compound to be added to a polymerization reactor, a reaction temperature and a reaction time.

Herein, the term "to principally contain" regarding the structure of a hydrogenated block copolymer means that the ratio in a prescribed block copolymer or a polymer block is 85% by mass or more, preferably 90% by mass or more, and more preferably 95% by mass or more.

It is noted that the content of the vinyl aromatic monomer unit in the hydrogenated copolymer block (b) is 30% by mass or more and 79% by mass or less, and hence the polymer block (a) and the hydrogenated copolymer block (b) can be definitely distinguished from each other.

### (Polymer Block (a) Principally Containing Vinyl Aromatic Monomer Unit)

The hydrogenated block copolymer (I) of the present embodiment contains at least one polymer block (a) principally containing a vinyl aromatic monomer unit. Thus, the pellet blocking can be prevented.

In the hydrogenated block copolymer (I) of the present invention, the content of the polymer block (a) is 10% by mass or more, preferably 15% by mass or more, more preferably 20% by mass or more, and further preferably 25% by mass or more.

When the content of the polymer block (a) principally containing a vinyl aromatic monomer unit is 10% by mass or more, blocking resistance of a pellet of the hydrogenated block copolymer (I) is good, and in addition, the hydrogenated block copolymer composition of the present embodiment exhibits good wear resistance and heat resistance.

When the content of the polymer block (a) is 15% by mass or more, better blocking resistance and wear resistance are exhibited, when the content is 20% by mass or more, further better blocking resistance and wear resistance are exhibited, and when the content is 25% by mass or more, still further better blocking resistance and wear resistance are exhibited.

When pellets of the hydrogenated block copolymer (I) of the present invention exhibit good blocking resistance, the blocking tends to be difficult to occur even under conditions during transportation of a longer time, a larger load, and more severe temperature environment (as in, for example, a region with a high outside temperature, or a region with a wide range of temperature), and it can be expected that the pellets can be easily weighed, blended or the like in molding the compound. Besides, since the amount of the anti-tack agent can be reduced, effects of avoiding device pollution, reducing environmental load, and suppressing unexpected degradation of physical properties, for example, suppressing degradation of transparency, mechanical strength, or the like.

When the hydrogenated block copolymer composition of the present embodiment exhibits good wear resistance, the composition can be used in a use as a vehicle material and the like that requires more severe wear resistance. For example, when it is used as a material, among vehicle interior materials and the like, of a thinner molded article, or a more complicated/larger molded article than a general molded article, and is used for a longer period of time, the appearance of the material can be expected to be retained comparably to the above-described general molded article. Besides, when the composition is used as a vehicle interior material, even if it is subjected to, at the time of a ride, friction with a larger load, or with a coarse fabric, such as a jeans fabric that is a fabric coarser than a cotton fabric of canequim #3, it can be expected that the appearance of the material can be retained for a long period of time.

When the hydrogenated block copolymer composition has good wear resistance, the compounding amount of the hydrogenated block copolymer (I) in the hydrogenated block copolymer composition of the present embodiment described below is reduced, and thus the freedom in the compounding tends to be improved.

In general, as the compounding amount of the hydrogenated block copolymer (I) in the hydrogenated block copolymer composition of the present embodiment described below is larger, the wear resistance tends to be better, but as the compounding amount of the hydrogenated block copolymer (I) is smaller, the oil resistance, the material cost and the like tend to be better, and therefore, the lower limit of the compounding amount is preferably lower.

Besides, in the hydrogenated block copolymer (I) of the present embodiment, the content of the polymer block (a) is 40% by mass or less, preferably 37% by mass or less, and more preferably 35% by mass or less.

When the content of the polymer block (a) principally containing the vinyl aromatic monomer unit is 40% by mass or less, the hydrogenated block copolymer composition of the present embodiment described below exhibits good heat resistance. When the content is 35% by mass or less, better heat resistance is exhibited.

The content of the polymer block (a) in the hydrogenated block copolymer (I) of the present embodiment can be measured by a method using a nuclear magnetic resonance apparatus (NMR) with the block copolymer before hydrogenation or the hydrogenated block copolymer used as a sample (a method described in Y. Tanaka, et al., RUBBER CHEMISTRY and TECHNOLOGY, 54, 685 (1981); hereinafter referred to as the "NMR method").

The content of the polymer block (a) in the hydrogenated block copolymer (I) can be controlled to fall in the above-described numerical range by principally adjusting the amount of a vinyl aromatic compound to be added to a polymerization reactor, a reaction temperature and a reaction time.

### (Hydrogenated Copolymer Block (b))

The hydrogenated block copolymer (I) of the present embodiment contains at least one hydrogenated copolymer block (b) containing a vinyl aromatic monomer unit and a conjugated diene monomer unit.

A content of the vinyl aromatic monomer unit in the hydrogenated copolymer block (b) is 30% by mass or more, preferably 40% by mass or more, and more preferably 45% by mass or more.

When the content of the vinyl aromatic monomer unit in the hydrogenated copolymer block (b) is 30% by mass or more, the hydrogenated block copolymer composition of the present embodiment exhibits good wear resistance. Besides, when the content is 45% by mass or more, higher wear resistance is exhibited, and the composition can be used in a use requiring more severe wear resistance, for example, a use for forming a thinner molded article among vehicle interior materials, or a use requiring appearance retention for a longer period of time even if it is subjected to, at the time of a ride, friction with a larger load, or with a coarse fabric, such as a jeans fabric that is a fabric coarser than a cotton fabric of canequim #3 when used as the vehicle interior material.

When the wear resistance of the hydrogenated block copolymer composition is good, the compounding amount of the hydrogenated block copolymer (I) in the hydrogenated block copolymer composition of the present embodiment described below is reduced, and thus the freedom in the compounding tends to be improved.

In general, as the compounding amount of the hydrogenated block copolymer (I) in the hydrogenated block copolymer composition described below is larger, the wear resistance tends to be better, but as the compounding amount of the hydrogenated block copolymer (I) is smaller, the oil resistance, the material cost and the like tend to be better, and therefore, the lower limit of the compounding amount is preferably lower.

The content of the vinyl aromatic monomer unit in the hydrogenated copolymer block (b) is 79% by mass or less, preferably 75% by mass or less, and more preferably 70% by mass or less.

When the content of the vinyl aromatic monomer unit in the hydrogenated copolymer block (b) is 79% by mass or less, the hydrogenated block copolymer composition of the present embodiment described below exhibits good heat resistance. When the content is 70% by mass or less, higher heat resistance is exhibited, and the composition can be used in a use requiring severe heat resistance, for example, a use for forming a thinner molded article among vehicle interior materials, or a use requiring resistance for realizing retention of sense of touch (leather-texture touch) and shape retention (resistance against deformation by heat) for a longer period of time even when used for a long period of time, or used at a higher temperature.

It is noted that the content of the vinyl aromatic monomer unit in the hydrogenated copolymer block (b) can be measured using a nuclear magnetic resonance apparatus (NMR) or the like.

The content of the vinyl aromatic monomer unit in the hydrogenated copolymer block (b) can be controlled to fall in the above-described numerical range by adjusting the amounts of a vinyl aromatic compound and a conjugated diene to be added to a polymerization reactor, a reaction temperature and the like.

### (Hydrogenated Polymer Block (c) principally containing Conjugated Diene Monomer Unit)

The hydrogenated block copolymer (I) of the present embodiment preferably contains at least one hydrogenated polymer block (c) principally containing a conjugated diene monomer unit (hereinafter sometimes referred to as the hydrogenated polymer block (c)).

In the hydrogenated block copolymer (I) of the present embodiment, the content of the hydrogenated polymer block (c) is not especially limited, and is preferably 3% by mass or more, more preferably 3% by mass or more and 40% by mass or less, further preferably 3% by mass or more and 30% by mass or less, and still further preferably 3% by mass or more and 20% by mass or less.

Since the hydrogenated block copolymer (I) of the present embodiment contains the hydrogenated polymer block (c), the hydrogenated block copolymer composition of the present embodiment described below exhibits good scratch resistance and low temperature property. In particular, when the content of the hydrogenated polymer block (c) is 3% by mass or more and 40% by mass or less, better scratch resistance and low temperature property are exhibited. Besides, the low temperature property tends to be improved in accordance with the content of the hydrogenated polymer block (c).

When the hydrogenated polymer block (c) is contained, there is a tendency that compatibility with a polyolefin-based resin (II) and a thermoplastic resin (III) is improved, that interface strength is improved, and that the wear resistance, the scratch resistance, and the low temperature property are improved in the hydrogenated block copolymer composition of the present embodiment.

When the scratch resistance is good, the composition can be used, as vehicle materials and the like, in a use requiring more severe scratch resistance. For example, when the composition is used to obtain a thinner molded article or a more complicated/larger molded article as a vehicle interior material or the like, and used for a longer period of time, the appearance of the material can be expected to be retained comparably to the above-described general molded article.

Besides, when the scratch resistance is good, the compounding amount of the hydrogenated block copolymer (I) in the hydrogenated block copolymer composition of the present embodiment described below is reduced, and thus the freedom in the compounding tends to be improved.

In general, as the compounding amount of the hydrogenated block copolymer (I) in the hydrogenated block copolymer composition of the present embodiment described below is larger, the scratch resistance tends to be better, but as the compounding amount of the hydrogenated block copolymer (I) is smaller, the oil resistance, the material cost and the like tend to be better, and therefore, the lower limit of the compounding amount is preferably lower.

When the low temperature property is good, for example, when elongation at break at -30°C is high, the composition can be used in a use requiring more severe low temperature property as, for example, a vehicle material. For example, when the composition is used to obtain a thinner molded article or a more complicated/larger molded article as a vehicle interior material or the like, a low temperature property over a standard value for vehicle interior tends to be exhibited comparably to the above-described general molded article.

The content of the hydrogenated polymer block (c) in the hydrogenated block copolymer (I) can be controlled to fall in the above-described numerical range by adjusting the amount of conjugated diene to be added to a polymerization reactor, a reaction temperature and the like.

### (MFR of Hydrogenated Block Copolymer (I))

The hydrogenated block copolymer (I) of the present embodiment has an MFR, measured under conditions of a temperature of 230°C and a load of 2.16 kg in accordance with JIS K7210, of 10 or more, preferably 15 or more, more preferably 30 or more, and further preferably 50 or more.

When the MFR of the hydrogenated block copolymer (I) of the present embodiment is 10 or more, the MFR of the hydrogenated block copolymer composition of the present embodiment described below is improved, and hence good processability is exhibited.

When the MFR is 15 or more, better processability is obtained, when the MFR is 30 or more, further better processability is obtained, and when the MFR is 50 or more, still further better processability is obtained. When the processability of the hydrogenated block copolymer composition of the present embodiment described below is good, a striped pattern such as a flow mark is not caused in, for example, injection molding, and a molded article having a good surface appearance is obtained. Besides, molding using a more complicated mold, or molding using a thin mold can be performed, and hence the weight of the resultant article can be reduced owing to a use of a resin as a material, or thickness reduction. Furthermore, higher processability tends to be advantageous to improvement of surface appearance, molding using a complicated mold, and thickness reduction.

In addition, as the processability is higher, the amount of a processing aid such as a softener (IV) in the hydrogenated block copolymer composition of the present embodiment can be reduced, and therefore, improvement of the freedom in compounding, improvement of mechanical strength and sense of touch of the material, reduction of environmental load, and the like can be expected.

The upper limit of the MFR of the hydrogenated block copolymer (I) of the present embodiment is not especially limited, and is preferably 500 or less, and more preferably 250 or less from the viewpoint of heat resistance retention.

The MFR of the hydrogenated block copolymer (I) of the present embodiment can be controlled to fall in the above-described numerical range by adjusting the weight average molecular weight of the hydrogenated block copolymer (I), the content of the polymer block (a), the content of the vinyl aromatic monomer unit in the hydrogenated copolymer block (b), the content of the hydrogenated polymer block (c), the vinyl bond content in the conjugated diene monomer unit of the hydrogenated block copolymer (I) before hydrogenation, and a hydrogenation rate of a double bond of the conjugated diene monomer unit of the hydrogenated block copolymer (I) .

For example, the MFR of the hydrogenated block copolymer (I) tends to be improved when the weight average molecular weight of the hydrogenated block copolymer (I) is reduced, the content of the polymer block (a) is reduced, the content of the vinyl aromatic monomer unit in the hydrogenated copolymer block (b) is increased, the content of the hydrogenated polymer block (c) in a terminal block is increased, the content of the hydrogenated polymer block (c) in an internal block is reduced, the vinyl bond content in the conjugated diene monomer unit is increased, or the hydrogenation rate of a double bond of the conjugated diene monomer unit is reduced.

In particular, the weight average molecular weight of the hydrogenated block copolymer (I) is in a linear relationship with a logarithm of the MFR. Therefore, in order to obtain the hydrogenated block copolymer (I) exhibiting the effects of the present invention, after adjusting the blocking resistance of pellets, the heat resistance of the hydrogenated block copolymer composition, the content of the polymer block (a) for exhibiting wear resistance, the content of the vinyl aromatic monomer unit in the hydrogenated copolymer block (b), and the hardness of the hydrogenated block copolymer (I), a weight average molecular weight for attaining a desired MFR may be determined based on the linear relationship between the weight average molecular weight of the hydrogenated block copolymer (I) and the logarithm of the MFR.

Specifically, for example, in a hydrogenated block copolymer (I)-1 in which the content of the polymer block (a) principally containing the vinyl aromatic monomer unit is 30% by mass, the content of the vinyl aromatic monomer unit in the hydrogenated copolymer block (b) is 59% by mass, the vinyl bond content in the conjugated diene monomer unit of the hydrogenated block copolymer (I) is 22% by mass, the weight average molecular weight is 88,000, the molecular weight distribution is 1.06, the hardness measured with a type D durometer is 43, and the MFR (230°C, 2.16 kg) is 53 (which structure is the same as that of Example 1 described below), the MFR (230°C, 2.16 kg) is reduced to 44 by changing the vinyl bond content in the conjugated diene monomer unit from 22% by mass to 12% by mass. In this case, in order to increase the MFR to 53, the weight average molecular weight may be reduced from 88,000 to 81,000. The weight average molecular weight for attaining an appropriate MFR can be obtained based on the linear relationship between the weight average molecular weight and the logarithm of the MFR by precedently measuring MFRs of hydrogenated block copolymers having different weight average molecular weights.

Besides, in the hydrogenated block copolymer (I)-1, when the content of the vinyl aromatic monomer unit in the hydrogenated copolymer block (b) is changed from 59% by mass to 30% by mass, the MFR (230°C, 2.16 kg) is reduced to 45. In this case, in order to increase the MFR to 53 that is the same as that of the hydrogenated block copolymer (I)-1, the weight average molecular weight may be reduced from 88,000 to 82,000. The weight average molecular weight for attaining an appropriate MFR can be obtained based on the linear relationship between the weight average molecular weight and the logarithm of the MFR by precedently measuring MFRs of hydrogenated block copolymers having different weight average molecular weights.

### (Hardness of Hydrogenated Block Copolymer (I))

The hydrogenated block copolymer (I) of the present embodiment has a value of the instantaneous hardness, measured with a type A durometer in accordance with JIS K6253, of 60 or more, preferably 70 or more, more preferably 80 or more, and further preferably 85 or more.

When the hydrogenated block copolymer (I) of the present embodiment has a value of the instantaneous hardness measured with a type A durometer in accordance with JIS K6253 of 60 or more, or a value measured with a type D durometer of 16 or more, pellets of the hydrogenated block copolymer of the present embodiment exhibit good blocking resistance. Besides, when the value of the instantaneous hardness measured with a type A durometer is 70 or more, or the value measured with a type D durometer is 22 or more, better blocking resistance is exhibited, when the value of the instantaneous hardness measured with a type A durometer is 80 or more, or the value measured with a type D durometer is 30 or more, further better blocking resistance is exhibited, and when the value of the instantaneous hardness measured with a type A durometer is 85 or more, or the value measured with a type D durometer is 34 or more, still further better blocking resistance is exhibited.

When the blocking resistance of pellets of the hydrogenated block copolymer is high, the blocking tends to be difficult to occur even under conditions during transportation of a longer time, a larger load, and more severe temperature environment as in, for example, a region with a high outside temperature, or a region with a wide range of temperature, and it can be expected that the pellets can be easily weighed, blended or the like in molding the compound. Besides, since the amount of the anti-tack agent to be added can be reduced, device pollution can be avoided, environmental load can be reduced, and unexpected degradation of physical properties, for example, degradation of transparency, mechanical strength, or the like, can be expected to be suppressed.

The hydrogenated block copolymer (I) of the present embodiment has a value of the instantaneous hardness, measured with a type D durometer in accordance with JIS K6253, of 65 or less, preferably 55 or less, and more preferably 45 or less.

When the value of the instantaneous hardness measured with a type D durometer in accordance with JIS K6253 of the hydrogenated block copolymer (I) of the present embodiment is 65 or less, good heat resistance is exhibited by the hydrogenated block copolymer composition of the present embodiment described below. When the value of the instantaneous hardness measured with a type D durometer is 55 or less, better heat resistance is exhibited, and when the value of the instantaneous hardness is 45 or less, further better heat resistance is exhibited.

When the heat resistance of the hydrogenated block copolymer composition is good, the composition can be used in a use, as a vehicle material or the like, requiring more severe heat resistance. For example, even when a thinner molded article or more complicated/larger molded article is obtained as a vehicle interior material or the like, retention of sense of touch (leather-texture touch) and shape retention (resistance against deformation by heat) can be expected comparably to the general molded article even when used for a long period of time. Besides, even when it is used in a region with a higher outside temperature, retention of sense of touch (leather-texture touch) and shape retention (resistance against deformation by heat) can be expected for a longer period of time.

The hardness of the hydrogenated block copolymer (I) can be controlled to fall in the above-described numerical range by adjusting the weight average molecular weight of the hydrogenated block copolymer (I), the content of the polymer block (a), the content of the vinyl aromatic monomer unit in the hydrogenated copolymer block (b), the content of the hydrogenated polymer block (c), the vinyl bond content in the conjugated diene monomer unit, and the hydrogenation rate of a double bond of the conjugated diene monomer unit.

Alternatively, the hardness may be controlled to fall in the above-described numerical range by adjusting a tan6 peak temperature (loss tangent) at -25°C to 60°C in a viscoelasticity measurement chart of the hydrogenated block copolymer (I), namely, by adjusting a glass transition temperature derived from the hydrogenated copolymer block (b), by performing a polymerization reaction under conditions described below using a prescribed modifier for adjusting the vinyl bond content of the hydrogenated copolymer block (b), and adjusting the content of the vinyl aromatic monomer unit in the hydrogenated copolymer block (b), and the copolymerizability between the vinyl aromatic compound and the conjugated diene.

For example, the hardness of the hydrogenated block copolymer (I) tends to be increased by increasing the content of the polymer block (a) in the hydrogenated block copolymer (I), increasing the content of the vinyl aromatic monomer unit in the hydrogenated copolymer block (b), reducing the content of the hydrogenated polymer block (c), reducing the hydrogenation rate of a double bond of the conjugated diene monomer unit, and increasing the tan6 peak temperature (°C) at -20°C to 60°C. Besides, in order to increase the tan6 peak temperature (°C) at - 20°C to 60°C, it is particularly effective to increase the content of the vinyl aromatic monomer unit in the hydrogenated copolymer block (b), and to increase the vinyl bond content in the hydrogenated copolymer block (b), and the tan6 peak temperature (°C) can be controlled also by adjusting the copolymerizability between the vinyl aromatic compound and the conjugated diene through adjustment of polymerization conditions described below.

In order to obtain the hydrogenated block copolymer (I) exhibiting desired effects of the present invention, after adjusting the blocking resistance of pellets, the heat resistance of the hydrogenated block copolymer composition, the content of the polymer block (a) in the hydrogenated block copolymer (I) for exhibiting wear resistance, the content of the vinyl aromatic monomer unit in the hydrogenated copolymer block (b), and the hardness of the hydrogenated block copolymer (I), a weight average molecular weight for attaining a desired MFR may be determined based on the linear relationship between the weight average molecular weight of the hydrogenated block copolymer (I) and the logarithm of the

### MFR.

For example, in order to increase the hardness with the content of the polymer block (a), the content of the vinyl aromatic monomer unit in the hydrogenated copolymer block (b), the content of the hydrogenated polymer block (c), and the hydrogenation rate of a double bond of the conjugated diene monomer unit fixed, the vinyl bond content of the hydrogenated copolymer block (b) may be increased for increasing the tan6 peak temperature (°C) at -20°C to 60°C.

Alternatively, in order to increase the hardness with the content of the vinyl aromatic monomer unit in the hydrogenated copolymer block (b), the content of the hydrogenated polymer block (c) in the hydrogenated block copolymer (I), the hydrogenation rate of a double bond of the conjugated diene monomer unit, and the tan6 peak temperature (°C) at -20°C to 60°C fixed, the content of the polymer block (a) may be increased.

Alternatively, in order to increase the hardness with the content of the polymer block (a), the content of the hydrogenated polymer block (c), the hydrogenation rate of a double bond of the conjugated diene monomer unit, and the tan6 peak temperature (°C) at -20°C to 60°C fixed, the vinyl bond content of the hydrogenated copolymer block (b) may be reduced with the content of the polymer block (b) increased and with the increase of the tan6 peak temperature (°C) at -20°C to 60°C suppressed.

Specifically, for example, in a hydrogenated block copolymer (I)-15 in which the content of the polymer block (a) principally containing the vinyl aromatic monomer unit is 26% by mass, the content of the vinyl aromatic monomer unit in the hydrogenated copolymer block (b) is 59% by mass, the vinyl bond content in the conjugated diene monomer unit is 26% by mass, the weight average molecular weight is 92,000, the molecular weight distribution is 1.06, the hardness measured with a type D durometer is 43 (corresponding to the hardness measured with a type A durometer of 92), and the MFR (230°C, 2.16 kg) is 51 (which structure is the same as that of Example 15 described below), the hardness measured with a type D durometer is reduced to 32 (corresponding to hardness measured with a type A durometer of 83) by changing the content of the polymer block (a) principally containing the vinyl aromatic monomer unit from 26% by mass to 210 by mass. In order to increase the hardness measured with a type D durometer to 43, the vinyl bond content of the hydrogenated copolymer block (b) may be increased to 32. When the vinyl bond content of the hydrogenated copolymer block (b) is increased, the tan6 peak temperature (°C) at -20°C to 60°C is increased from 22°C to 25°C, and thus the hardness is increased. At this point, the MFR of the hydrogenated block copolymer (I)-15 is increased from 51 to 63. In order to reduce the MFR from 63 to 51 that is the same as that of the hydrogenated block copolymer (I)-15, the weight average molecular weight may be increased from 92,000 to 97,000. The weight average molecular weight for attaining such an appropriate MFR (97,000) can be obtained based on the linear relationship between the weight average molecular weight and the logarithm of the MFR by precedently measuring MFRs of hydrogenated block copolymers having different weight average molecular weights.

Besides, in the hydrogenated block copolymer (I)-1 described above, when the content of the vinyl aromatic monomer unit in the hydrogenated copolymer block (b) is changed from 59% by mass to 47% by mass, the tan6 peak temperature (°C) at -20°C to 60°C is reduced from 22°C to -3°C, and the hardness measured with a type D durometer is reduced to 36 (corresponding to 86 measured with a type A durometer). In order to increase the hardness measured with a type D durometer to 41 that is equivalent to that of the (I)-1, the vinyl bond content of the hydrogenated copolymer block (b) may be increased to 42% by mass. When the vinyl bond content of the hydrogenated copolymer block (b) is increased, the tan6 peak temperature (°C) at -20°C to 60°C is increased from -3°C to 20°C, and the hardness is increased to be equivalent to that of the (I)-1. At this point, the MFR is increased from 53 to 56. In order to reduce the MFR from 56 to 53 that is the same as that of the I-1, the weight average molecular weight may be increased from 88,000 to 91,000. The weight average molecular weight for attaining such an appropriate MFR (91,000) can be obtained based on the linear relationship between the weight average molecular weight and the logarithm of the MFR by precedently measuring MFRs of hydrogenated block copolymers having different weight average molecular weights.

### (Weight Average Molecular Weight of Hydrogenated Block Copolymer (I))

The weight average molecular weight (Mw) of the hydrogenated block copolymer (I) of the present embodiment is not especially limited, and from the viewpoints of obtaining extrusion moldability in producing pellets of the hydrogenated block copolymer of the present embodiment, and good mechanical strength of the hydrogenated block copolymer composition of the present embodiment described below, is preferably 10,000 or more, more preferably 15,000 or more, and further preferably 20,000 or more. When the weight average molecular weight (Mw) is 10,000 or more, the hydrogenated block copolymer composition of the present embodiment described below tends to exhibit good mechanical strength.

The upper limit is preferably 300,000 or less, more preferably 250,000 or less, and further preferably 200,000 or less. When the weight average molecular weight (Mw) is 300,000 or less, the hydrogenated block copolymer (I) is easily melted at the time of producing (at the time of extrusion molding) pellets of the hydrogenated block copolymer, and hence strands are stabilized, which tends to improve extrusion moldability.

It is noted that the weight average molecular weight of the hydrogenated block copolymer (I) of the present embodiment is obtained by performing gel permeation chromatography (GPC) measurement, and using a calibration curve obtained through measurement of commercially available standard polystyrene (created by using a peak molecular weight of the standard polystyrene).

### (Molecular Weight Distribution (Mw/Mn) of Hydrogenated Block Copolymer (I))

A molecular weight distribution (Mw/Mn) of the hydrogenated block copolymer (I) of the present embodiment is not especially limited, and is 10 or less, preferably 8 or less, and more preferably 1.10 or less. The lower limit of the Mw/Mn is preferably 1 or more, and more preferably 1.01 or more.

The weight average molecular weight (Mw) and a number average molecular weight (Mn) of the hydrogenated block copolymer (I) are obtained by performing gel permeation chromatography (GPC) measurement, and obtaining a peak molecular weight in the resultant chromatogram using a calibration curve obtained through measurement of commercially available standard polystyrene (created by using a peak molecular weight of the standard polystyrene). The molecular weight distribution (Mw/Mn) of the hydrogenated block copolymer (I) is obtained based on a ratio between the weight average molecular weight (Mw) and the number average molecular weight (Mn).

### (Hydrogenation Rate of Double Bond of Conjugated Diene Monomer Unit in Hydrogenated Block Copolymer (I))

The hydrogenation rate of a double bond of the conjugated diene monomer unit in the hydrogenated block copolymer (I) of the present embodiment is preferably 20% or more, more preferably 50% or more, further preferably 85% or more, and still further preferably 92% or more from the viewpoint of obtaining good weather resistance and low temperature property in the hydrogenated block copolymer composition of the present embodiment described below.

Since high weather resistance is required particularly in a use as a vehicle interior skin material, the hydrogenation rate tends to be preferably 92% or more.

The hydrogenation rate of a double bond of the conjugated diene monomer unit in the hydrogenated block copolymer (I) can be controlled to fall in the above-described numerical range by adjusting a hydrogenation amount. The hydrogenation rate of the hydrogenated block copolymer (I) can be measured with a nuclear magnetic resonance apparatus (NMR) or the like.

### (Hydrogenation Rate of Aromatic Double Bond of Vinyl Aromatic Monomer Unit in Hydrogenated Block Copolymer (I))

The hydrogenation rate of an aromatic double bond of the vinyl aromatic monomer unit in the hydrogenated block copolymer (I) of the present embodiment is not especially limited, and is preferably 50% or less, more preferably 30% or less, and further preferably 10% or less.

The hydrogenation rate of an aromatic double bond of the vinyl aromatic monomer unit in the hydrogenated block copolymer (I) can be measured with a nuclear magnetic resonance apparatus (NMR) or the like.

### (Vinyl Bond Content of Hydrogenated Copolymer Block (b))

A vinyl bond content in a conjugated diene portion of a copolymer block obtained before hydrogenation of the hydrogenated copolymer block (b) can be controlled by, for example, using a modifier described later, such as a tertiary amine compound or an ether compound.

When 1,3-butadiene is used as the conjugated diene, from the viewpoint of obtaining a good low temperature property in the hydrogenated block copolymer composition of the present embodiment described below, a 1,2-vinyl bond content of the conjugated diene portion in the copolymer block obtained before hydrogenation of the hydrogenated copolymer block (b) is preferably 20% by mass or more, more preferably 30% by mass or more, further preferably 30% by mass or more and 95% by mass or less, and still further preferably 30% by mass or more and 90% by mass or less. From the viewpoint of controlling the hardness and the MFR, the content is preferably 5% by mass or more and 95% by mass or less, more preferably 10% by mass or more and 90% by mass or less, and further preferably 10% by mass or more and 85% by mass or less.

When isoprene is used as the conjugated diene, or when 1,3-butadiene and isoprene are used together, a total content of 1,2-vinyl bond and 3,4-vinyl bond is preferably 3% by mass or more and 75% by mass or less, and more preferably 5% by mass or more and 60% by mass or less.

It is noted that the total content of 1,2-vinyl bond and 3,4-vinyl bond (a 1,2-vinyl bond content when 1,3-butadiene is used as the conjugated diene, however) is designated as the vinyl bond content in the present embodiment.

The vinyl bond content can be measured through measurement using an infrared spectrophotometer using a copolymer obtained before hydrogenation as a sample (for example, by a Hampton method).

### (Vinyl Bond Content in Hydrogenated Copolymer Block (c))

A vinyl bond content in a conjugated diene portion of a copolymer block obtained before hydrogenation of the hydrogenated copolymer block (c) can be controlled by, for example, using a modifier described later, such as a tertiary amine compound or an ether compound.

From the viewpoint of controlling the hardness and the MFR of the hydrogenated block copolymer (I) of the present embodiment, the vinyl bond content is preferably 5% by mass or more and 95% by mass or less, more preferably 10% by mass or more and 90% by mass or less, and further preferably 10% by mass or more and 85% by mass or less.

When 1,3-butadiene is used as the conjugated diene, from the viewpoint of obtaining a good low temperature property in the hydrogenated block copolymer composition of the present embodiment described below, a 1,2-vinyl bond content of the conjugated diene portion in the copolymer block obtained before hydrogenation of the hydrogenated copolymer block (c) is preferably 40% by mass or more, more preferably 50% by mass or more, and further preferably 60% by mass or more. The upper limit is preferably 95% by mass or less, and more preferably 90% by mass or less.

When isoprene is used as the conjugated diene, or when 1,3-butadiene and isoprene are used together, a total content of 1,2-vinyl bond and 3,4-vinyl bond is preferably 3% by mass or more, and more preferably 5% by mass or more. The upper limit is preferably 75% by mass or less, and more preferably 60% by mass or less.

It is noted that the total content of 1,2-vinyl bond and 3,4-vinyl bond (a 1,2-vinyl bond content when 1,3-butadiene is used as the conjugated diene, however) is designated as the vinyl bond content in the present embodiment.

The vinyl bond content can be measured through measurement using an infrared spectrophotometer using a copolymer obtained before hydrogenation as a sample (for example, by a Hampton method).

### (Crystallization Peak of Hydrogenated Block Copolymer (I))

The hydrogenated block copolymer (I) of the present embodiment is preferably a hydrogenated product that does not substantially have a crystallization peak derived from the hydrogenated copolymer block (b) in a range of - 25°C to 80°C in a differential scanning calorimetry (DSC) chart.

Here, the term "does not substantially have a crystallization peak derived from the hydrogenated copolymer block (b) in a range of -25°C to 80°C" means the following. In this temperature range, a peak derived from crystallization of a portion of the hydrogenated polymer block (b) does not appear, or even when a peak derived from the crystallization is observed, a crystallization peak calorific value resulting from the crystallization is less than 3 J/g, preferably less than 2 J/g, more preferably less than 1 J/g, and still more preferably none.

When the hydrogenated block copolymer (I) of the present embodiment does not substantially have a crystallization peak derived from the hydrogenated copolymer block (b) in the range of -25°C to 80°C as described above, good flexibility can be obtained, and the hydrogenated block copolymer composition of the present embodiment described later can be suitably softened.

In order to obtain the hydrogenated block copolymer (I) that does not substantially have a crystallization peak derived from the hydrogenated copolymer block (b) in the range of -25°C to 80°C, a block copolymer obtained by a polymerization reaction performed under conditions described later using a prescribed modifier for adjusting the vinyl bond content and adjusting copolymerizability between the vinyl aromatic compound and the conjugated diene may be subjected to a hydrogenation reaction.

### (tanδ (loss tangent) Peak Temperature in Viscoelasticity Measurement Chart of Hydrogenated Block Copolymer (I))

The hydrogenated block copolymer (I) of the present embodiment preferably has, in a viscoelasticity measurement chart, at least one tanδ (loss tangent) peak at -25°C or more and 60°C or less. At least one peak is present more preferably at -15°C or more and 50°C or less, further preferably at -5°C or more and 40°C or less, and still more preferably at 0°C or more and 30°C or less.

This peak of tan6 is a peak derived from the hydrogenated copolymer block (b) in the hydrogenated block copolymer (I). The presence of at least one peak in a range of -25°C or more and 60°C or less is significant for retaining good sense of touch of the hydrogenated block copolymer composition of the present embodiment described later.

As described above, the hydrogenated copolymer block (b) is obtained by hydrogenating a copolymer block containing a conjugated diene monomer unit and a vinyl aromatic monomer unit.

In order that at least one tanδ (loss tangent) peak is present in the range of -25°C or more and 60°C or less in the hydrogenated block copolymer (I) of the present embodiment, it is effective to control a ratio (mass ratio) of the conjugated diene monomer unit/the vinyl aromatic monomer unit, and the ratio (mass ratio) of the conjugated diene monomer unit/the vinyl aromatic monomer unit is preferably 79/21 to 16/84, more preferably 75/35 to 18/82, and further preferably 70/30 to 25/75.

In order that at least one tanδ (loss tangent) peak is present in the range of 0°C or more and 30°C or less, it is effective to control a ratio (mass ratio) of the conjugated diene monomer unit/the vinyl aromatic monomer unit, and the ratio (mass ratio) of the conjugated diene monomer unit/the vinyl aromatic monomer unit is preferably 65/35 to 16/84, more preferably 60/40 to 25/75, and further preferably 55/45 to 30/70.

In order to obtain a hydrogenated block copolymer (I) having at least one tanδ (loss tangent) peak present in the range of -25°C or more and 60°C or less, a block copolymer, which is obtained by performing a polymerization reaction under conditions described below using a prescribed modifier for adjusting the vinyl bond content of the hydrogenated copolymer block (b), and adjusting the content of the vinyl aromatic monomer unit in the hydrogenated copolymer block (b), and the copolymerizability between the vinyl aromatic compound and the conjugated diene, may be hydrogenated.

It is noted that the tanδ of the hydrogenated block copolymer (I) can be measured using a viscoelasticity measuring device (ARES, manufactured by TA Instruments) under conditions of a strain of 0.5%, a frequency of 1 Hz and a temperature increasing rate of 3°C/min. Specifically, a method described in an example below will be employed for the measurement.

### (Structure of Hydrogenated Block Copolymer (I))

The structure of the hydrogenated block copolymer (I) of the present embodiment is not especially limited, and examples include structures represented by the following general formulas:
c-(b-a)ₙ, c-(a-b)ₙ, c-(a-b-a)ₙ, c-(b-a-b)ₙ, c-(b-c-a)ₙ, a-(c-b-c-a)ₙ, a-c-(b-a)ₙ, a-c-(a-b)ₙ, a-c-(b-a)ₙ-b, c-a-(b-a)ₙ-c, a-c-(b-a)ₙ-c, a-b-(c-a)ₙ-b, a-c-(b-c)ₙ-a-c, c-(a-b-c)ₙ-a-c, a-(c-b)ₙ-c-a, c-(a-c)ₙ-b-c-a-c, [(a-b-c)ₙ]ₘ-X, [a-(b-c)ₙ]ₘ-X, [a-b)ₙ-c]ₘ-X, [(a-b-a)ₙ-c]ₘ-X, [(b-a-b)ₙ-c]ₘ-X, [(c-b-a)ₙ]ₘ-X, [c-(b-a)ₙ]ₘ-X, [c-(a-b-a)ₙ]ₘ-X, and [c-(b-a-b)ₙ]ₘ-X.

In these general formulas, a represents the polymer block (a) principally containing a vinyl aromatic monomer unit, b represents the hydrogenated copolymer block (b) containing a vinyl aromatic monomer unit and a conjugated diene monomer unit, and c represents the hydrogenated polymer block (c) principally containing a conjugated diene monomer unit.

Also in these general formulas, n represents an integer of 1 or more, and is preferably an integer of 1 to 5; m represents an integer of 2 or more, and is preferably an integer of 2 to 11; and X represents a residue of a coupling agent or a residue of a multifunctional initiator.

### (Other Examples of Structure of Hydrogenated Block Copolymer (I))

The hydrogenated block copolymer (I) of the present embodiment may be a modified block copolymer in which atomic groups each having a prescribed functional group are bonded to one another. Since the influence of the presence of a functional group on the hardness and/or MFR of the hydrogenated block copolymer (I) is small, whether or not modification is cause, which type of a functional group is used, and the like may be appropriately set in accordance with structures and the like of resins to be mixed.

When the hydrogenated block copolymer (I) is a modified block copolymer, it may be a secondary modified block copolymer. Herein, "secondary modification" is a name characterized by a production method, and a first process of bonding a functional group to a block copolymer is referred to as primary modification, and a process of reacting the functional group with another compound is referred to as secondary modification. For example, in a typical production method, a secondary modified product is produced by reacting, with another compound (such as maleic acid) in an extruder, a primary modified product obtained by a reaction of a denaturant (such as amine) with a polymerization completion end.

### [Production Method for Hydrogenated Block Copolymer (I)]

A block copolymer corresponding to a state obtained before the hydrogenation of the hydrogenated block copolymer (I) of the present embodiment is obtained, for example, by living anionic polymerization of a vinyl aromatic compound and a conjugated diene compound performed in a hydrocarbon solvent by using a polymerization initiator such as an organic alkali metal compound.

### (Hydrocarbon Solvent)

Examples of the hydrocarbon solvent include, but are not limited to, aliphatic hydrocarbons such as n-butane, isobutane, n-pentane, n-hexane, n-heptane and n-octane; alicyclic hydrocarbons such as cyclohexane, cycloheptane and methylcycloheptane; and aromatic hydrocarbons such as benzene, toluene, xylene and ethylbenzene.

### (Polymerization Initiator)

The polymerization initiator is not especially limited, and examples include organic alkali metal compounds such as an aliphatic hydrocarbon alkali metal compound, an aromatic hydrocarbon alkali metal compound and an organic amino alkali metal compound, which are known to have anionic polymerization activity on a vinyl aromatic compound and a conjugated diene.

Preferable examples of the organic alkali metal compounds include, but are not limited to, aliphatic and aromatic hydrocarbon lithium compounds having 1 to 20 carbon atoms, and a compound containing one lithium in one molecule, and a dilithium compound, a trilithium compound and a tetralithium compound each containing a plurality of lithiums in one molecule can be applied.

Specific examples include n-propyllithium, n-butyllithium, sec-butyllithium, tert-butyllithium, n-pentyllithium, n-hexyllithium, benzyllithium, phenyllithium, trityllithium, a reaction product of diisopropylbenzene and sec-butyllithium, and a reaction product of divinylbenzene, sec-butyllithium and a small amount of 1,3-butadiene.

In addition, organic alkali metal compounds disclosed in, for example, US Patent No. 5,708,092, British Patent No. 2,241,239, and US Patent No. 5,527,753 can be applied.

### (Modifier)

When a vinyl aromatic compound and a conjugated diene are copolymerized by using an organic alkali metal compound as a polymerization initiator, a content of vinyl bonds (such as 1,2-bond or 3,4-bond) derived from the conjugated diene incorporated into a resultant polymer, and random copolymerizability between the vinyl aromatic compound and the conjugated diene can be adjusted by using a prescribed modifier.

Examples of such a modifier include, but are not limited to, a tertiary amine compound, an ether compound, and a metal alcoholate compound.

One of these modifiers may be singly used, or two or more of these may be used in combination.

An example of the tertiary amine compound includes, but is not limited to, a compound represented by a general formula R1R2R3N (wherein R1, R2 and R3 represent a hydrocarbon group having 1 to 20 carbon atoms, or a hydrocarbon group having a tertiary amino group).

Specific examples include trimethylamine, triethylamine, tributylamine, N,N-dimethylaniline, N-ethylpiperidine, N-methylpyrrolidine, N,N,N',N'-tetramethylethylenediamine, N,N,N',N'-tetraethylethylenediamine, 1,2-dipiperidinoethane, trimethylaminoethylpiperazine, N,N,N',N",N"-pentamethylethylenetriamine, and N,N'-dioctyl-p-phenylenediamine.

Examples of the ether compound include, but are not limited to, a linear ether compound and a cyclic ether compound.

Examples of the linear ether compound include, but are not limited to, dialkyl ether compounds of ethylene glycol, such as dimethyl ether, diethyl ether, diphenyl ether, ethylene glycol dimethyl ether, ethylene glycol diethyl ether, and ethylene glycol dibutyl ether; and dialkyl ether compounds of diethylene glycol, such as diethylene glycol dimethyl ether, diethylene glycol diethyl ether, and diethylene glycol dibutyl ether.

Examples of the cyclic ether compound include, but are not limited to, alkyl ethers such as tetrahydrofuran, dioxane, 2,5-dimethyloxolane, 2,2,5,5-tetramethyloxolane, 2,2-bis(2-oxolanyl)propane, and furfuryl alcohol.

Examples of the metal alcoholate compound include, but are not limited to, sodium-t-pentoxide, sodium-t-butoxide, potassium-t-pentoxide, and potassium-t-butoxide.

### (Polymerization Method)

As a method for polymerizing a vinyl aromatic compound and a conjugated diene by using an organic alkali metal compound as a polymerization initiator, a conventionally known method can be applied.

For example, the polymerization method may be, but is not limited to, any one of batch polymerization, continuous polymerization and a combination of these methods. In particular, for obtaining a copolymer excellent in heat resistance, batch polymerization is suitably employed.

A polymerization temperature is preferably 0°C to 180°C, and more preferably 30°C to 150°C. A polymerization time is varied depending on conditions, and is usually 48 hours or less, and preferably 0.1 to 10 hours.

As an atmosphere of a polymerization system, an inert gas atmosphere such as nitrogen gas is preferred.

A polymerization pressure is not especially limited as long as it is set within a pressure range where monomers and a solvent can be retained in a liquid phase in the above-described temperature range.

Attention is preferably paid so that an impurity inactivating a catalyst and a living polymer, such as water, oxygen and carbon dioxide, cannot enter the polymerization system.

In completing the polymerization process, a coupling reaction may be performed with a necessary amount of a bi- or higher functional coupling agent added thereto.

As a bifunctional coupling agent, any of known agents can be used, and examples include, but are not limited to, alkoxysilane compounds such as trimethoxysilane, triethoxysilane, tetramethoxysilane, tetraethoxysilane, dimethyldimethoxysilane, diethyldimethoxysilane, dichlorodimethoxysilane, dichlorodiethoxysilane, trichloromethoxysilane and trichloroethoxysilane; dihalogen compounds such as dichloroethane, dibromoethane, dimethyldichlorosilane and dimethyldibromosilane; and acid esters such as methyl benzoate, ethyl benzoate, phenyl benzoate, and phthalic acid esters.

A tri- or higher functional coupling agent is not especially limited, and any of conventionally known agents can be used, and examples include tri- or higher valent polyalcohols, polyvalent epoxy compounds such as epoxidized soybean oil, diglycidyl bisphenol A, and 1,3-bis(N-N'-diglycidylaminomethyl)cyclohexane; a silicon halide compound represented by a general formula R₄-nSiXₙ (wherein R represents a hydrocarbon group having 1 to 20 carbon atoms, X represents a halogen, and n represents an integer of 3 to 4), such as methyl silyl trichloride, t-butyl silyl trichloride, silicon tetrachloride, and a bromide of any of these; and a tin halide compound represented by a general formula R₄-nSnXₙ (wherein R represents a hydrocarbon group having 1 to 20 carbon atoms, X represents a halogen, and n represents an integer of 3 to 4), such as methyl tin trichloride, t-butyl tin trichloride, and tin tetrachloride. Alternatively, dimethyl carbonate, diethyl carbonate or the like may be used.

### (Modification Process)

As described above, the hydrogenated block copolymer (I) of the present embodiment may be a modified block copolymer in which atomic groups each having a functional group are bonded to one another. The atomic groups having a functional group are bonded preferably in process preceding hydrogenation process described later.

An example of the "atomic group having a functional group" includes, but is not limited to, an atomic group having at least one functional group selected from the group consisting of a hydroxyl group, a carboxyl group, a carbonyl group, a thiocarbonyl group, an acid halide group, an acid anhydride group, a carboxylic acid group, a thiocarboxylic acid group, an aldehyde group, a thioaldehyde group, a carboxylic ester group, an amide group, a sulfonic acid group, a sulfonic ester group, a phosphoric acid group, a phosphoric ester group, an amino group, an imino group, a nitrile group, a pyridyl group, a quinoline group, an epoxy group, a thioepoxy group, a sulfide group, an isocyanate group, an isothiocyanate group, a silicon halide group, a silanol group, an alkoxysilicone group, a tin halide group, a boronic acid group, a boron-containing group, a boronate group, an alkoxytin group, and a phenyltin group. In particular, an atomic group having at least one functional group selected from the group consisting of a hydroxyl group, an epoxy group, an amino group, a silanol group, and an alkoxysilane group is preferred.

The "atomic group having a functional group" can be bonded with a denaturant.

Examples of the denaturant include, but are not limited to, tetraglycidyl methaxylene diamine, tetraglycidyl-1,3-bisaminomethylcyclohexane, ε-caprolactone, δ-valerolactone, 4-methoxybenzophenone, γ-glycidoxyethyltrimethoxysilane, γ-glycidoxypropyltrimethoxysilane, γ-glycidoxypropyldimethylphenoxysilane, bis(y-glycidoxypropyl)methylpropoxysilane, 1,3-dimethyl-2-imidazolidine, 1,3-diethyl-2-imidazolidinone, N,N'-dimethylpropyleneurea, and N-methylpyrrolidone.

Although not especially limited, the modified block copolymer can be obtained, for example, by anionic living polymerization for performing polymerization using a polymerization initiator having a functional group or an unsaturated monomer having a functional group, for forming a functional group at a living end, or for performing an addition reaction with a denaturant having a functional group.

As another method for obtaining the modified block copolymer, a method in which a block copolymer is reacted (metalation reaction) with an organic alkali metal compound such as an organic lithium compound, and the thus obtained block polymer to which the organic alkali metal has been added is addition reacted with a denaturant having a functional group to obtain the modified block copolymer can be employed.

In employing the latter method, however, the metalation reaction can be performed after obtaining the hydrogenated block copolymer (I) and then the resultant can be reacted with a denaturant to produce a modified hydrogenated block copolymer.

A temperature for performing a modification reaction is preferably 0°C to 150°C, and more preferably 20°C to 120°C. A time necessary for the modification reaction is varied depending on the other conditions, and is preferably 24 hours or less, and more preferably 0.1 to 10 hours.

Depending on the type of a denaturant used, an amino group or the like has been sometimes generally changed into an organic metal salt when the denaturant is reacted, and in such a case, the organic metal salt can be converted into an amino group or the like through a treatment with water or a compound having active hydrogen such as alcohol. It is noted that such a modified block copolymer may partially contain a non-modified block copolymer.

The modified block copolymer may be a secondary modified block copolymer. A secondary modified block copolymer can be obtained by reacting a modified block copolymer with a secondary denaturant reactive with a functional group of the modified block copolymer.

The secondary denaturant is not especially limited, and an example includes a denaturant having a functional group selected from the group consisting of a carboxyl group, an acid anhydride group, an isocyanate group, an epoxy group, a silanol group, and an alkoxysilane group, and the secondary denaturant has at least two functional groups selected from these functional groups.

When the functional group is an acid anhydride group, however, the secondary denaturant may have merely one acid anhydride group.

When the modified block copolymer is reacted with the secondary denaturant as described above, the amount of the secondary denaturant used based on 1 equivalent of a functional group bonded to the modified block copolymer is preferably 0.3 moles to 10 moles, more preferably 0.4 moles to 5 moles, and further preferably 0.5 moles to 4 moles.

A method for reacting the modified block copolymer with the secondary denaturant is not especially limited, and any of known methods can be applied. Examples of the method include a melt kneading method described later, and a method in which respective components are dissolved or dispersed in a solvent or the like to be mixed for the reaction. It is noted that such secondary modification is performed preferably after the hydrogenation process.

Preferable examples of the secondary denaturant include, but are not limited to, maleic anhydride, pyromellitic anhydride, 1,2,4,5-benzenetetracarboxylic dianhydride, toluylene diisocyanate, tetraglycidyl-1,3-bisaminomethylcyclohexane, and bis-(3-triethoxysilylpropyl)-tetrasulfane.

The hydrogenated block copolymer (I) of the present embodiment can be a modified block copolymer graft modified with α,β-unsaturated carboxylic acid or a derivative thereof, such as an anhydride, an esterified product, an amidated product, or an imidated product thereof.

Examples of the α,β-unsaturated carboxylic acid or a derivative thereof include, but are not limited to, maleic anhydride, maleic anhydride imide, acrylic acid or an ester thereof, methacrylic acid or an ester thereof, and endo-cis-bicyclo[2,2,1]-5-heptene-2,3-dicarboxylic acid or an anhydride thereof.

The amount of the α,β-unsaturated carboxylic acid or a derivative thereof to be added is, with respect to 100 parts by mass of the hydrogenated block copolymer (I), preferably 0.01 to 20 parts by mass, and more preferably 0.1 to 10 parts by mass.

A reaction temperature in the graft modification is preferably 100°C to 300°C, and more preferably 120°C to 280°C.

A method for the graft modification is not especially limited, and for example, a method described in Japanese Patent Laid-Open No. 62-79211 can be applied.

### (Hydrogenation Reaction Process)

The hydrogenated block copolymer (I) of the present embodiment can be obtained by subjecting the above-described non-hydrogenated non-modified or modified block copolymer to a hydrogenation reaction using a prescribed hydrogenation catalyst.

Examples of the hydrogenation catalyst include, but are not limited to, known catalysts of (1) a supported heterogenous hydrogenation catalyst in which a metal such as Ni, Pt, Pd, or Ru is supported on carbon, silica, alumina, diatomaceous earth or the like, (2) what is called a Ziegler hydrogenation catalyst using an organic acid salt of Ni, Co, Fe, Cr or the like or a transition metal salt such as an acetylacetone salt, and a reducing agent such as organic aluminum, and (3) a homogenous hydrogenation catalyst such as what is called an organic metal complex of an organic metal compound or the like of Ti, Ru, Rh, Zr or the like.

Alternatively, as the hydrogenation catalyst, hydrogenation catalysts not limited to but such as those described in Japanese Patent Publication Nos. 42-8704, 43-6636, 63-4841, 1-37970, 1-53851 and 2-9041 can be used.

Suitable examples of the hydrogenation catalyst include a titanocene compound, a reducing organometallic compound, and a mixture of these.

The titanocene compound is not especially limited, and for example, a compound described in Japanese Patent Laid-Open Publication No. 8-109219 can be used. A specific example includes a compound having at least one ligand having a (substituted) cyclopentadienyl skeleton, an indenyl skeleton or a fluorenyl skeleton, such as bis-cyclopentadienyl titanium dichloride or mono-pentamethylcyclopentadienyl titanium trichloride.

Examples of the reducing organometallic compound include, but are not limited to, an organic alkali metal compound such as organic lithium, an organic magnesium compound, an organic aluminum compound, an organic boron compound, and an organic zinc compound.

The hydrogenation reaction will now be described.

A reaction temperature is generally preferably a temperature range of 0°C to 200°C, and more preferably a temperature range of 30°C to 150°C.

A pressure of hydrogen used in the hydrogenation reaction is preferably 0.1 MPa to 15 MPa, more preferably 0.2 MPa to 10 MPa, and further preferably 0.3 MPa to 5 MPa.

A hydrogenation reaction time is usually preferably 3 minutes to 10 hours, and more preferably 10 minutes to 5 hours.

The hydrogenation reaction may be performed by any of batch process, continuous process, and a combination of these.

It is preferable that a catalyst residue is removed, if necessary, from a solution of a hydrogenated block copolymer resulting from the hydrogenation reaction, and that the hydrogenated block copolymer is separated from the solution.

Examples of a separation method include, but are not limited to, a method in which a polar solvent working as a poor solvent for a hydrogenated modified copolymer, such as acetone or alcohol, is added to a reaction solution after the hydrogenation to precipitate and collect the polymer; a method in which the reaction solution is put in hot water under stirring, and the solvent is removed by steam stripping to collect the polymer; and a method in which the polymer solution is directly heated to remove the solvent.

It is noted that a stabilizer, such as various phenol-based stabilizers, phosphorus-based stabilizers, sulfur-based stabilizers and amine-based stabilizer, may be added to the hydrogenated block copolymer (I) of the present embodiment.

### [Hydrogenated Block Copolymer Composition]

A hydrogenated block copolymer composition of the present embodiment contains 1% by mass or more and 50% by mass or less of the hydrogenated block copolymer (I) described above; 5% by mass or more and 90% by mass or less of at least one olefin-based resin (II); 1% by mass or more and 50% by mass or less of at least one thermoplastic resin (III); and 5% by mass or more and 90% by mass or less of at least one softener (IV).

### ((II) Olefin-based Resin)

The olefin-based resin (II) contained in the hydrogenated block copolymer composition of the present embodiment will now be described.

Examples of the olefin-based resin (II) include, but are not limited to, homopolymers of α-olefins such as polyethylene (PE), polypropylene (PP), 1-butene, 1-pentene, 1-hexene, 3-methyl-1-butene, 4-methyl-1-pentene, and 1-octene. Other examples include a random copolymer or a block copolymer containing a combination of olefins selected from the group consisting of ethylene, propylene, butene, pentene, hexene and octene.

Specific examples include ethylene and/or propylene-α-olefin copolymers such as an ethylene-propylene copolymer, an ethylene-1-butene copolymer, an ethylene-3-methyl-1-butene copolymer, an ethylene-4-methyl-1-pentene copolymer, an ethylene-1-hexene copolymer, an ethylene-1-octene copolymer, an ethylene-1-decene copolymer, a propylene-1-butene copolymer, a propylene-1-hexene copolymer, a propylene-1-octene copolymer, a propylene-4-methyl-1-pentene copolymer, an ethylene-propylene-1-butene copolymer, a propylene-1-hexene-ethylene copolymer, and a propylene-1-octene-ethylene copolymer.

A copolymer of ethylene and/or propylene encompasses a copolymer with another unsaturated monomer excluding the α-olefin.

Examples of the copolymer with another unsaturated monomer include, but are not limited to, copolymers of ethylene and/or propylene with unsaturated organic acids or derivatives thereof, such as acrylic acid, methacrylic acid, maleic acid, itaconic acid, methyl acrylate, methyl methacrylate, maleic anhydride, aryl maleimide, and alkyl maleimide; copolymers of ethylene and/or propylene with vinyl esters such as vinyl acetate; and copolymers of ethylene and/or propylene with non-conjugated dienes such as dicyclopentadiene, 4-ethylidene-2-norbornene, 4-methyl-1,4-hexadiene, and 5-methyl-1,4-hexadiene.

The olefin-based resin (II) preferably contains at least one polypropylene-based resin from the viewpoint of obtaining economic efficiency and good compatibility in the hydrogenated block copolymer composition of the present embodiment to attain high transparency.

The olefin-based resin (II) may be modified with a prescribed functional group.

The functional group is not especially limited, and examples include an epoxy group, a carboxy group, an acid anhydride group, and a hydroxyl group.

A functional group-containing compound or a denaturant to be used for modifying the olefin-based resin (II) is not especially limited, and includes the following compounds:
Unsaturated epoxides such as glycidyl methacrylate, glycidyl acrylate, vinyl glycidyl ether, and allyl glycidyl ether; and unsaturated organic acids such as maleic acid, fumaric acid, itaconic acid, citraconic acid, allyl succinic acid, maleic anhydride, fumaric anhydride, and itaconic anhydride. Other unlimited examples include an ionomer and chlorinated polyolefin.

From the viewpoints of obtaining economic efficiency and good compatibility in the hydrogenated block copolymer composition of the present embodiment to attain high transparency, the olefin-based resin (II) is preferably a polypropylene-based resin such as a polypropylene homopolymer or an ethylene-propylene random or block copolymer.

In particular, from the viewpoint of the transparency and flexibility, the olefin-based resin (II) is more preferably an ethylene-propylene random copolymer.

The olefin-based resin (II) may contain a single material, or may contain two or more materials.

The hydrogenated block copolymer composition of the present embodiment contains the hydrogenated block copolymer (I) and at least one olefin-based resin (II), and the content of the hydrogenated block copolymer (I) is 1% by mass or more and 50% by mass or less, preferably 1% by mass or more and 45% by mass or less, and more preferably 5% by mass or more and 40% by mass or less.

When the content of the hydrogenated block copolymer (I) is 1% by mass or more, there is a tendency that the wear resistance of the hydrogenated block copolymer composition is improved and the hardness is lowered. On the other hand, when the content of the hydrogenated block copolymer (I) is 50% by mass or less, the oil resistance of the hydrogenated block copolymer composition tends to be improved.

The content of the olefin resin (II) is 5% by mass or more from the viewpoint of mechanical strength of a resin composition containing the hydrogenated block copolymer, and is 90% by mass or less from the viewpoint of a low temperature property of the resin composition containing the hydrogenated block copolymer. The content is preferably 7% by mass or more and 85% by mass or less, and more preferably 10% by mass or more and 80% by mass or less.

The hydrogenated block copolymer composition of the present embodiment contains, in addition to the hydrogenated block copolymer (I) and the polyolefin-based resin (II), 1% by mass or more and 50% by mass or less of at least one thermoplastic resin (III), and 5% by mass or more and 90% by mass or less of at least one softener (IV) .

In addition, an arbitrary rubber softener, a modifying agent, an additive and the like may be added.

The rubber softener softens the hydrogenated block copolymer composition of the present embodiment, and in addition, imparts flowability (molding processability) thereto.

The rubber softener may be, but is not limited to, for example, a mineral oil or a liquid or low molecular weight synthetic softener, and in particular, naphthene-based and/or paraffin-based process oils or extender oils are suitably used.

A mineral oil-based rubber softener is a mixture of an aromatic ring, a naphthene ring, and a paraffin ring, and a softener containing a paraffin ring having a carbon number corresponding to 50% or more of all carbons is designated as a paraffin-based softener, a softener containing a naphthene ring having a carbon number corresponding to 30 to 45% is designated as a naphthene-based softener, and a softener containing an aromatic ring having a carbon number over 30% is designated as an aromatic-based softener.

As a synthetic softener, for example, polybutene, low molecular weight polybutadiene, liquid paraffin and the like can be used, but the above-described mineral oil-based rubber softener is more preferred.

When the hydrogenated block copolymer composition of the present embodiment is required of high heat resistance and mechanical properties, a mineral oil-based rubber softener to be used therein has a kinematic viscosity at 40°C of preferably 60 cst or more, and more preferably 120 cst or more.

One of such rubber softeners may be singly used, or two or more of these may be used together.

The modifying agent has a function to improve scratch resistance on the surface of the hydrogenated block copolymer composition of the present embodiment, or improve adhesiveness.

The modifying agent can be, but is not limited to, for example, organic polysiloxane. Organic polysiloxane exhibits a surface modification effect for the hydrogenated block copolymer composition, and in addition, functions as a wear resistance improving agent.

The modifying agent may be in any of a liquid form having a low viscosity, a liquid form having a high viscosity, and a solid form, and from the viewpoint of attaining good dispersibility in the hydrogenated block copolymer composition of the present embodiment, is suitably in a liquid form, namely, silicone oil is suitably used. The kinematic viscosity of the modifying agent is preferably 90 cst or more, and more preferably 1,000 cst or more from the viewpoint of inhibiting bleeding of polysiloxane itself. Examples of the polysiloxane include, but are not limited to, general-purpose silicone oils such as dimethyl polysiloxane and methylphenyl polysiloxane, and various modified silicone oils such as alkyl-modified, polyether-modified, fluorine-modified, alcohol-modified, amino-modified, and epoxy-modified silicone oils. Although not especially limited, dimethyl polysiloxane is suitably used because it is highly effective as a wear resistance improving agent.

One of such modifying agents may be singly used, or two or more of these may be used together.

The additive is not especially limited, and can be a filler, a lubricant, a releasing agent, a plasticizer, an antioxidant, a heat stabilizer, a light stabilizer, a UV absorber, a flame retardant, an antistatic agent, a reinforcing agent, a colorant and the like that are generally used in a thermoplastic resin and a rubbery polymer.

Examples of the filler include, but are not limited to, inorganic fillers such as silica, talc, mica, calcium silicate, hydrotalcite, kaolin, diatomite, graphite, calcium carbonate, magnesium carbonate, magnesium hydroxide, aluminum hydroxide, calcium sulfate, and barium sulfate, and organic fillers such as carbon black.

Examples of the lubricant include, but are not limited to, stearic acid, behenic acid, zinc stearate, calcium stearate, magnesium stearate, and ethylene-bis-stearamide.

Examples of the plasticizer include, but are not limited to, organic polysiloxane and mineral oil.

An example of the antioxidant includes, but is not limited to, a hindered phenol-based antioxidant.

Examples of the heat stabilizer include, but are not limited to, phosphorus-based, sulfur-based and amine-based heat stabilizers.

An example of the light stabilizer includes, but is not limited to, a hindered amine-based light stabilizer.

An example of the UV absorber includes, but is not limited to, a benzotriazole-based UV absorber.

Examples of the reinforcing agent include, but are not limited to, organic fiber, glass fiber, carbon fiber, and metal whisker.

Examples of the colorant include, but are not limited to, titanium oxide, iron oxide, and carbon black.

The other examples include those described in, for example, "Gomu/Plastic Haigo Yakuhin (Rubber/Plastic Compounding Chemicals)" (edited by Rubber Digest Co., Ltd.) .

### (Thermoplastic Resin (III))

Examples of the thermoplastic resin (III) include, but are not limited to, a block copolymer of a conjugated diene compound and a vinyl aromatic compound or a hydrogenated product thereof (which is, however, different from the hydrogenated block copolymer (I) of the present embodiment), polymers of the vinyl aromatic compound, copolymer resins of the vinyl aromatic compound and another vinyl monomer, such as ethylene, propylene, butylene, vinyl chloride, vinylidene chloride, vinyl acetate, acrylic acid, and acrylic acid ester such as methyl acrylate, methacrylic acid and methacrylic acid ester such as methyl methacrylate, acrylonitrile, or methacrylonitrile, a rubber-modified styrene-based resin (HIPS), an acrylonitrile-butadiene-styrene copolymer resin (ABS), and a methacrylic acid ester-butadiene-styrene copolymer resin (MBS).

Other examples of the thermoplastic resin (III) include polyethylene, a copolymer of ethylene having an ethylene content of 50% by mass or more and another copolymerizable monomer, specifically such as an ethylene-propylene copolymer, an ethylene-butylene copolymer, an ethylene-hexene copolymer, an ethylene-octene copolymer, an ethylene-vinyl acetate copolymer and a hydrolysate thereof, a polyethylene-based resin such as an ethylene-acrylic acid ionomer or chlorinated polyethylene; polypropylene, a copolymer of propylene having a propylene content of 50% by mass or more and another copolymerizable monomer, specifically such as a propylene-ethylene copolymer, and a polypropylene-based resin such as a propylene-ethyl acrylate copolymer, or chlorinated polypropylene; and a cyclic olefin-based resin such as an ethylene-norbornene resin, a polybutene-based resin, a polyvinyl chloride-based resin, a polyvinyl acetate-based resin, and a hydrolysate thereof.

Other examples of the thermoplastic resin (III) include a polymer of acrylic acid and an ester or amide thereof, a polyacrylate-based resin, a polymer of acrylonitrile and/or methacrylonitrile, a nitrile resin that is a copolymer of another copolymerizable monomer having a content of 50% by mass or more of such an acrylonitrile-based monomer, a polyamide-based resin such as nylon-46, nylon-6, nylon-66, nylon-610, nylon-11, nylon-12, or nylon-6 nylon-12 copolymer, a polyester-based resin, a thermoplastic polyurethane-based resin, a polycarbonate-based polymer such as poly-4,4'-dioxydiphenyl-2,2'-propane carbonate, thermoplastic polysulfone such as polyethersulfone or polyallylsulfone, a polyoxymethylene-based resin, a polyphenylene ether-based resin such as poly(2,6-dimethyl-1,4-phenylene)ether, a polyphenylene sulfide-based resin such as polyphenylene sulfide, or poly 4,4'-diphenylene sulfide, a polyarylate-based resin, a polyether ketone polymer or copolymer, a polyketone-based resin, a fluorine-based resin, a polyoxybenzoyl-based polymer, a polyimide-based resin, and a polybutadiene-based resin such as 1,2-polybutadiene and trans-polybutadiene.

Among these thermoplastic resins (III), polystyrene, a styrene-based resin such as a rubber-modified styrene-based resin, polyethylene, a polyethylene-based polymer such as an ethylene-propylene copolymer, an ethylene-butylene copolymer, an ethylene-hexene copolymer, an ethylene-octene copolymer, an ethylene-vinyl acetate-based copolymer, an ethylene-acrylic acid ester-based copolymer, or an ethylene-methacrylic acid ester-based copolymer, polypropylene, a polypropylene-based resin such as a propylene-ethylene copolymer, a polyamide-based resin, a polyester-based resin, and a polycarbonate-based resin are particularly preferred. The number average molecular weights of these thermoplastic resins (III) are generally 1,000 or more, preferably 5,000 to 5,000,000, and more preferably 10,000 to 1,000,000.

In the hydrogenated block copolymer composition of the present embodiment, the content of the thermoplastic resin (III) is 1% by mass or more from the viewpoint of mechanical strength, and is 50% by mass or less from the viewpoint of oil resistance. The content is preferably 3% by mass or more and 47% by mass or less, and more preferably 5% by mass or more and 45% by mass or less.

Assuming that a total amount of the components (I) and (III) is 100 parts by mass, the content of the component (III) is preferably 0 to 150 parts by mass, more preferably 0 to 140 parts by mass, and further preferably 0 to 130 parts by mass.

### (Softener (IV))

The softener (IV) constituting the hydrogenated block copolymer composition of the present embodiment will now be described.

The softener (IV) is preferably a rubber softener that softens the hydrogenated block copolymer composition and imparts processability thereto.

The rubber softener may be, but is not limited to, for example, a mineral oil or a liquid or low molecular weight synthetic softener, and in particular, naphthene-based and/or paraffin-based process oils or extender oils are preferred. A mineral oil-based rubber softener is a mixture of an aromatic ring, a naphthene ring, and a paraffin chain, and a softener containing a paraffin chain having a carbon number corresponding to 50% or more of all carbons is designated as a paraffin-based softener, a softener containing a naphthene ring having a carbon number corresponding to 30 to 45% is designated as a naphthene-based softener, and a softener having an aromatic carbon number over 30% is designated as an aromatic softener.

A synthetic softener may be used in the hydrogenated block copolymer composition of the present embodiment, and usable examples include, but are not limited to, polybutene, low molecular weight polybutadiene, and liquid paraffin. In particular, the above-described mineral oil-based rubber softeners are preferred.

The content of the softener (IV) in the hydrogenated block copolymer composition of the present embodiment is 5% by mass or more from the viewpoint of surface touch, and is 90% by mass or less from the viewpoint of suppressing bleeding out. The content is preferably 7% by mass or more and 85% by mass or less, and more preferably 10% by mass or more and 80% by mass or less.

Assuming that a total amount of the components (I) and (II) is 100 parts by mass, the content of the component (IV) is preferably 0 to 150 parts by mass, more preferably 0 to 130 parts by mass, and further preferably 0 to 100 parts by mass. When the content of the softener (IV) is equal to or smaller than the upper limit, bleeding out can be suppressed, and the surface touch is favorable.

In the hydrogenated block copolymer composition of the present embodiment, in addition to the components (I), (II), (III), and (IV), an arbitrary additive can be compounded if necessary.

The type of the additive is not especially limited as long as it is generally used to be compounded in a thermoplastic resin or a rubbery polymer.

The hydrogenated block copolymer composition of the present embodiment can be produced by a conventionally known method.

Examples of a production method of the hydrogenated block copolymer composition of the present embodiment include, but are not limited to, a method in which respective components (the hydrogenated block copolymer (I), the polyolefin-based resin (II), the thermoplastic resin (III), the softener (IV), and another additive if necessary) are melt kneaded using a mixer, such as a Bunbury mixer, a single screw extruder, a twin screw extruder, a Ko Kneader, or a multi-screw extruder, and a method in which the respective components are dissolved or dispersed to be mixed, followed by removal of a solvent by heating.

In particular, a melt kneading method using an extruder is suitably employed from the viewpoints of productivity and good kneadability.

The shape of the hydrogenated block copolymer composition of the present invention can be, but is not limited to, an arbitrary shape such as a pellet shape, a sheet shape, a strand shape, or a chip shape. After the melt kneading, a molded article may be directly produced.

### (Reinforcing Filler)

A reinforcing filler composition can be prepared by compounding, in the hydrogenated block copolymer or the hydrogenated block copolymer composition of the present embodiment (hereinafter sometimes referred to as the component (A)), at least one reinforcing filler selected from the group consisting of a silica-based inorganic filler, a metal oxide, a metal hydroxide, a metal carbonate, and carbon black (hereinafter sometimes referred to as the component (C)).

A compounding amount of the component (C) in the reinforcing filler composition is, with respect to 100 parts by mass of the hydrogenated block copolymer or the hydrogenated block copolymer composition of the present embodiment, preferably 0.5 to 100 parts by mass, more preferably 5 to 100 parts by mass, and further preferably 20 to 80 parts by mass.

When the reinforcing filler composition is prepared by using the hydrogenated block copolymer or the hydrogenated block copolymer composition of the present embodiment (the component (A)), a thermoplastic resin and/or rubbery polymer different from the hydrogenated block copolymer and the olefin-based resin (II) of the present embodiment (hereinafter sometimes referred to as the component (B)) is preferably further compounded in an amount of 0 to 500 parts by mass, preferably 5 to 300 parts by mass, and more preferably 10 to 200 parts by mass with respect to 100 parts by mass of the component (A) .

Examples of the thermoplastic resin and/or rubbery polymer (the component (B)) include a block copolymer resin of a conjugated diene monomer and a vinyl aromatic monomer having a vinyl aromatic monomer unit content over 60% by mass, and a hydrogenated product thereof (which are, however, different from the hydrogenated block copolymer (A) of the present embodiment); a polymer of the vinyl aromatic compound; a copolymer resin of the vinyl aromatic compound and another vinyl compound (for example, ethylene, propylene, butylene, vinyl chloride, vinylidene chloride, vinyl acetate, acrylic acid and acrylic acid ester such as methyl acrylate, methacrylic acid and methacrylic acid ester such as methyl methacrylate, acrylonitrile, or methacrylonitrile); a rubber-modified styrene-based resin (HIPS); an acrylonitrile-butadiene-styrene copolymer resin (ABS); a methacrylic acid ester-butadiene-styrene copolymer resin (MBS); polyethylene; a copolymer having an ethylene content of 50% by mass or more and containing ethylene and another copolymerizable monomer, such as an ethylene-propylene copolymer, an ethylene-butylene copolymer, an ethylene-hexene copolymer, an ethylene-octene copolymer, an ethylene-vinyl acetate copolymer, or a hydrolysate thereof; a polyethylene-based resin such as an ethylene-acrylic acid ionomer or chlorinated polyethylene; polypropylene; a copolymer having a propylene content of 50% by mass or more and containing propylene and another copolymerizable monomer, such as a polypropylene-based resin such as a propylene-ethylene copolymer, a propylene-ethyl acrylate copolymer or chlorinated polypropylene, a cyclic olefin-based resin such as an ethylene-norbornene resin, a polybutene-based resin, a polyvinyl chloride-based resin, a polyvinyl acetate-based resin, or a hydrolysate thereof; a polymer of acrylic acid or an ester thereof and an amide; a polyacrylate-based resin; a polymer of acrylonitrile and/or methacrylonitrile; a nitrile resin that is a copolymer having an acrylonitrile-based monomer content of 50% by mass or more and containing an acrylonitrile-based monomer and another copolymerizable monomer; a polyamide-based resin such as nylon-46, nylon-6, nylon-66, nylon-610, nylon-11, nylon-12, nylon-6, or nylon-12 copolymer; a polyester-based resin; a thermoplastic polyurethane-based resin; a polycarbonate-based polymer such as poly-4,4'-dioxydiphenyl-2,2'-propane carbonate; thermoplastic polysulfone such as polyethersulfone or polyallylsulfone; a polyoxymethylene-based resin; a polyphenylene ether-based resin such as poly(2,6-dimethyl-1,4-phenylene)ether; a polyphenylene sulfide-based resin such as polyphenylene sulfide, or poly4,4'-diphenylene sulfide; a polyarylate-based resin; a polyether ketone polymer or copolymer; a polyketone-based resin; a fluorine-based resin; a polyoxybenzoyl-based polymer; a polyimide-based resin; and a polybutadiene-based resin such as 1,2-polybutadiene and trans-polybutadiene.

Such a component (B) may contain a polar group-containing atomic group, such as a hydroxyl group, an epoxy group, an amino group, a carboxylic acid group or an acid anhydride group, bonded thereto.

The silica-based inorganic filler to be used as the reinforcing filler (the component (C)) is a solid particle containing SiO₂ as a principal component of a constituent unit, and examples include silica, clay, talc, kaolin, mica, wollastonite, montmorillonite, zeolite, or an inorganic fibrous substance such as glass fiber. Alternatively, a silica-based inorganic filler having a hydrophobized surface, or a mixture of a silica-based inorganic filler and another non-silica-based inorganic filler can be used. As the silica-based inorganic filler, silica and glass fiber are preferably used. As the silica, dry process white carbon, wet process white carbon, synthetic silicate-based white carbon, what is called colloidal silica, or the like can be used.

The silica-based inorganic filler has an average particle size of preferably 0.01 µm to 150 µm, and in order that the silica-based inorganic filler is dispersed in the reinforcing filler composition to sufficiently exhibit the effect of the addition, an average dispersed particle size is preferably 1 µm or less, and more preferably 0.5 µm or less. The lower limit is preferably 0.05 µm or more, and more preferably 0.05 µm or more.

The metal oxide to be used as the reinforcing filler (the component (C)) is a solid particle containing MxOy (wherein M represents a metal atom, and x and y respectively represent an integer of 1 to 6) as a principal component of a constituent unit, and examples include alumina, titanium oxide, magnesium oxide and zinc oxide. Alternatively, a mixture of a metal oxide and an inorganic filler excluding a metal oxide may be used.

The metal hydroxide to be used as the reinforcing filler is a hydrate type inorganic filler such as aluminum hydroxide, magnesium hydroxide, zirconium hydroxide, hydrated aluminum silicate, hydrated magnesium silicate, basic magnesium carbonate, hydrotalcite, calcium hydroxide, barium hydroxide, a hydrate of tin oxide, or a hydrate of an inorganic metal compound such as borax, and among these, magnesium hydroxide and aluminum hydroxide are preferred.

Examples of the metal carbonate to be used as the reinforcing filler include calcium carbonate and magnesium carbonate.

Alternatively, carbon black of FT, SRF, FEF, HAF, ISAF and SAF classes can be used as the reinforcing filler, and carbon black having a nitrogen adsorption specific surface area of 50 mg/g or more and a DBP (dibutyl phthalate) oil adsorption of 80 mL/100 g is preferred.

In the reinforcing filler composition using the hydrogenated block copolymer or the hydrogenated block copolymer composition of the present embodiment, a silane coupling agent (hereinafter sometimes referred to as the component (D)) may be compounded.

The silane coupling agent is used for obtaining close interaction between the hydrogenated block copolymer and the reinforcing filler, and is a compound containing a group having affinity with or a binding property to one or both of the hydrogenated block copolymer and the reinforcing filler.

A preferably used silane coupling agent has a silanol group or alkoxysilane as well as a polysulfide bond in which two or more mercapto groups and/or sulfur are linked. Specific examples include bis-[3[(triethoxysilyl)-propyl]-tetrasulfide, bis-[3-(triethoxysilyl)-propyl]-disulfide, bis-[2-(triethoxysilyl)-ethyl]-tetrasulfide, 3-mercaptopropyltrimethoxysilane, 3-triethoxysilylpropyl-N,N-dimethylthiocarbamoyl tetrasulfide, and 3-triethoxysilylpropylbenzothiazole tetrasulfide.

From the viewpoint of obtaining the desired effects, a compounding amount of the silane coupling agent is preferably 0.1% by mass to 30% by mass, more preferably 0.5% by mass to 20% by mass, and further preferably 1% by mass to 15% by mass based on the reinforcing filler composition.

The reinforcing filler composition containing the hydrogenated block copolymer or the hydrogenated block copolymer composition of the present embodiment and the reinforcing filler may be vulcanized with a vulcanizing agent, namely, crosslinked, to obtain a vulcanized composition.

As the vulcanizing agent, a radical generator such as an organic peroxide or an azo compound, an oxime compound, a nitroso compound, a polyamine compound, sulfur, a sulfur compound (such as sulfur monochloride or sulfur dichloride), a disulfide compound, a polymer polysulfur compound or the like can be used.

The amount of the vulcanizing agent to be used is usually 0.01 to 20 parts by mass, and preferably 0.1 to 15 parts by mass with respect to 100 parts by mass of the hydrogenated block copolymer or the hydrogenated block copolymer composition.

From the viewpoint of odor and scorch stability (a property that it is not crosslinked under conditions for mixing respective components but rapidly crosslinked under crosslinking reaction conditions), the organic peroxide (hereinafter sometimes referred to as the component (E)) to be used as the vulcanizing agent is preferably 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, or di-tert-butylperoxide.

In addition to the above, dicumyl peroxide, benzoyl peroxide, p-chlorobenzoyl peroxide, 2,4-dichlorobenzoyl peroxide, tert-butyl peroxybenzoate, tert-butyl perbenzoate, tert-butylperoxy isopropyl carbonate, diacetyl peroxide, lauroyl peroxide, tert-butyl cumyl peroxide or the like can be used.

In vulcanization, a sulfenamide-based, guanidine-based, thiuram-based, aldehyde-amine-based, aldehyde-ammonium-based, thiazole-based, thiourea-based, or dithiocarbamate-based compound may be used as a vulcanization accelerator (hereinafter sometimes referred to as the component (F)) in a necessary amount.

Zinc oxide, stearic acid or the like can be used as a vulcanization aid in a necessary amount.

Furthermore, in crosslinking the reinforcing filler composition by using the organic peroxide described above (the component (E)), sulfur; a peroxy crosslinking aid (hereinafter sometimes referred to as the component (G)) such as p-quinone dioxime, p,p'-dibenzoyl quinone dioxime, N-methyl-N-4-dinitrosoaniline, nitrosobenzene, diphenylguanidine, or trimethylolpropane-N-N'-m-phenylenedimaleimide; a polyfunctional methacrylate monomer such as divinyl benzene, triallyl cyanurate, ethylene glycol dimethacrylate, diethylene glycol dimethacrylate, polyethylene glycol dimethacrylate, trimethylolpropane trimethacrylate, or allyl methacrylate; or a polyfunctional vinyl monomer (hereinafter sometimes referred to as the component (H)) such as vinyl butylate or vinyl stearate can be used, as a vulcanization accelerator in particular, together with the organic peroxide.

Such a vulcanization accelerator is used usually in an amount of preferably 0.01 to 20 parts by mass, and more preferably 0.1 to 15 parts by mass with respect to 100 parts by mass of the hydrogenated block copolymer or the hydrogenated block copolymer composition.

As a method for vulcanizing the reinforcing filler composition with the vulcanizing agent, a conventionally employed method can be applied, and vulcanization is performed at a temperature of, for example, 120°C to 200°C, and preferably 140°C to 180°C. The reinforcing filler composition thus vulcanized exhibits heat resistance, bending resistance and oil resistance in a vulcanized state.

In order to improve processability of the reinforcing filler composition, a rubber softener (hereinafter sometimes referred to as the component (i)) may be compounded.

As the rubber softener, a mineral oil, or a liquid or low molecular weight synthetic softener is suitably used. In particular, a naphthene-based and/or paraffin-based process oil or extender oil generally used for softening, bulking, or improving processability of rubber is preferably used.

A mineral oil-based rubber softener is a mixture of an aromatic ring, a naphthene ring, and a paraffin ring, and a softener containing a paraffin ring having a carbon number corresponding to 50% or more of all carbons is designated as a paraffin-based softener, a softener containing a naphthene ring having a carbon number corresponding to 30 to 45% is designated as a naphthene-based softener, and a softener containing an aromatic ring having a carbon number over 30% is designated as an aromatic-based softener. In the reinforcing filler composition, a synthetic softener may be used, and polybutene, low molecular weight polybutadiene, liquid paraffin and the like can be used. The mineral oil-based rubber softer described above is, however, preferably used.

A compounding amount of the rubber softener (the component (i)) in the reinforcing filler composition is, with respect to 100 parts by mass of the hydrogenated block copolymer or the hydrogenated block copolymer composition (the component (A)), preferably 0 to 100 parts by mass, more preferably 1 to 90 parts by mass, and further preferably 30 to 90 parts by mass. When the amount of the rubber softener exceeds 100 parts by mass, bleed-out is easily caused, and it is apprehended that the surface of the composition may become sticky.

The reinforcing filler composition containing the hydrogenated block copolymer or the hydrogenated block copolymer composition of the present embodiment can be suitably used as a building material, a coating material for an electrical wire, a damping material and the like. A vulcanized composition obtained therefrom can be suitably used, owing to the characteristics, for a tire, or a material of an anti-vibration rubber, a belt, an industrial product, footwear, a foam body and the like.

### (Crosslinked Product)

The hydrogenated block copolymer or the hydrogenated block copolymer composition of the present embodiment can be crosslinked in the presence of a vulcanizing agent to produce a crosslinked product, namely, a crosslinked hydrogenated block copolymer or a crosslinked hydrogenated block copolymer composition.

When the hydrogenated block copolymer or the hydrogenated block copolymer composition of the present embodiment is crosslinked, heat resistance [high temperature compression set (C-set)] and bending resistance are improved.

When a crosslinked product of the reinforcing filler composition containing the hydrogenated block copolymer composition of the present embodiment is to be prepared, in particular, a compounding ratio between the hydrogenated block copolymer or the hydrogenated block copolymer composition (the component (A)) and the thermoplastic resin and/or the rubbery polymer (the component (B)) is, in terms of a mass ratio of the component (A)/the component (B), preferably 10/90 to 100/0, more preferably 20/80 to 90/10, further preferably 30/70 to 80/20.

When the hydrogenated block copolymer or the hydrogenated block copolymer composition of the present embodiment is crosslinked in the presence of a vulcanizing agent, the crosslinking method is not especially limited, and what is called "dynamic crosslinking" is preferably performed.

The dynamic crosslinking refers to a method in which various compositions in a melted state are kneaded under a temperature condition where a vulcanizing agent reacts, so as to simultaneously cause dispersion and crosslinking, and is described in detail in a Document of A. Y. Coran et al., (Rub. Chem. and Technol. vol. 53.141-(1980)). The dynamic crosslinking is performed usually by using a closed kneader such as a Bunbury mixer or a pressurized kneader, or a single or twin screw extruder. A kneading temperature is usually 130°C to 300°C, and preferably 150°C to 250°C, and a kneading time is usually 1 minute to 30 minutes.

As the vulcanizing agent used in the dynamic crosslinking, an organic peroxide or a phenol resin crosslinking agent is used, and the amount to be used is, with respect to 100 parts by mass of the hydrogenated block copolymer or the hydrogenated block copolymer composition (the component (A)), usually 0.01 to 15 parts by mass, and preferably 0.04 to 10 parts by mass.

As the organic peroxide to be used as the vulcanizing agent, the component (E) described above can be used. When the crosslinking is performed by using the organic peroxide, the component (F) can be used as the vulcanization accelerator, or the component (G), the component (H) and the like can be used together. The amount of these vulcanization accelerators to be used is, with respect to 100 parts by mass of the hydrogenated block copolymer or the hydrogenated block copolymer composition (the component (A)), usually 0.01 to 20 parts by mass, and preferably 0.1 to 15 parts by mass.

In the crosslinked product using the hydrogenated block copolymer or the hydrogenated block copolymer composition (the component (A)) of the present embodiment, additives such as a softener, a heat stabilizer, an antistatic agent, a weathering stabilizer, an anti-aging agent, a filler, a colorant, and a lubricant can be compounded if necessary as long as the purpose of the crosslinked product is not impaired. As a softener to be compounded for controlling the hardness and flowability of a final product, the rubber softener (i) can be used.

The softener may be added in kneading the respective components, or may be precedently contained in the hydrogenated block copolymer in producing the hydrogenated block copolymer, namely, an oil-extended rubber may be precedently prepared.

The amount of the softener to be added is, with respect to 100 parts by mass of the hydrogenated block copolymer or the hydrogenated block copolymer composition (the component (A)), usually 0 to 200 parts by mass, preferably 10 to 150 parts by mass, and more preferably 20 to 100 parts by mass.

As the filler, the component (C) corresponding to the reinforcing filler described above can be used. The amount of the filler to be added is, with respect to 100 parts by mass of the hydrogenated block copolymer or the hydrogenated block copolymer composition (the component (A)), usually 0 to 200 parts by mass, preferably 10 to 150 parts by mass, and more preferably 20 to 100 parts by mass.

It is recommended that the dynamic crosslinking is performed so that a gel content (excluding an insoluble component such as an insoluble matter of an inorganic filler or the like) of the crosslinked product can be preferably 5% by mass to 80% by mass, more preferably 10% by mass to 70% by mass, and further preferably 20% by mass to 60% by mass. The gel content is defined as a ratio (% by mass) of an insoluble matter based on 1 g of a sample obtained as follows: 1 g of the crosslinked product is refluxed in a Soxhlet extractor using boiling xylene for 10 hours, the resultant residue is filtered through a 80-mesh wire mesh, and a dry mass (g) of a remaining portion on the mesh of the insoluble matter is measured. The gel content can be controlled by adjusting the type and the amount of the vulcanizing agent, and the vulcanizing conditions (a temperature, a retention time, a share and the like).

The crosslinked product can be applied, similarly to the vulcanized composition of the reinforcing filler composition, to a tire, an anti-vibration rubber, a belt, an industrial product, footwear, a foam body and the like, and further can be used as a material of a medical instrument or a food packaging material.

### [Molded Article using Hydrogenated Block Copolymer Composition]

A molded article of the present embodiment is a molded article of the hydrogenated block copolymer composition of the present embodiment described above.

The molded article of the present embodiment can be produced by, for example, extrusion molding, injection molding, two-color injection molding, sandwich molding, blow molding, compression molding, vacuum molding, rotational molding, powder slush molding, foam molding, laminate molding, calendar molding, or blow molding.

Examples of the molded article of the present embodiment include, but are not limited to, a sheet, a film, an injection molded article, a blow molded article, a compression molded article, a vacuum molded article, an extrusion molded article, and a foam molded article in various shapes, a molded article in the shape of nonwoven fabric or fiber, and various molded articles including synthetic leather.

These molded articles can be used for, for example, a vehicle component, a food packaging material, a medical instrument, a member of home appliances, an electronic device member, a building material, an industrial component, a household article, a toy material, a footwear material, a fiber material and the like.

Examples of the vehicle component include, but are not limited to, a side mall, a grommet, a shift knob, a weather strip, a window frame and its sealing material, an arm rest, an assist grip, a door grip, a steering wheel grip, a console box, a head rest, an instrument panel, a bumper, a spoiler, and an air bag cover.

Examples of the medical instrument include, but are not limited to, a medical tube, a medical hose, a catheter, a blood bag, an infusion bag, a platelet storage bag, and a dialysis bag.

Examples of the building material include, but are not limited to, a wall material and a floor material.

The other examples include, but are not limited to, an industrial hose, a hose for food, a hose for a vacuum cleaner, an electrically cooling gasket, various coating materials for an electrical wire and the like, a coating material for a grip, and a soft doll.

The molded article of the present embodiment may be appropriately subjected to processing such as foaming, powdering, extending, adhering, printing, coating, or plating.

The hydrogenated block copolymer composition of the present embodiment exhibits excellent effects in flexibility, low rebound resilience, transparency, and kink resistance, and hence is very useful as a material of a hollow molded article such as a hose or a tube.

Next, molded articles using the hydrogenated block copolymer (I) or the hydrogenated block copolymer composition of the present invention will be described separately as [First Molded Article] to [Third Molded Article].

### [First Molded Article]

A first aspect of the molded article using the hydrogenated block copolymer (I) of the present embodiment is a molded article containing substantially only the hydrogenated block copolymer (I). The phrase "to contain substantially only the hydrogenated block copolymer (I)" refers to that a polymer constituting the molded article is only the hydrogenated block copolymer (I), and does not intend to exclude that various additives described below are contained. Besides, an aspect in which another polymer is added is not excluded as long as the function of the hydrogenated block copolymer (I) is not impaired. The amount of another allowable polymer depends on the structure and use of the polymer, and for example, for obtaining a resin composition formed together with polyolefin such as polypropylene, the content is roughly 5% by mass or less. For obtaining a resin composition formed together with another elastomer, the content can be 80% by mass or less, although depending on the structure.

In this case, the first molded article can be distinguished from the second molded article described below (the molded article of the hydrogenated block copolymer composition) in that the first molded article does not contain a rubbery polymer described below but the second molded article contains the rubbery polymer described below.

The first molded article can be suitably used as a transparent tube or bag for medical use or the like, and can be used as an adhesive layer constituting an adhesive film for a protection film, but the first molded article is not limited to these.

### (Tube)

A tube using the hydrogenated block copolymer (I) of the present embodiment is excellent in transparency, flexibility, kink resistance, solvent adhesion, and balance among respective properties.

The tube may contain, in addition to the hydrogenated block copolymer (I) of the present embodiment, an additional component as long as the object of the present embodiment is not impaired. The additional component is not especially limited, and examples include a hydrogenated copolymer having a different structure from the hydrogenated block copolymer (I) (styrene-based thermoplastic elastomer), a heat stabilizer, an antioxidant, a UV absorber, an anti-aging agent, a plasticizer, a light stabilizer, a crystal nucleating agent, an impact modifier, a pigment, a lubricant, a softener, an antistatic agent, a dispersant, a flame retardant, a copper inhibitor, a crosslinking agent, a flame retardant aid, a compatibilizer, and a tackifier. One of these additional components may be singly used, or two or more of these may be used in combination.

### <Lubricant>

The tube may contain a lubricant for preventing adhesion between outer surfaces or inner surfaces of the tube, and for obtaining favorable texture of touch and the like. The lubricant is preferably at least one (preferably at least two) lubricant selected from a fatty acid amide-based lubricant, a stearic acid metal salt-based lubricant, and a fatty acid monoglyceride-based lubricant.

Examples of the fatty acid amide-based lubricant include, but are not limited to, erucic acid amide, behenic acid amide, oleic acid amide, stearic acid amide, N-stearyl lauric acid amide, N-stearyl stearic acid amide, N-stearyl behenic acid amide, N-stearyl erucic acid amide, N-oleyl oleic acid amide, N-oleyl behenic acid amide, N-lauryl erucic acid amide, ethylene bis oleic acid amide, ethylene bis stearic acid amide, hexamethylene bis oleic acid amide, and hexamethylene bis erucic acid amide. Among these, erucic acid amide, behenic acid amide, oleic acid amide, stearic acid amide, and ethylene bis stearic acid amide are preferred, and oleic acid amide is more preferred.

The type of metal of the stearic acid metal salt-based lubricant can be, for example, zinc, sodium, calcium, magnesium, and lithium. Among these, zinc stearate is preferred.

Examples of the fatty acid monoglyceride-based lubricant include, but are not limited to, lauric acid monoglyceride, myristic acid monoglyceride, palmitic acid monoglyceride, stearic acid monoglyceride, oleic acid monoglyceride, and behenic acid monoglyceride. Among these, stearic acid monoglyceride is preferred.

The content of the lubricant in the tube using the hydrogenated block copolymer (I) of the present embodiment is preferably 0.05% by mass or more from the viewpoint of preventing the adhesion, and is preferably 1.0% by mass or less, and more preferably 0.7% by mass or less from the viewpoint of avoiding the lubricant from bleeding out of the tube to impair printability on the tube surface. From these points of view, the content of the lubricant in the hydrogenated block copolymer composition constituting the tube of the present embodiment is in the range of preferably 0.05 to 1.0% by mass, and more preferably 0.05 to 0.7% by mass.

One each of the fatty acid amide-based lubricant, the stearic acid metal salt-based lubricant, and the fatty acid monoglyceride-based lubricant may be singly used, or two or more of these may be used together. In particular, it is preferable to use erucic acid amide, zinc stearate, and ethylene bis stearic acid amide together, and a mass ratio among these is preferably erucic acid amide/zinc stearate/ethylene bis stearic acid amide = 0.20/0.15/0.15.

### <Softener>

The tube may contain a softener.

Examples of the softener include a paraffin-based oil, a naphthene-based oil, an aromatic oil, paraffin wax, liquid paraffin, a white mineral oil, and a plant-based softener. Among these, from the viewpoint of the low temperature property and bleed resistance, a paraffin-based oil, liquid paraffin, and a white mineral oil are more preferred. Among these, a paraffin-based oil, liquid paraffin, and a white mineral oil are more preferred from the viewpoint of the low temperature property and bleed resistance.

The kinematic viscosity at 40°C of the softener is preferably 500 mm²/sec or less. The lower limit of the kinematic viscosity at 40°C of the softener is not especially limited, and is preferably 10 mm²/sec. When the kinematic viscosity at 40°C of the softener is 500 mm²/sec or less, the flowability of the material contained in the tube is further improved, and the molding processability tends to be further improved. The kinematic viscosity of the softener can be measured by a test method using a glass capillary viscometer, or the like.

### <Tackifier>

The tube may contain a tackifier.

The tackifier is not especially limited, and examples include a coumarone-indene resin, a p-t-butylphenol-acetylene resin, a phenol-formaldehyde resin, a xylene-formaldehyde resin, a terpene resin, a hydrogenated terpene resin, a terpene-phenol resin, an aromatic hydrocarbon resin, an aliphatic hydrocarbon resin, an aliphatic cyclic hydrocarbon resin, an aliphatic/alicyclic petroleum resin, an aliphatic/aromatic hydrocarbon resin, a hydrogenated modified alicyclic hydrocarbon resin, a hydrogenated alicyclic hydrocarbon resin, a hydrocarbon-based tackifying resin, polybutene, liquid polybutadiene, cis-1,4-polyisoprene rubber, hydrogenated polyisoprene rubber, liquid polyisoprene rubber, and a rosin resin.

### <Method for Producing Tube>

### [Method for Producing Material Constituting Tube]

A material constituting the tube can be prepared by, for example, a method in which the hydrogenated block copolymer (I) of the present embodiment and other components to be added if necessary are appropriately selected, and dry-blended, a method in which these components are mixed with an apparatus usually used for mixing polymer materials, or the like.

The mixer is not especially limited, and examples include a kneader such as a Bunbury mixer, a Labo Plasto Mill, a single screw extruder, or a twin screw extruder, and production by a melt kneading method using an extruder is preferred from the viewpoint of productivity and good kneadability.

A melting temperature in the kneading can be appropriately set, and is usually in the range of 130 to 300°C, and preferably in the range of 150 to 250°C.

### [Method for Molding Tube]

A method for molding the tube is not especially limited, and for example, a method in which the hydrogenated block copolymer (I) of the present embodiment and other components to be added if necessary are appropriately selected, charged in an extruder and melted, the resultant mixture is caused to pass through a die to be formed into a tubular shape, and the resultant is cooled with water or air to form a tube can be employed. As the extruder, a single screw or multi-screw extruder can be used, or a plurality of extruders may be used to mold a multilayer tube by multilayer extrusion.

The shape of the tube is not especially limited, and a tube in a circular or elliptic shape is usually used. The size of the tube is not especially limited, and for example, the outer diameter is preferably 1 to 50 mm, more preferably 2 to 30 mm, and further preferably 3 to 20 mm. The thickness of the tube is preferably 0.3 to 30 mm, more preferably 0.4 to 20 mm, and further preferably 0.5 to 10 mm.

The tube using the hydrogenated block copolymer (I) of the present embodiment may be formed as a multilayer tube having a layer of an additional polymer laminated as long as the object of the present embodiment is not impaired. One additional polymer can be used singly, or two or more thereof may be used in combination to form a single layer or multiple layers, and when the multiple layers are used, different types of polymers may be used in the respective layers. When the multiple layers are used, a tube having different hardness in respective portions but having no seam can be obtained by appropriately selecting different two or more polymers. The layer of the additional polymer in the tube having the multilayer structure may be formed as either of an innermost layer, an intermediate layer, and an outermost layer depending on a desired property to be imparted.

In order to further improve pressure resistance and the like with the flexibility retained by suppressing thickness increase, the tube using the hydrogenated block copolymer (I) of the present embodiment can be formed as a pressure tube (hose) by wrapping it with a braided reinforcement yarn or a spiral reinforcement material.

The braided reinforcement yarn is provided in an inner portion in the thickness direction or between the layers, and for example, vinylon, polyamide, polyester, aramid fiber, carbon fiber, a metal wire or the like can be used. The spiral reinforcement material is provided on the outer circumference, and a metal, plastic or the like can be used.

The tube using the hydrogenated block copolymer (I) of the present embodiment can exhibit excellent transparency, flexibility, kink resistance, solvent adhesion, and balance among the respective properties at a high level, and can be used without limiting use.

Owing to these properties, the tube can be used in a wide range of uses including use for home appliances, use for vehicle interior and exterior parts, daily necessities, leisure goods, toys, industrial goods, use for hood production apparatuses, medical use, and use for drinking water. Among these, the tube can be particularly suitably used for medical use. For example, it can be suitably used as a tube for an infusion set, a tube for an enteral nutrition set, an extension tube, a drug administration tube, a blood circulation tube, a nutrition tube, a connecting tube, and a tube for a winged intravenous needle, and further as a suction catheter, a drainage catheter, an enteral nutrition catheter, a nasogastric catheter, a drug administration catheter, a peritoneal dialysis catheter, a blood catheter and a ballon catheter, a urinary catheter, and the like.

### (Adhesive Film)

An adhesive film includes a base film and an adhesive layer, the adhesive layer is disposed on the base film, and contains the hydrogenated block copolymer (I) of the present embodiment, and the adhesive layer is excellent in initial adhesiveness, adhesiveness increase, and an unrolling property, and balance among these various performances.

The adhesive layer of the adhesive film may contain a tackifier.

The tackifier is not especially limited as long as it is a resin capable of imparting viscosity to the adhesive layer, and examples include known tackifiers such as a hydrogenated terpene resin, a rosin terpene-based resin, a hydrogenated rosin terpene-based resin, an aromatic modified hydrogenated terpene resin, a coumarone-based resin, a phenol-based resin, a terpene phenol-based resin, a hydrogenated terpene phenol resin, an aromatic hydrocarbon resin, and an aliphatic hydrocarbon resin. In particular, a hydrogenated terpene resin, an aromatic modified hydrogenated terpene resin, a hydrogenated terpene phenol resin, and a terpene phenol resin are preferred.

One of the tackifiers may be singly used, or a mixture of two or more of these may be used.

Specifically, as the tackifier, those described in "Compounding Ingredients for Rubber and Plastics" (edited by Rubber Digest) can be used. When a tackifier is used, tack strength can be improved. A content of the tackifier in the adhesive layer is preferably 0.5 to 50% by mass, more preferably 5 to 45% by mass, and further preferably 10 to 30% by mass in the adhesive layer. The content of the tackifier in the adhesive layer is preferably 50% by mass or less because in this case, there is a tendency that adhesiveness increase can be effectively prevented, and the amount of adhesive residue caused in peeling can be further reduced. When the content is 0.5% by mass or more, adequate tack strength tends to be obtained.

### <Base Film>

The material of the base film is not especially limited, and either a nonpolar resin or a polar resin can be used. From the viewpoints of performances and cost, preferable examples of the nonpolar resin include polyethylene, and homo or block polypropylene, and preferable examples of the polar resin include a polyester-based resin such as polyethylene terephthalate, or polybutylene terephthalate, a polyamide-based resin, an ethylene vinyl acetate copolymer, or a hydrolysate thereof.

The thickness of the base film is preferably 1 mm or less, more preferably 300 µm or less, and further preferably 10 to 200 µm. When the thickness of the base film is 10 µm or more, an adherend can be sufficiently protected, and when the thickness of the base film is 1 mm or less, a practically favorable elastic modulus can be obtained, good irregularity followability is obtained, and lifting or peeling can be effectively prevented.

### <Adhesive Layer>

The adhesive film includes, on the base film, the adhesive layer containing the hydrogenated block copolymer (I) of the present embodiment. The adhesive layer may contain other materials described below.

### [Other Materials Contained in Adhesive Layer]

### <Hydrogenated Styrene-based Elastomer>

The adhesive layer of the adhesive film may further contain a hydrogenated styrene-based elastomer.

Representative examples of the hydrogenated styrene-based elastomer include, but are not limited to, styrene-butadiene-styrene (SBS), styrene-isoprene-styrene (SIS), a styrene-butadiene random polymer (SBR), styrene-ethylene-butylene-styrene (SEBS) obtained by saturating SBS by hydrogenation, and styrene-ethylene-propylene-styrene (SEPS), and in addition, an elastomer having a structure of styrene-ethylene-butylene (SEB), styrene-ethylene-propylene (SEP), or a styrene-isobutylene-styrene triblock copolymer (SIBS) may be used.

Alternatively, a reactive elastomer obtained by imparting various functional groups to the hydrogenated styrene-based elastomer may be used. Examples of the functional groups include, but are not limited to, a hydroxyl group, a carboxyl group, a carbonyl group, a thiocarbonyl group, an acid halide group, an acid anhydride group, a thiocarboxylic acid group, an aldehyde group, a thioaldehyde group, a carboxylic acid ester group, an amide group, a sulfonic acid group, a sulfonic acid ester group, a phosphoric acid group, a phosphoric acid ester group, an amino group, an imino group, a nitrile group, a pyridyl group, a quinoline group, an epoxy group, a thioepoxy group, a sulfide group, an isocyanate group, a isothiocyanate group, a silicon halide group, an alkoxy silicon group, a tin halide group, a boronic acid group, a boron-containing group, a boronate group, an alkoxy tin group, and a phenyl tin group.

### <Olefin-based Resin, and Olefin-based Elastomer>

The adhesive layer of the adhesive film may further contain an olefin-based resin or an olefin-based elastomer.

Examples of the olefin-based resin and the olefin-based elastomer include an α-olein polymer or copolymer having 2 to 20 carbon atoms, and a copolymer of ethylene and an unsaturated carboxylic acid or unsaturated carboxylic acid ester.

Specific examples include an ethylene-propylene copolymer, an ethylene-1-butene copolymer, an ethylene-1-hexene copolymer, an ethylene-4-methylpentene copolymer, an ethylene-1-octene copolymer, a propylene homopolymer, a propylene-ethylene copolymer, a propylene-ethylene-1-butene copolymer, a 1-butene homopolymer, a 1-butene-ethylene copolymer, a 1-butene-propylene copolymer, a 4-methylpentene homopolymer, a 4-methylpentene-1-propylene copolymer, 4-methylpentene-1-butene copolymer, 4-methylpentene-1-propylene-1-butene copolymer, a propylene-1-butene copolymer, an ethylene-vinyl acetate copolymer, an ethylene-methacrylic acid copolymer, and an ethylene-methyl methacrylate copolymer.

### <Acrylic-based Copolymer>

The adhesive layer of the adhesive film may further contain an acrylic-based copolymer.

The acrylic-based copolymer is not especially limited, and examples include copolymers of methyl acrylate, ethyl acrylate, methyl methacrylate, acrylonitrile, and the like with vinyl acetate, vinyl chloride, styrene, and the like.

### <Softener>

The adhesive layer of the adhesive film may further contain a softener.

The softener is not especially limited, and for example, either a mineral oil-based softener or a synthetic resin-based softener can be used.

Examples of the mineral oil-based softener include mixtures of aromatic hydrocarbon, naphthene-based hydrocarbon, and paraffin-based hydrocarbon. It is noted that an oil containing paraffin-based hydrocarbon having a carbon number corresponding to 50% or more of all carbons is designated as a paraffin-based oil, an oil containing naphthene-based hydrocarbon having a carbon number corresponding to 30 to 45% is designated as a naphthene-based oil, and an oil containing aromatic hydrocarbon having a carbon number corresponding to 35% or more is designated as an aromatic oil. The mineral oil-based softener is preferably a paraffin-based oil that is a rubber softener, and the synthetic resin-based softener is preferably polybutene, or low molecular weight polybutadiene.

### <Antioxidant, Light Stabilizer, etc.>

To the adhesive layer of the adhesive film, a stabilizer such as an antioxidant or a light stabilizer may be further added.

Examples of the antioxidant include, but is not limited to, hindered phenol-based antioxidants such as 2,6-di-t-butyl-4-methylphenol, n-octadecyl-3-(4'-hydroxy-3',5'-di-t-butylphenyl)propionate, 2,2'-methylenebis(4-methyl-6-t-butylphenol), 2,2'-methylenebis(4-ethyl-6-t-butylphenol), 2,4-bis[(octylthio)methyl]-o-cresol, 2-t-butyl-6-(3-t-butyl-2-hydroxy-5-methylbenzyl)-4-methylphenyl acrylate, 2,4-di-t-amyl-6-[1-(3,5-di-t-amyl-2-hydroxyphenyl)ethyl]phenyl acrylate, and 2-[1-(2-hydroxy-3,5-di-tert-pentylphenyl)]acrylate; sulfur-based antioxidants such as dilaurylthiodipropionate, and laurylstearylthiodipropionate pentaerythritol tetrakis(β-laurylthiopropionate); and phosphorus-based antioxidants such as tris(nonylphenyl) phosphite, and tris(2,4-di-t-butylphenyl) phosphite.

Examples of the light stabilizer include, but are not limited to, benzotriazole-based UV absorbers such as 2-(2'-hydroxy-5'-methylphenyl)benzotriazole, 2-(2'-hydroxy-3',5'-t-butylphenyl)benzotriazole, and 2-(2'-hydroxy-3',5'-di-t-butylphenyl)-5-chlorobenzotriazole, benzophenone-based UV absorbers such as 2-hydroxy-4-methoxybenzophenone, and hindered amine-based light stabilizers.

### <Pigment, Waxes, Thermoplastic Resin, Natural Rubber, and Synthetic Rubber>

The adhesive layer of the adhesive film may contain, in addition to the components described above, various additives if necessary.

Examples of the additives include, but are not limited to, pigments such as red iron oxide, and titanium dioxide; waxes such as paraffin wax, microcrystalline wax, and low molecular weight polyethylene wax; polyolefin-based or low molecular weight vinyl aromatic thermoplastic resins such as amorphous polyolefin, and an ethylene-ethyl acrylate copolymer; natural rubber; and synthetic rubbers such as polyisoprene rubber, polybutadiene rubber, styrene-butadiene rubber, ethylene-propylene rubber, chloroprene rubber, acrylic rubber, isoprene-isobutylene rubber, and polypentenamer rubber. Examples of the synthetic rubber include, in addition to those described above, those described in "Compounding Ingredients for Rubber and Plastics" (edited by Rubber Digest).

### <Saturated Fatty Acid Bisamide>

The adhesive layer of the adhesive film may contain saturated fatty acid bisamide having an effect of suppressing adhesiveness increase.

Examples of the saturated fatty acid bisamide include, but are not limited to, saturated fatty acid aliphatic bisamides such as ethylene bis stearic acid amide (EBSA), methylene bis stearic acid amide, and hexamethylene bis stearic acid amide; and saturated fatty acid aromatic bisamides such as m-xylylene bis stearic acid amide, and N,N'-distearylisophthalic acid amide.

One of these saturated fatty acid bisamides may be singly used, or two or more of these may be used in combination.

Besides, in the saturated fatty acid bisamide, a styrene-based block phase reinforcing agent having an effect of suppressing adhesiveness increase may be compounded. Examples of the styrene-based block phase reinforcing agent include, but are not limited to, as a monomer unit, styrene, and styrene-based compounds such as α-methylstyrene, p-methylstyrene, p-chlorostyrene, chloromethylstyrene, tert-butylstyrene, p-ethylstyrene, and divinylbenzene. One of these may be singly used, or two or more of these may be used in combination.

### <Method for Producing Resin Material Constituting Adhesive Layer of Adhesive Film>

A resin material constituting the adhesive layer of the adhesive film of the present embodiment can be produced, for example, by a method in which the hydrogenated block copolymer (I) of the present embodiment, and other components added if necessary are dry-blended, or a method in which these components are mixed in an apparatus usually used for mixing polymer materials.

The mixer is not especially limited, and examples include a kneader such as a Bunbury mixer, a Labo Plasto Mill, a single screw extruder, or a twin screw extruder, and production by a melt kneading method using an extruder is preferred from the viewpoint of productivity and good kneadability.

Besides, particularly when the tackifier is compounded in the adhesive layer, the dry-blending method may be employed, but since the tackifier is poor in handleability because it is strongly sticky, and in the form of a flake, a master batch may be produced by precedently blending the tackifier in the hydrogenated block copolymer (I) of the present embodiment. The melting temperature in the kneading can be appropriately set, and is usually in the range of 130 to 300°C, and preferably in the range of 150 to 250°C.

The resin material constituting the adhesive layer may be subjected to a foaming treatment for obtaining effects for improving weight reduction, flexibility, and adhesion. Examples of the foaming method include, but are not limited to, a chemical method, a physical method, and use of a thermal expansion microballoon. In these methods, foams can be distributed within the material by adding a chemical foaming agent such as an inorganic foaming agent or an organic foaming agent, adding a physical foaming agent, or adding a thermal expansion microballoon. Alternatively, weight reduction, flexibility, and adhesion may be improved by adding a hollow filler (pre-inflated balloon).

### <Method for Producing Adhesive Film>

The adhesive film includes, on the base film, the adhesive layer containing the hydrogenated block copolymer (I) of the present embodiment.

A method for producing the adhesive film is not especially limited, and examples include a method in which a solution or a melt of the resin material constituting the adhesive layer is coated on the base film, and a method using a film extruder.

Here, when a solution or a melt of the resin material constituting the adhesive layer is used, the solution or the melt may be obtained after obtaining a resin composition, or another material may be mixed with the solution or the melt of the hydrogenated block copolymer (I).

An example of the method in which the solution of the resin material is coated includes a method in which the material is dissolved in a solvent capable of dissolving it, the resultant is coated on the base film with a coater or the like, and the solvent is dried by heating. An example of the method in which the resin material is melted and coated includes, but is not limited to, a method in which the melted resin material is coated on the base film with a hot melt coater or the like. In this case, any of various base films having a glass transition temperature, a melting point, or a softening point higher than the coating temperature is preferably used.

An example of the method using a film extruder includes, but is not limited to, a method in which two flows of the components of the adhesive layer including the resin material and components, such as a thermoplastic resin, that can constitute the base film are formed, namely, an adhesive layer forming fluid and a base film forming fluid, are joined to each other in a die hole in a melt coextruder to form and extrude a single fluid, thereby compositely forming an adhesive layer and a resin film layer. In the method using a film extruder, the resin material to be used for forming the adhesive layer can be produced also by precedently dry-blending the respective components of the adhesive layer, and hence this method is excellent in productivity. Besides, when the extrusion molding is employed, the adhesive film thus produced tends to be particularly excellent in adhesion and adhesive strength.

The adhesive film may be temporarily adhered to the surface of an optical molded article such as a light guide plate, or a prism sheet, a synthetic resin plate, a metal plate, a decorative plywood, a coated steel plate, and various nameplates to be used as a protection film for protecting such an adherend from damage and pollution at the time of processing, transportation, and storage.

### [Second Molded Article]

The second molded article is a molded article of the hydrogenated block copolymer composition of the present embodiment.

Examples of the second molded article include, but are not limited to, a vehicle member such as a vehicle interior skin material, a sheet-shaped molded article (a sheet or a film), a drinking water pipe, a drinking water tube, a packaging material such as food packaging material or a clothing packaging material, an adhesive film for a protection film, and an overmolded article with a polar resin.

### (Overmolded Article)

Since the hydrogenated block copolymer composition of the present embodiment tends to exhibit adhesiveness to a polar resin, a multilayer molded article overmolded with a polar resin (overmolded article) can be formed therefrom.

When the overmolded article includes a layer containing a polar resin, and a layer formed thereon and containing a thermoplastic elastomer composition containing the hydrogenated block copolymer (I) of the present embodiment, it is excellent in adhesiveness.

### <Polar Resin>

Examples of the polar resin include, but are not limited to, polyacrylic acid esters such as polyvinyl chloride, ABS, an acrylonitrile-styrene copolymer, polyacrylic acid, and methyl polyacrylate, polymethacrylic acid esters such as polymethacrylic acid and methyl polymethacrylate, polyvinyl alcohol, polyvinylidene chloride, polyethylene terephthalate, polyamide, polyacetal, polycarbonate, polybutylene terephthalate, polyvinylidene fluoride, polysulfone, polyether sulfone, polyphenylene sulfide, polyarylate, polyamide imide, polyether imide, polyether ketone, polyether ether ketone, polyimide, a liquid crystal polymer, polytetrafluoroethylene, a phenol resin, a urea resin, a melamine resin, unsaturated polyester, an epoxy resin, and polyurethane.

One of the polar resins may be singly used, or two or more of these may be used in combination.

The layer containing the polar resin may contain a filler in addition to the polar resin.

Examples of the filler used in the layer containing the polar resin include, but are not limited to, fibrous inorganic fillers such as glass fiber, glass beads, glass hollow beads, carbon fiber, cellulose nanofiber, wollastonite, potassium titanate whisker, calcium carbonate whisker, aluminum borate whisker, magnesium sulfate whisker, sepiolite, xonotlite, and zinc oxide whisker, talc, calcium carbonate, calcium oxide, zinc carbonate, wollastonite, zeolite, wollastonite, silica, alumina, clay, titanium oxide, magnesium hydroxide, magnesium oxide, sodium silicate, calcium silicate, magnesium silicate, sodium aluminate, calcium aluminate, sodium aluminosilicate, zinc oxide, potassium titanate, hydrotalcite, barium sulfate, titanium black, and carbon black such as furnace black, thermal black, and acetylene black.

The fibrous fillers may be surface-treated with a compound having a group having affinity to or reactive with the polar resin.

One of the fillers may be singly used, or two or more of these may be used.

### <Thermoplastic Elastomer Composition>

When the hydrogenated block copolymer (I) of the present embodiment is combined with a rubbery polymer, the thermoplastic elastomer composition can be obtained.

The rubbery polymer contains a vinyl aromatic monomer unit, and preferably contains at least one polymer block principally containing a vinyl aromatic monomer unit, and a rubber or elastomer that contains a vinyl aromatic monomer unit, and has a content of the vinyl aromatic monomer unit of 60% by mass or less is also preferred.

Examples of the rubbery polymer include styrene butadiene rubber, and a hydrogenated product thereof (excluding, however, the hydrogenated block copolymer (I) of the present embodiment), a styrene-butadiene block copolymer and a hydrogenated product thereof, and a styrene-butadiene-isoprene block copolymer and a hydrogenated product thereof.

The thermoplastic elastomer composition may contain a thermoplastic resin.

Examples of the thermoplastic resin include, but are not limited to, olefin-based polymers such as polypropylene, polyethylene, an ethylene-propylene copolymer rubber (EPM), and an ethylene-propylene-nonconjugated diene copolymer rubber (EPDM); polyester-based polymers such as a polyester elastomer, polyethylene terephthalate, and polybutylene terephthalate; polyamide-based resins such as polyamide-6, polyamide-6,6, polyamide-6,10, polyamide-11, polyamide-12, and polyamide-6,12; acrylic-based resins such as methyl polyacrylate, and methyl polymethacrylate; polyoxymethylene-based resins such as a polyoxymethylene homopolymer and a polyoxymethylene copolymer; styrene-based resins such as a styrene homopolymer, an acrylonitrile-styrene resin, and an acrylonitrile-butadiene-styrene resin; a polycarbonate resin; styrene-based elastomers such as a styrene-butadiene copolymer rubber, and a styrene-isoprene copolymer rubber, and a hydrogenated product or modified product thereof; chloroprene rubber; acrylic rubber; butyl rubber; acrylonitrile-butadiene rubber; epichlorohydrin rubber; silicone rubber; fluororubber; chlorosulfonated polyethylene; urethane rubber; a polyurethane-based elastomer; a polyamide-based elastomer; a polyester-based elastomer; and a soft vinyl chloride resin.

One of these thermoplastic resins may be singly used, or two or more of these may be used together.

The thermoplastic elastomer composition may contain a softener.

Examples of the softener include, but is not limited to, a paraffin-based oil, a naphthene-based oil, an aromatic oil, paraffin wax, liquid paraffin, a white mineral oil, and a plant-based softener.

The kinematic viscosity at 40°C of the softener is preferably 500 mm²/sec or less. The lower limit of the kinematic viscosity at 40°C of the softener is not especially limited, and is preferably 10 mm²/sec or more.

When the kinematic viscosity at 40°C of the softener is 500 mm²/sec or less, the flowability of the thermoplastic elastomer composition tends to be further improved, thereby further improving the molding processability. The kinematic viscosity of the softener can be measured by a test method using a glass capillary viscometer, or the like.

The thermoplastic elastomer composition may further contain an olefin-based resin, and an olefin-based elastomer.

Examples of the olefin-based resin and the olefin-based elastomer include, but are not limited to, an α-olefin polymer or copolymer having 2 to 20 carbon atoms, and a copolymer of ethylene and an unsaturated carboxylic acid or an unsaturated carboxylic acid ester. Specific examples include an ethylene-propylene copolymer, an ethylene-1-butene copolymer, an ethylene-1-hexene copolymer, an ethylene-4-methylpentene copolymer, an ethylene-1-octene copolymer, a propylene homopolymer, a propylene-ethylene copolymer, a propylene-ethylene-1-butene copolymer, a 1-butene homopolymer, a 1-butene-ethylene copolymer, a 1-butene-propylene copolymer, a 4-methylpentene homopolymer, a 4-methylpentene-1-propylene copolymer, 4-methylpentene-1-butene copolymer, 4-methylpentene-1-propylene-1-butene copolymer, a propylene-1-butene copolymer, an ethylene-vinyl acetate copolymer, an ethylene-methacrylic acid copolymer, and an ethylene-methyl methacrylate copolymer.

The thermoplastic elastomer composition may contain a tackifier.

Examples of the tackifier include, but are not limited to, a coumarone-indene resin, a p-t-butylphenol-acetylene resin, a phenol-formaldehyde resin, a xylene-formaldehyde resin, a terpene resin, a hydrogenated terpene resin, a terpene-phenol resin, a hydrogenated terpene-phenol resin, an aromatic modified terpene resin, an aromatic modified hydrogenated phenol resin, a styrene resin, an alpha-methyl styrene resin, an aromatic hydrocarbon resin, an aliphatic hydrocarbon resin, an aliphatic cyclic hydrocarbon resin, an aliphatic/alicyclic petroleum resin, an aliphatic/aromatic hydrocarbon resin, a hydrogenated modified alicyclic hydrocarbon resin, a hydrogenated alicyclic hydrocarbon resin, a hydrocarbon-based tackifying resin, polybutene, liquid polybutadiene, cis-1,4-polyisoprene rubber, hydrogenated polyisoprene rubber, liquid polyisoprene rubber, and a rosin resin.

The thermoplastic elastomer composition containing the hydrogenated block copolymer (I) of the present embodiment may further contain, in addition to the above-described components, an additional additive as long as the object of the present embodiment is not impaired.

Examples of the additional additive include a heat stabilizer, an antioxidant, a UV absorber, an anti-aging agent, a plasticizer, a light stabilizer, a crystal nucleating agent, an impact modifier, a pigment, a lubricant, an antistatic agent, a flame retardant, a flame retardant aid, a compatibilizer, and a tackifier.

One of these additives may be singly used, or two or more of these may be used in combination.

### <Method for Producing Thermoplastic Elastomer Composition>

The thermoplastic elastomer composition can be produced by a conventionally known method, which is not especially limited.

For example, a melt kneading method using a general mixer such as a pressure kneader, a Bunbury mixer, an internal mixer, a Labo Plasto Mill, a mix labo, a single screw extruder, a twin screw extruder, a Ko kneader, or a multi-screw extruder, a method in which the respective components are dissolved or dispersed to be mixed, followed by removal of a solvent by heating, or the like is employed.

The shape of the thermoplastic elastomer composition is not especially limited, and can be, for example, a pellet shape, a sheet shape, a strand shape, a chip shape, or the like. After the melt kneading, a molded article may be directly produced.

### <Method for Producing Overmolded Article>

The overmolded article is not especially limited in the number of laminated layers as long as it includes one or more layers containing the thermoplastic elastomer composition containing the hydrogenated block copolymer (I) of the present embodiment, and one or more layers containing the polar resin.

A method for forming the layers of the overmolded article is not especially limited, and any of conventionally known methods, such as extrusion molding, injection molding (insert molding), two-color injection molding, sandwich molding, blow molding, compression molding, vacuum molding, rotational molding, powder slush molding, foam molding, laminate molding, calendar molding, and blow molding, can be employed.

In the overmolded article, the layer containing the thermoplastic elastomer composition containing the hydrogenated block copolymer (I) of the present embodiment is preferably heat welded to the layer containing the polar resin. More specifically, the method for producing the overmolded article includes a step of molding the layer containing the thermoplastic elastomer composition on the precedently molded layer containing the polar resin by employing at least one method selected from the group consisting of an injection molding method, an insert molding method, an extrusion molding method, and a compression molding method. The method for producing the overmolded article may include, before this step, a step of molding the layer containing the polar resin by an arbitrary method, and preferably by at least one method selected from the group consisting of an injection molding method, an insert molding method, an extrusion molding method, and a compression molding method.

The overmolded article can be formed into a shape according with various uses such as a vehicle component, a tool, a toy, an electric/electronic device component, a medical tool, a building/piping member, a cutlery, a household/cosmetic item, an industrial part, various types of hoses, various types of housings, various types of module cases, various types of power control unit components, a writing instrument, a robot hand, and a medical tool. Among these, those having a handle, and those necessary to have a grip force or a good sense of touch when touched by a human are preferred. Examples of such molded articles include a tool, an electric wire, a connector, a handy electronic device, a tooth brush, a shaver, pens such as a ballpoint pen, a touch pen, and a stylus pen, cutleries such as a fork, a knife, and a spoon, and a vehicle interior member having a grip portion. In particular, an electric tool that applies a large load to a human body because of vibration caused in use is preferred. As a member constituting a grip portion, for example, at least one selected from a tool grip, an electric wire covering member, a connector housing, a grip of a handy electronic device, a grip of a tooth brush, a grip of a shaver, a grip of a cutlery, a grip of a writing instrument, a grip portion of a robot hand, and a grip portion of a vehicle interior member is preferably constituted.

### [Third Molded Article]

The third molded article is a molded article of a resin composition containing the hydrogenated block copolymer (I) of the present embodiment in an amount of 5 to 99% by mass, or 5 to 80% by mass, or over 8% by mass and 60% by mass or less, or 10 to 30% by mass, or less than 70% by mass based on the total mass of the resin composition in accordance with the purpose, and containing, as another resin component, 10 to 40% by mass of a polyolefin resin.

The resin composition constituting the third molded article further contains a radical generating compound also referred to as a curing agent or a curing initiator. Examples of the radical generating compound include, but are not limited to, an azide, a peroxide, sulfur, and a sulfur derivative. A free radical initiator is particularly preferred as a curing initiator.

A radical generating compound also referred to as a curing catalyst generates a radical under a high temperature condition, or under application of induction energy of UV or the like. Owing to the radical generating compound, the resin composition can be processed at a low temperature even in the absence of UV or another induction energy, and definitely generates a radical at a high concentration at an activation temperature or under application of UV or induction energy. Examples of the radical generating compound include arbitrary compounds capable of generating a radical at a high temperature or under application of induction energy of UV or the like.

Examples of the radical generating compound include organic peroxides such as 2,5-dimethyl-2,5-di(t-butylperoxy)-hex-3-yne, di-5-butylperoxide, t-butylcumyl peroxide, di(t-butylperoxy-isopropyl) benzene, 2,5-dimethyl-2,5-di(t-butylperoxy) hexane, and dicumyl peroxide.

Examples of a typical non-peroxy initiator used as the radical generating compound include compounds such as 2,3-dimethyl-2,3-diphenylbutane, and 2,3-trimethylsilyloxy-2,3-diphenylbutane.

An example of a typical UV radical initiator used as the radical generating compound includes 2,2-dimethoxy-1,2-diphenylethane-1-on.

The curing initiator is used, in accordance with the purpose, preferably in an amount of 0.1 to 10% by mass, or 0.3 to 7% by mass, or 1 to 5% by mass in the resin composition.

The resin composition constituting the third molded article can contain another additive known in this technical field such as a polyfunctional co-curing additive, a diene-based rubber, a halogenated or non-halogenated flame retardant, an inorganic or organic filler or fiber, a monovinyl compound, an antioxidant, a colorant or a stabilizer, an adhesion promoter, a strengthener, or a film forming additive. Besides, one or more additives not limited to the above may be further contained in an amount of 0.1 to 50% by mass of the resin composition.

The resin composition preferably further contains at least an inorganic and/or organic filler. The organic filler may be used for suppressing a coefficient of thermal expansion, and improving toughness of a laminated sheet. The organic filler may be used for reducing the dielectric constant of the laminated sheet.

Examples of the third molded article include, but are not limited to, a prepreg, a metal clad laminate, a CCL, a printed wiring board, a multilayer wiring board, and an electronic device.

### (Prepreg, and Metal Clad Laminate)

The hydrogenated block copolymer (I) of the present embodiment can be used in a dielectric compound for a metal clad laminate, and a printed circuit board produced therefrom. When the hydrogenated block copolymer (I) of the present embodiment is used, a resin composition having good processability, a low solution viscosity, effective curing ability, a high softening point, a low loss tangent at a high frequency, and a low dielectric constant property can be obtained, and in addition, when the resin composition is used, a prepreg and a metal clad laminate excellent in adhesion to a metal foil or an insulating layer can be obtained.

A prepreg refers to an impregnated fabric obtained by impregnating a base fabric or a reinforcement fabric with a resin composition.

A metal clad laminate or a CCL refers to a substrate of a printed circuit board or a circuit board. A CCL is obtained by laminating a metal such as a copper clad on one surface or both surfaces of a reinforcement material (such as a fiber glass fabric) having been impregnated with a resin composition.

Specifically, a CCL is obtained by laminating, for example, one or more layers of a prepreg on one or more layers of a copper foil. The lamination is attained by pressing a pile of one or more pairs of copper and a prepreg at a high temperature, at a high pressure, and under vacuum condition.

A printed circuit board can be obtained by creating an electronic circuit through etching of a copper surface of a CCL. The etched CCL is assembled into a multilayer structure including a hole penetrated and plated for establishing electric connection between layers.

In the production of such a prepreg or a metal clad laminate, a solvent may be added for adjusting a solid content in a resin composition, and for adjusting the viscosity of the resin composition.

Examples of the solvent include, but are not limited to, ketones such as methyl ethyl ketone, ethers such as dibutyl ether, esters such as ethyl acetate, amides such as dimethylformamide, aromatic hydrocarbons such as benzene, toluene, and xylene, and chlorinated hydrocarbons such as trichloroethylene. One of these solvents may be singly used, or a combination of these may be used.

A preferable solvent is selected from the group consisting of methanol, ethanol, ethylene glycol methyl ether, acetone, methyl ethyl ketone, methyl isobutyl ketone, cyclohexanone, toluene, xylene, methoxy ethyl acetate, ethoxy ethyl acetate, propoxy ethyl acetate, ethyl acetate, dimethylformamide, propylene glycol methyl ether, gamma-butyrolactone (GBL), and diisobutyl ketone (DIBK).

The amount of the solvent to be used depends on the solubility of components, the amount of a filler, an application method, and other factors. The amount of the solvent to be used is preferably adjusted so that a solid content is contained in an amount of 10 to 50% by mass, or 15 to 40% by mass with respect to a total mass of a solution and the solid content.

To the resin composition, at least one of the following additives may be further added: a coupling agent, a curing accelerator, a surfactant, a strengthener, a viscosity modifier, a wetting agent, an antioxidant, and a colorant.

The selection of the additive depends on a use, and a desired property for enhancing or for not substantially harmfully affecting an electric property of a circuit subassembly, such as a dielectric constant, a loss tangent, a dielectric loss and/or another desired property.

The curing accelerator is added for increasing a reaction rate of the resin composition.

The surfactant is added for definitely distributing an inorganic filler homogeneously in the resin composition, and for preventing agglomeration of the inorganic filler.

The strengthener is added for improving toughness of the resin composition.

The resin composition can further contain, in an amount of 0.1 to 2% by mass in the entire resin composition, an adhesion promoter known in this technical field, for example, a metal adhesion promoter such as a N-containing heterocycle capable of forming a complex with a metal foil. Thus, adhesion between the metal foil and the resin composition layer can be enhanced. The adhesion promoter may be contained in a resistive metal layer in the form of a solution or a dispersion liquid in water or an organic solvent.

The resin composition may further contain 15% by mass or less of an adhesion promoting polymer selected from poly(arylene ether), carboxy-functionalized poly(arylene ether), and styrene-ethylene/butylene-styrene (SEBS) functionalized with maleic anhydride.

Specifically, a curable resin composition preferably contains a diene-based rubber as a curing initiator and co-curing additive selected from a copolymer, a sulfur curing agent, and a peroxide curing agent.

The resin composition may further contain a soluble polymer such as a polyphenylene oxide resin, polyolefin, a styrene-based polymer, a styrene-based block copolymer, a hydrogenated styrene-based block copolymer, or a high-Tg hydrocarbon polycycloolefin. These polymers are used in a small amount for modifying the resin composition, and improving the film forming ability, the impact resistance, the Tg, and the processing property thereof.

The amount of an optionally selective additive in the resin composition containing the hydrogenated block copolymer of the present embodiment can be set, in accordance with the purpose, in the range of 0.1 to 25% by mass, or over 0.2% by mass, or over 0.5% by mass, or less than 10% by mass, or less than 15% by mass with respect to the total amount of the resin composition.

The resin composition is suitably used in a laminate for a printed circuit board, such as a copper clad laminate. A laminate is produced by impregnating a substrate or a reinforcement material, such as a glass fiber, a fabric, or a cross-ply laminate, with a resin composition, and subsequently partially or wholly curing the resin composition for forming a prepreg. For producing a laminate, one or more layers of copper are laminated on one or more layers of a prepreg. A printed circuit board can be used in a large number of electric and electronic uses for high frequency and high data rate.

As one method for producing a high frequency CCL or circuit board, for example, the following method is employed.

A resin mixture is obtained by mixing the above-described components including the hydrogenated block copolymer (I) of the present embodiment, a curing initiator, and an optionally selective component, such as a polyfunctional co-curing agent of a diene-based polymer or the like, a flame retardant, and another optionally selective component, the resin mixture is diluted to an appropriate viscosity with a solvent, such as toluene, xylene, MEK (methyl ethyl ketone), or a mixture thereof, and thus, a glue or varnish is formed. A reinforcement material or a substrate, such as fiber, glass felt, wood pulp paper, a fiber glass fabric (optionally selectively precedently treated with a coupling agent), is impregnated with the glue or the varnish to a desired thickness. Next, the solvent is removed from the impregnated fiber glass fabric by solvent evaporation, and thus, a prepreg is formed.

The prepreg is formed by evaporating the solvent at a temperature lower than an activation temperature of the curing initiator, or over a time sufficient for evaporating the solvent but not as long as a gelation time. The gelation time refers to a time from start of softening a material to occurrence of gelation, and the gelation is irreversible change from a viscous liquid to an elastic gel. The prepreg is formed by impregnating a resin in a substrate, such as a fiber product, and semi-curing the resultant impregnated substrate, or thermally pressing coated fiber with or without another resin composition.

Next, the prepreg is laminated between copper foils, and the resultant is cured at a temperature of 150 to 250°C and a pressure of 20 kg/cm² to 70 kg/cm², and thus, a high frequency CCL or circuit board is formed.

### [Foam Body]

The molded article of the present embodiment may be a foam body.

The foam body of the present embodiment is obtained usually by adding a foaming agent (V) to the hydrogenated block copolymer composition of the present embodiment, and foaming the resultant.

A foaming method can be a chemical method or a physical method, and in either method, after adding a chemical foaming agent such as an inorganic foaming agent or an organic foaming agent, or a physical foaming agent, the foaming agent is volatilized and/or decomposed by heating or the like, so that foams may be distributed in the hydrogenated block copolymer composition. When the hydrogenated block copolymer composition is formed as a foam body, the weight can be reduced, the flexibility can be improved, design can be improved, a vibration controlling/sound absorbing property can be improved, and a thermal insulating property can be improved.

### (Foaming Agent (V))

As the foaming agent, an inorganic foaming agent, an organic foaming agent, or a physical foaming agent can be used.

Examples of the inorganic foaming agent include, but are not limited to, sodium bicarbonate, ammonium carbonate, ammonium bicarbonate, ammonium nitrite, an azide compound, sodium borohydride, aluminum acetate, and a metal powder.

Examples of the organic foaming agent include, but are not limited to, azodicarbonamide, azobisformamide, azobisisobutyronitrile, barium azodicarboxylate, N,N'-dinitrosopentamethylenetetramine, N,N'-dinitroso-N,N'-dimethylterephthalamide, benzenesulfonyl hydrazide, p-toluenesulfonyl hydrazide, p,p'-oxybisbenzenesulfonyl hydrazide, and p-toluenesulfonyl semicarbazide.

Examples of the physical foaming agent include, but are not limited to, hydrocarbons such as pentane, butane, and hexane; halogenated hydrocarbons such as methyl chloride and methylene chloride; a gas such as nitrogen, carbon dioxide, and air; and fluorinated hydrocarbons such as trichlorofluoromethane, dichlorodifluoromethane, trichlorotrifluoroethane, chlorodifluoroethane, and hydrofluorocarbon.

These foaming agents may be used in combination.

An amount of the foaming agent to be compounded is, in terms of an outside amount, preferably 0.1 to 30 parts by mass, more preferably 2 to 25 parts by mass, and further preferably 3 to 20 parts by mass with respect to 100 parts by mass of the hydrogenated block copolymer or the hydrogenated block copolymer composition of the present embodiment.

### (Foaming Aid)

In the process for producing the foam body, a foaming aid may be used together with the foaming agent.

The foaming aid is not especially limited, and those generally conventionally used as a foaming aid can be used.

Examples include a urea compound, a zinc compound such as zinc oxide, zinc stearate, zinc benzenesulfinate, zinc toluenesulfonate, zinc trifluoromethanesulfonate, and zinc carbonate, and a lead compound such as lead dioxide, and tribasic lead.

When the foaming agent and the foaming aid are used together, the amount of the foaming aid to be compounded is, with respect to 100 parts by mass of the foaming agent, preferably 0.1 to 1,000 parts by mass, more preferably 0.5 to 500 parts by mass, and further preferably 1 to 200 parts by mass.

### (Nucleating Foaming Agent)

In the process for producing the foam body, a nucleating foaming agent may be used.

The nucleating foaming agent is not especially limited, and those generally conventionally used as a nucleating foaming agent can be used.

Examples include titanium oxide, talc, kaolin, clay, calcium silicate, silica, sodium citrate, calcium carbonate, diatomite, calcined perlite, zeolite, bentonite, glass, limestone, calcium sulfate, aluminum oxide, titanium oxide, magnesium carbonate, sodium carbonate, ferrous carbonate, and a polytetrafluoroethylene powder.

An amount of the nucleating foaming agent to be compounded is preferably 0.01 to 100 parts by mass, more preferably 0.05 to 50 parts by mass, and further preferably 0.1 to 10 parts by mass with respect to 100 parts by mass of the hydrogenated block copolymer composition.

### (Use Examples of Foam Body)

The foam body of the present embodiment can be applied to an injection molded article, a blow molded article, a compression molded article, a vacuum molded article, an extrusion molded articles and the like in the shape of a sheet or a film, or other various shapes.

The foam body of the present embodiment can be widely used in a member requiring a cushioning property, such as a vehicle interior material (of an instrument panel, a door panel, a sheet back panel, a steering wheel, and the like), a home appliance, a tool, furniture (a cushion portion or the like), or a building material.

When the foam body of the present embodiment is used in a vehicle interior material, the foaming agent to be used is preferably sodium bicarbonate, nitrogen, or a gas such as carbon dioxide or air from the viewpoint of low health harmfulness.

### (Method of Injection Molding Foaming)

The foam body of the present embodiment can be produced by injection molding foaming.

An injection molding foaming method is not especially limited, and examples include a short shot method, a full shot method, and a core back method.

When these methods are employed, a foam layer having a cushioning property, and a skin layer having design of a leather-like surface, and harder than the foam layer can be molded in one and the same process, and therefore, these methods are effective for reducing molding processes.

Besides, when the core back method is employed as the injection molding foaming method, a counter-pressure device may be used for purposes of eliminating a swirl mark formed on the surface of a molded article.

### (Hydrogenated Block Copolymer Composition Suitable to Molding of Foam Body)

In molding the foam body, a content of the hydrogenated block copolymer (I) in the hydrogenated block copolymer composition of the present embodiment is preferably 1% by mass or more and 50% by mass or less, more preferably 10% by mass or more and 49% by mass or less, and further preferably 20% by mass or more and 48% by mass or less.

When the content of the hydrogenated block copolymer (I) in the hydrogenated block copolymer composition falls in the above-described range, foams tend to be fine and highly independent (have a high foaming property) in molding the foam body, and therefore, improvement in thermal insulation, foam stability for a long time, and improvement in molded appearance in core back molding (suppression of a sink mark, a pock mark, a swirl mark and the like) can be expected.

Besides, the MFR, measured under conditions of a temperature of 230°C and a load of 2.16 kg in accordance with JIS K7210, of the hydrogenated block copolymer (I) of the present embodiment is 10 or more, and in the hydrogenated block copolymer (I) in the hydrogenated copolymer composition used in the foam body molding, the MFR is preferably 15 or more, more preferably 30 or more, and further preferably 50 or more.

When the MFR is high, good processability is obtained, and improvement in molded appearance (suppression of a sink mark, a pock mark, a swirl mark and the like) in molding the foam body, and improvement of a foaming ratio can be expected.

A preferable range of the foaming ratio depends on the use, and in general, is preferably 1.5-fold or more, and more preferably 1.75-fold or more. When the ratio is high, the weight can be reduced, the flexibility can be improved, the design can be improved, a vibration controlling/sound absorbing property can be improved, and a thermal insulating property can be improved.

The content of the olefin-based resin (II) in the hydrogenated block copolymer composition used in the foam body molding is preferably 5% by mass or more and 50% by mass or less, more preferably 8% by mass or more and 45% by mass or less, and further preferably 12% by mass or more and 40% by mass or less.

When the content of the olefin-based resin (II) falls in the above-described range, balance between the foaming property and the flexibility tends to be good.

The content of the thermoplastic resin (III) in the hydrogenated block copolymer composition used in the foam body molding is preferably 1% by mass or more and 50% by mass or less, more preferably 5% by mass or more and 40% by mass or less, and further preferably 10% by mass or more and 30% by mass or less.

When the content of the thermoplastic resin (III) falls in the above-described range, balance between the foaming property and the flexibility tends to be good.

The content of the softener (IV) in the hydrogenated block copolymer composition used in the foam body molding is preferably 5% by mass or more and 90% by mass or less, more preferably 10% by mass or more and 70% by mass or less, and further preferably 20% by mass or more and 36% by mass or less.

When the content of the softener (IV) falls in the above-described range, balance between the foaming property and the flexibility tends to be good.

### Examples

Now, the present embodiment will be described in detail with reference to specific examples and comparative examples, and it is noted that the present invention is not limited to these examples and comparative examples.

Measurement methods and evaluation methods of physical properties applied in the examples and comparative examples are as follows.

### [Method for Specifying Structure of Hydrogenated Block Copolymer]

### ((1) Content of All Vinyl Aromatic Monomer Units (styrene) in Hydrogenated Block Copolymer (I))

A block copolymer before hydrogenation was used to measure a content of all vinyl aromatic monomer units (styrene) with a UV spectrophotometer (UV-2450, manufactured by Shimadzu Corporation).

### ((2-1) Content of Polymer Block (polystyrene block) (a) Principally Containing Vinyl Aromatic Monomer Unit in Hydrogenated Block Copolymer (I))

A block copolymer before hydrogenation was used, and the content of a polymer block (a) principally containing a vinyl aromatic monomer unit was measured by a method described by Y. Tanaka et al., RUBBER CHEMISTRY and TECHNOLOGY 54, 685 (1981) using a nuclear magnetic resonance apparatus (NMR).

### ((2-2) Content of Hydrogenated Copolymer Block (b) in Hydrogenated Block Copolymer (I))

When the hydrogenated block copolymer (I) did not contain a hydrogenated polymer block (c), this content was calculated as "100 - the content of the hydrogenated copolymer block (a) in the hydrogenated block copolymer (I)".

When the hydrogenated block copolymer (I) contained the hydrogenated polymer block (c), this content was calculated as "100 - the content of the hydrogenated copolymer block (a) in the hydrogenated block copolymer (I) - the content of the hydrogenated copolymer block (c) in the hydrogenated block copolymer (I)".

### ((2-3) Content of Polymer Block (Polystyrene Block) (c) Principally Containing Vinyl Aromatic Monomer Unit in Hydrogenated Block Copolymer (I))

At the time of the polymerization reaction, this content was calculated based on a ratio between a mass obtained by singly polymerizing a conjugated diene monomer and the mass of the hydrogenated block copolymer (I) .

### ((3-1) Vinyl Bond Content in Hydrogenated Block Copolymer (I))

A block copolymer before hydrogenation was used, and the vinyl bond content was measured with an infrared spectrophotometer (FT/IR-4100, manufactured by JASCO Corporation). The vinyl bond content in the block copolymer was calculated by the Hampton method.

### ((3-2) Vinyl Bond Content in Hydrogenated Copolymer Block (b))

A block copolymer before hydrogenation, which was sampled immediately before the polymerization of the copolymer block (b) corresponding to a state before the hydrogenation of the hydrogenated copolymer block (b) in the production of the hydrogenated block copolymer (I), and a block copolymer before hydrogenation sampled after the polymerization of the copolymer block (b) and immediately before the next block polymerization were used for measurement with an infrared spectrophotometer (FT/IR-4100, manufactured by JASCO Corporation), and vinyl bond contents x1 (% by mass) and x2 (% by mass) were respectively calculated by the Hampton method.

Assuming that conjugated diene contents in the block copolymer obtained immediately before the polymerization of the copolymer block (b) and after polymerization of the copolymer block (b), and immediately before starting next block polymerization, in the hydrogenated block copolymer (I), are X1 parts by mass and X2 parts by mass, since there is a relationship of X1 × x1 + xb × (X2 - X1) = X2 × x2, a vinyl bond content xb in the hydrogenated copolymer block (b) can be obtained as xb = (X2 × x2 - X1 × x1)/(X2 - X1).

For example, it is assumed that the polymer block (c) principally containing the conjugated diene monomer unit is polymerized in an amount of 30 parts by mass, that the copolymer block (b) is then polymerized in an amount of 50 parts by mass (in which the amount of the conjugated diene block is 40 parts by mass), and that the polymer block (c) is then polymerized in an amount of 20 parts by mass. In this case, if a vinyl bond content calculated in a sample immediately before the polymerization of the copolymer block (b) is 60% by mass, and a vinyl bond content obtained after the polymerization of the copolymer block (b) and immediately before starting the next polymer block (c) is 40% by mass, X1 = 30, X2 = 30 + 40 = 70, x1 = 60, x2 = 40, and therefore, the vinyl bond content xb in the copolymer block (b) is obtained as (70 × 40 - 30 ×60)/(70 - 30) = 25% by mass.

Besides, when there were a plurality of copolymer blocks (b) in the hydrogenated block copolymer (I), a vinyl bond rate in each copolymer block (b) was calculated, and an average of these rates was shown in Examples.

### ((3-3) Vinyl Bond Content in Hydrogenated Polymer Block (c))

A block copolymer before hydrogenation, which was sampled immediately before the polymerization of the polymer block (c) corresponding to a state before the hydrogenation of the hydrogenated polymer block (c) in the production of the hydrogenated block copolymer (I), and a block copolymer before hydrogenation sampled after the polymerization of the polymer block (c) and immediately before starting the next block polymerization were used for measurement with an infrared spectrophotometer (FT/IR-4100, manufactured by JASCO Corporation), and vinyl bond contents x1 (% by mass) and x2 (% by mass) were respectively calculated by the Hampton method.

Besides, assuming that conjugated diene contents in the block copolymer immediately before polymerization of the polymer block (c) and after polymerization of the polymer block (b), and immediately before starting next block polymerization, in the hydrogenated block copolymer (I), are X1 parts by mass and X2 parts by mass, a vinyl bond content xc in the polymer block (c) was calculated as (X2 × x2 - X1 × x1)/(X2 - X1) in the same manner as in (3-2) described above.

Besides, when there were a plurality of polymer blocks (c) in the hydrogenated block copolymer (I), a vinyl bond rate in each polymer block (c) was calculated, and an average of these rates was shown in Examples.

### ((4) Weight Average Molecular Weight of Hydrogenated Block Copolymer (I))

A weight average molecular weight of the hydrogenated block copolymer (I) was measured by GPC [apparatus: HLC-82209PC (manufactured by Tosoh Corporation), column: TSKgel guard column Super HZ-L (4.6 mm × 20 cm) × 3].

Tetrahydrofuran was used as a solvent. The measurement was performed at a temperature of 35°C.

As the weight average molecular weight, a molecular weight at a peak of a chromatogram was obtained by using a calibration curve obtained through measurement of commercially available standard polystyrene (created by using a peak molecular weight of standard polystyrene).

When there were a plurality of peaks in the chromatogram, an average molecular weight obtained based on molecular weights of the respective peaks and composition ratios corresponding to the respective peaks (obtained from an area ratio among the peaks in the chromatogram) was defined as the weight average molecular weight (Mw).

A molecular weight distribution (Mw/Mn) was calculated based on a ratio of Mw/Mn with a number average molecular weight (Mn) measured similarly by GPC.

### ((5) Hydrogeneration Rate of Double Bond of Conjugated Diene Monomer Unit in Hydrogenated Block Copolymer (I))

A hydrogenation rate of a double bond of the conjugated diene monomer unit was measured by using the hydrogenated block copolymer with a nuclear magnetic resonance apparatus (ECS400, manufactured by JEOL RESONANCE Inc.).

### ((6) Content of Vinyl Aromatic Monomer Unit in Hydrogenated Copolymer Block (b))

Based on a difference between the content of all vinyl aromatic monomer units in the hydrogenated block copolymer (I), which was measured with a block copolymer before hydrogenation used as a sample, and with a nuclear magnetic resonance apparatus (NMR) by a method described by Y. Tanaka, et al., RUBBER CHEMISTRY and TECHNOLOGY 54, 685 (1981) (hereinafter referred to as the "NMR method"), and a content of the polymer block (a) principally containing the vinyl aromatic monomer unit in the hydrogenated block copolymer (I), the content of the vinyl aromatic monomer unit in the copolymer block (b) in the entire polymer was calculated, and based on a ratio to the content of the hydrogenated copolymer block (b) in the hydrogenated block copolymer (I), the content of the vinyl aromatic monomer unit in the hydrogenated copolymer block (b) was calculated.

### [Method for Measuring Physical Properties of Hydrogenated Block Copolymer]

### ((1) tanδ Peak Temperature at -20 to 60°C)

First, a "pressed sheet" produced as described later was cut into a size with a width of 12.5 mm and a length of 40 mm to obtain a measurement sample.

Next, the measurement sample was set in an apparatus ARES (trade name, manufactured by TA Instruments Japan Inc.) to have a twisted geometry, and a tanδ peak temperature at -20 to 60°C was obtained under conditions of an effective measurement length of 25 mm, a strain of 0.5%, a frequency of 1 Hz, and a temperature increasing rate of 3°C/min.

The tanδ peak temperature was defined as a value obtained based on a peak detected by automatic measurement with RSI Orchestrator (trade name, manufactured by TA Instruments).

### ((2) Hardness)

Values of instantaneous hardness were measured respectively with a type A durometer and a type D durometer in accordance with JIS K6253.

A hardness value obtained at a moment when a probe of the durometer touched a measurement sample was measured.

In Tables 1 to 8 below, these hardness values are shown respectively as Hardness (JIS-A, instantaneous) and Hardness (JIS-D, instantaneous).

When the hardness measured with the type D durometer had a value less than 20, the value obtained with the type A durometer was used as the hardness value, and when the hardness measured with the type A durometer had a value over 90, the value obtained with the type D durometer was used.

As a guide, hardness of 94 measured with a type A durometer corresponds to hardness of 45 measured with a type D durometer.

### ((3) Melt Flow Rate (MFR, unit: g/10 min))

A MFR was measured in accordance with JIS K7210 under conditions of a temperature of 230°C and a load of 2.16 kg.

### ((4) Pellet Blocking Resistance (Blocking Ratio))

The blocking resistance of a pellet of the hydrogenated block copolymer was measured as follows.

In a metal cylinder having a diameter of 5 cm, 60 g of sample pellets of the hydrogenated block copolymer having the same shape (a cylindrical shape having a diameter of about 3 mm × 3 mm) was put, and a weight of 1,160 g was put thereon.

In this state, the resultant metal cylinder was heated in a gear oven heated to 60°C for 24 hours, and then, a state of adhesion among the pellets in the cylinder was observed.

Specifically, a lump of pellets taken out of the cylinder collapses (one poor in blocking resistance does not collapse, however), and hence the weight of a lump including three or more pellets was measured to obtain a weight ratio of the lump of pellets to the total weight (60 g) of the pellets, namely, a blocking ratio (%).

The blocking resistance was evaluated based on the following criteria.

The evaluation was performed after adding calcium stearate in an amount corresponding to 1,000 ppm to the sample pellets.

### <Evaluation Criteria>

10: The blocking ratio was less than 10% of the total weight.
9: The blocking ratio was 10% or more and less than 20% of the total weight.
8: The blocking ratio was 20% or more and less than 30% of the total weight.
7: The blocking ratio was 30% or more and less than 40% of the total weight.
6: The blocking ratio was 40% or more and less than 50% of the total weight.
5: The blocking ratio was 50% or more and less than 60% of the total weight.
4: The blocking ratio was 60% or more and less than 70% of the total weight.
3: The blocking ratio was 70% or more and less than 80% of the total weight.
2: The blocking ratio was 80% or more and less than 90% of the total weight.
1: The blocking ratio was 90% or more of the total weight.

A score that can be determined as acceptable blocking resistance is 5 or more, and it was evaluated that a higher score tends to be more excellent from the viewpoints of the blocking suppression during transportation, compounding easiness in molding a compound, and reduction of an anti-tack agent. When the blocking resistance of a pellet of the hydrogenated block copolymer is high, the blocking tends to be difficult to occur even in transportation for a longer time with a larger load, and in more severe temperature environment (as in, for example, a region with a high outside temperature, or a region with a wide range of temperature), and hence it can be expected that pellets are easily weighed and blended in molding a compound. Besides, since the amount of an anti-tack agent can be reduced, it can be expected to avoid device pollution, reduce environmental load, and suppress unexpected degradation of physical properties (for example, transparency, mechanical strength, or the like).

### [Method for Measuring Physical Properties of Hydrogenated Block Copolymer Composition]

### ((1) Processability (Melt Flow Rate (MFR, unit: g/10 min)))

An MFR of the hydrogenated block copolymer composition was measured in accordance with JIS K7210 under conditions of a temperature of 230°C and a load of 2.16 kg.

In the tables, a sample having an MFR value less than 20 (g/10 min) was scored as 1, a sample having an MFR value of 20 or more and less than 30 (g/10 min) was scored as 2, a sample having an MFR value of 30 or more and less than 60 (g/10 min) was scored as 3, a sample having an MFR value of 60 or more and less than 100 (g/10 min) was scored as 4, and a sample having an MFR value of 100 (g/10 min) or more was scored as 5, and these scores are shown as evaluation of processability.

A score that can be determined as acceptable processability is 2 or more, and it was evaluated that a higher score tends to be more excellent from the viewpoints of improvement of the surface appearance, molding using a complicated mold, thickness reduction, and improvement of freedom in compounding (amount reduction of a processing aid such as a softener).

When the processability of the hydrogenated block copolymer composition is good, a striped pattern such as a flow mark is not caused in injection molding, and a molded article having a good surface appearance is obtained. Besides, molding can be performed using a more complicated mold, or using a thin mold, and hence the weight of the resultant article can be reduced owing to a use of a resin as a material, or thickness reduction. Furthermore, higher processability tends to be advantageous to improvement of surface appearance, molding using a complicated mold, and thickness reduction. In addition, as the processability is higher, the amount of a processing aid such as the softener (IV) in the hydrogenated block copolymer composition can be reduced, and therefore, improvement of the freedom in compounding, improvement of mechanical strength and sense of touch of the material, reduction of environmental load, and the like can be expected.

### ((2) Heat Resistance (70°C C-Set (%)))

A compression set test of the hydrogenated block copolymer composition was performed in accordance with JIS K6262. The measurement conditions were set to a temperature of 70°C and 22 hours.

Scores based on the following evaluation criteria in accordance with a C-set value are shown.

### <Evaluation Criteria>

7: The C-set value at 70°C was less than 72%.
6: The C-set value at 70°C was 72% or more and less than 77%.
5: The C-set value at 70°C was 77% or more and less than 82%.
4: The C-set value at 70°C was 82% or more and less than 87%.
3: The C-set value at 70°C was 87% or more and less than 92%.
2: The C-set value at 70°C was 92% or more and less than 97%.
1: The C-set value at 70°C was 97% or more.

A score that can be determined as acceptable heat resistance is 4 or more, and it was evaluated that a higher score tends to be more excellent from the viewpoints of sense of touch (leather-texture touch) of the material in a long-term/high temperature use, and shape retention (resistance against deformation by heat).

When the heat resistance is good, the composition can be used in a use, as a vehicle material and the like, requiring more severe heat resistance.

For example, in a use as a vehicle interior material or the like, also in molding into a smaller thickness or in molding a more complicated/larger molded article, the sense of touch (leather-texture touch) of the material and the shape retention (resistance against deformation by heat) can be expected even in a long-term use comparably to a compact general molded article in a simple shape. Besides, the sense of touch (leather-texture touch) of the material and the shape retention (resistance against deformation by heat) can be expected for a long time even in a region with a higher outside temperature.

### ((3) Wear Resistance)

A color fastness rubbing tester (AB-301, manufactured by Tester Sangyo Co., Ltd.) was used to rub a surface (leather-textured surface) of a molded sheet produced as described in [Production of Injection Molded Sheet] below with a rubbing cloth canequim #3 under a load of 500 g, and the wear resistance was evaluated in accordance with a volume decrease caused by the rubbing based on the following criteria:

### <Evaluation Criteria>

6: A volume decrease caused by 25,000 times of rubbing was less than 50 mg.
5: A volume decrease caused by 25,000 times of rubbing was 50 mg or more and less than 100 mg.
4: A volume decrease caused by 25,000 times of rubbing was 100 mg or more and less than 150 mg.
3: A volume decrease caused by 25,000 times of rubbing was 150 mg or more and less than 200 mg.
2: A volume decrease caused by 25,000 times of rubbing was 200 mg or more and less than 250 mg.
1: A volume decrease caused by 25,000 times of rubbing was 250 mg or more.

A score that can be determined as acceptable wear resistance is 2 or more, and it was evaluated that a higher score is more excellent, when a thinner/more complicated molded article described above is used, from the viewpoints of improvement of durability against friction with a larger load, or with a coarse fabric, and improvement of the compounding freedom.

When the wear resistance is good, the composition can be used in a use, as a vehicle material and the like, requiring more severe wear resistance. For example, in a use as a vehicle interior material or the like, also in molding into a smaller thickness or in molding a more complicated/larger molded article, appearance retention can be expected even in a long-term use comparably to a compact general molded article in a simple shape.

Besides, when the hydrogenated block copolymer composition is used as a vehicle interior material, assuming the time of a ride, even if the material is subjected to friction with a larger load or with a coarse fabric (such as a jeans fabric that is a fabric coarser than a cotton fabric of canequim #3), it can be expected that the appearance of the material can be retained for a long period of time.

Besides, when the wear resistance is good, the lower limit of the amount of compounding the hydrogenated block copolymer (I) in the hydrogenated block copolymer composition of the present embodiment tends to be reduced, and the compounding freedom tends to be improved.

In general, as the compounding amount of the hydrogenated block copolymer (I) in the hydrogenated block copolymer composition is larger, the wear resistance tends to be better, but as the compounding amount of the hydrogenated block copolymer (I) is smaller, the oil resistance, the material cost and the like tend to be better, and therefore, the lower limit of the compounding amount is preferably lower.

### ((4) Oil Resistance)

In accordance with JIS K6258, a test piece of the hydrogenated block copolymer composition was dipped in IRM 902 oil manufactured by JAPAN SUN OIL COMPANY, LTD. at 70°C for 72 hours to measure the mass before and after the dip.

Assuming that the volume of the test piece before the dip was 100%, a volume fraction (%) corresponding to the increase by the dip was calculated as a swelling rate.

When the test piece is not swollen at all in the test oil, the swelling rate is 0%, but as the swelling is larger, the value is larger, and therefore, a swelling rate of 0% or more and having a smaller value means that the sample is more excellent in oil resistance.

The evaluation was made in accordance with the swelling rate based on the following criteria:

### <Evaluation Criteria>

3: The swelling rate was less than 50%.
2: The swelling rate was 50% or more and less than 60%.
1: The swelling rate was 60% or more.

When the oil resistance is good, the upper limit of the compounding amount of the hydrogenated block copolymer (I) in the hydrogenated block copolymer composition is increased, and hence the compounding freedom tends to be improved.

In general, as the compounding amount of the hydrogenated block copolymer (I) in the hydrogenated block copolymer composition is smaller, the oil resistance tends to be better, but as the compounding amount of the hydrogenated block copolymer (I) is larger, the wear resistance and the sense of touch tend to be better, and therefore, the upper limit of the compounding amount is preferably higher.

A sample with a higher score of the oil resistance is excellent from the viewpoints of the improvement of durability in using the thinner/complicated molded article, and improvement of the compounding freedom.

### ((5) Low Temperature Property (elongation at break at -30°C))

In accordance with JIS K6251, a tensile testing machine equipped with a constant temperature bath (Minebea, TG-5kN) was used to perform a tensile test at - 30°C, with a dumbbell No. 3, at a crosshead speed of 500 mm/min, and elongation at break at -30°C was evaluated as a low temperature property based on the following criteria:

### <Evaluation Criteria>

7: The elongation at break was 300% or more.
6: The elongation at break was 250% or more and less than 300%.
5: The elongation at break was 200% or more and less than 250%.
4: The elongation at break was 150% or more and less than 200%.
3: The elongation at break was 100% or more and less than 150%.
2: The elongation at break was 50% or more and less than 100%.
1: The elongation at break was less than 50%.

When the elongation at break at -30°C is high, the composition can be used, for example, as a vehicle material, in a use requiring a more severe low temperature property.

For example, in a use as a vehicle interior material, also in molding of a thinner molded article or in molding a more complicated/larger molded article, a low temperature property over a standard value for vehicle interior tends to be exhibited comparably to a general compact molded article in a simple shape.

As the score of the low temperature property is higher, the composition is more excellent from the viewpoint of improvement of the durability of a thinner molded article, and a complicated/large molded article.

### [Production of Hydrogenated Block Copolymer]

### (Preparation of Hydrogenation Catalyst)

A hydrogenation catalyst to be used in producing a hydrogenated block copolymer in an example and a comparative example described later was prepared as follows.

A reaction vessel equipped with a stirrer having been replaced with nitrogen was charged with 1 liter of dried and purified cyclohexane.

Next, 100 mmol of bis(η5-cyclopentadienyl)titanium dichloride was added thereto.

A n-hexane solution containing 200 mmol of trimethyl aluminum was added to the resultant under sufficient stirring, followed by a reaction at room temperature for about 3 days. Thus, a hydrogenation catalyst was obtained.

### <Hydrogenated Block Copolymer>

Hydrogenated block copolymers (I)-1 to (I)-52, (I)-95 to (I)-100, and (I)-A to (I)-G to be contained in a hydrogenated block copolymer composition were prepared as follows.

### [Example 1]

### (Hydrogenated Block Copolymer (I)-1)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.085 parts by mass with respect to 100 parts by mass of all monomers, N,N,N',N'-tetramethylethylenediamine (hereinafter referred to as the "TMEDA") was added in a ratio of 0.9 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 22% by mass, and a weight average molecular weight of 88,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-1.

The hydrogenated block copolymer (I)-1 thus obtained had a hydrogenation rate of 98%. The other physical properties thereof are shown in Table 1.

### [Example 2]

### (Hydrogenated Block Copolymer (I)-2)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.150 parts by mass with respect to 100 parts by mass of all monomers, N,N,N',N'-tetramethylethylenediamine (hereinafter referred to as the "TMEDA") was added in a ratio of 0.9 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 22% by mass, and a weight average molecular weight of 50,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-2.

The hydrogenated block copolymer (I)-2 thus obtained had a hydrogenation rate of 98%. The other physical properties thereof are shown in Table 1.

### [Example 3]

### (Hydrogenated Block Copolymer (I)-3)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.081 parts by mass with respect to 100 parts by mass of all monomers, N,N,N',N'-tetramethylethylenediamine (hereinafter referred to as the "TMEDA") was added in a ratio of 0.9 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 22% by mass, and a weight average molecular weight of 93,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-3.

The hydrogenated block copolymer (I)-3 thus obtained had a hydrogenation rate of 98%. The other physical properties thereof are shown in Table 1.

### [Example 4]

### (Hydrogenated Block Copolymer (I)-4)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.073 parts by mass with respect to 100 parts by mass of all monomers, N,N,N',N'-tetramethylethylenediamine (hereinafter referred to as the "TMEDA") was added in a ratio of 0.9 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 22% by mass, and a weight average molecular weight of 102,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-4.

The hydrogenated block copolymer (I)-4 thus obtained had a hydrogenation rate of 98%. The other physical properties thereof are shown in Table 1.

### [Example 5]

### (Hydrogenated Block Copolymer (I)-5)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.071 parts by mass with respect to 100 parts by mass of all monomers, N,N,N',N'-tetramethylethylenediamine (hereinafter referred to as the "TMEDA") was added in a ratio of 0.9 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 22% by mass, and a weight average molecular weight of 106,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-5.

The hydrogenated block copolymer (I)-5 thus obtained had a hydrogenation rate of 98%. The other physical properties thereof are shown in Table 1.

### [Example 6]

### (Hydrogenated Block Copolymer (I)-6)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.068 parts by mass with respect to 100 parts by mass of all monomers, N,N,N',N'-tetramethylethylenediamine (hereinafter referred to as the "TMEDA") was added in a ratio of 0.9 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 22% by mass, and a weight average molecular weight of 110,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-6.

The hydrogenated block copolymer (I)-6 thus obtained had a hydrogenation rate of 98%. The other physical properties thereof are shown in Table 1.

### [Example 7]

### (Hydrogenated Block Copolymer (I)-7)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.063 parts by mass with respect to 100 parts by mass of all monomers, N,N,N',N'-tetramethylethylenediamine (hereinafter referred to as the "TMEDA") was added in a ratio of 0.9 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 22% by mass, and a weight average molecular weight of 119,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-7.

The hydrogenated block copolymer (I)-7 thus obtained had a hydrogenation rate of 98%. The other physical properties thereof are shown in Table 1.

### [Example 8]

### (Hydrogenated Block Copolymer (I)-8)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.061 parts by mass with respect to 100 parts by mass of all monomers, N,N,N',N'-tetramethylethylenediamine (hereinafter referred to as the "TMEDA") was added in a ratio of 0.9 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 22% by mass, and a weight average molecular weight of 123,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-8.

The hydrogenated block copolymer (I)-8 thus obtained had a hydrogenation rate of 98%. The other physical properties thereof are shown in Table 1.

### [Example 9]

### (Hydrogenated Block Copolymer (I)-9)

A tank reactor (having a capacity of 10 L) equipped with a stirrer and a jacket was used for performing batch polymerization.

First, a cyclohexane solution (concentration of 20% by mass) containing 6 parts by mass of styrene was charged.

Next, n-butyllithium was added in a ratio of 0.071 parts by mass with respect to 100 parts by mass of all monomers, N,N,N',N'-tetramethylethylenediamine (hereinafter referred to as the "TMEDA") was added in a ratio of 0.7 moles based on 1 mole of n-butyllithium, and the resultant was polymerized at 65°C for 1 hour.

Next, a cyclohexane solution (concentration of 20% by mass) containing 36 parts by mass of butadiene and 52 parts by mass of styrene was added thereto, followed by polymerization at 80°C for 2 hours. Finally, a cyclohexane solution (concentration of 20% by mass) containing 6 parts by mass of styrene was added thereto, followed by polymerization at 65°C for 1 hour. Thereafter, methanol was added thereto to stop the polymerization reaction.

A block copolymer obtained in this manner had a styrene content of 64% by mass, a polystyrene block content of 12% by mass, a vinyl bond content of 20% by mass, and a weight average molecular weight of 110,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-9.

The hydrogenated block copolymer (I)-9 thus obtained had a hydrogenation rate of 98%. The other physical properties thereof are shown in Table 2.

### [Example 10]

### (Hydrogenated Block Copolymer (I)-10)

A tank reactor (having a capacity of 10 L) equipped with a stirrer and a jacket was used for performing batch polymerization.

First, a cyclohexane solution (concentration of 20% by mass) containing 7 parts by mass of styrene was charged.

Next, n-butyllithium was added in a ratio of 0.075 parts by mass with respect to 100 parts by mass of all monomers, N,N,N',N'-tetramethylethylenediamine (hereinafter referred to as the "TMEDA") was added in a ratio of 0.85 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 35 parts by mass of butadiene and 51 parts by mass of styrene was added thereto, followed by polymerization at 65°C for 2 hours. Finally, a cyclohexane solution (concentration of 20% by mass) containing 7 parts by mass of styrene was added thereto, followed by polymerization at 65°C for 1 hour. Thereafter, methanol was added thereto to stop the polymerization reaction.

A block copolymer obtained in this manner had a styrene content of 65% by mass, a polystyrene block content of 14% by mass, a vinyl bond content of 38% by mass, and a weight average molecular weight of 103,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-10.

The hydrogenated block copolymer (I)-10 thus obtained had a hydrogenation rate of 98%. The other physical properties thereof are shown in Table 2.

### [Example 11]

### (Hydrogenated Block Copolymer (I)-11)

A tank reactor (having a capacity of 10 L) equipped with a stirrer and a jacket was used for performing batch polymerization.

First, a cyclohexane solution (concentration of 20% by mass) containing 8 parts by mass of styrene was charged.

Next, n-butyllithium was added in a ratio of 0.076 parts by mass with respect to 100 parts by mass of all monomers, N,N,N',N'-tetramethylethylenediamine (hereinafter referred to as the "TMEDA") was added in a ratio of 0.7 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 34 parts by mass of butadiene and 50 parts by mass of styrene was added thereto, followed by polymerization at 65°C for 2 hours. Finally, a cyclohexane solution (concentration of 20% by mass) containing 8 parts by mass of styrene was added thereto, followed by polymerization at 65°C for 1 hour. Thereafter, methanol was added thereto to stop the polymerization reaction.

A block copolymer obtained in this manner had a styrene content of 66% by mass, a polystyrene block content of 16% by mass, a vinyl bond content of 36% by mass, and a weight average molecular weight of 102,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-11.

The hydrogenated block copolymer (I)-11 thus obtained had a hydrogenation rate of 98%. The other physical properties thereof are shown in Table 2.

### [Example 12]

### (Hydrogenated Block Copolymer (I)-12)

A tank reactor (having a capacity of 10 L) equipped with a stirrer and a jacket was used for performing batch polymerization.

First, a cyclohexane solution (concentration of 20% by mass) containing 9 parts by mass of styrene was charged.

Next, n-butyllithium was added in a ratio of 0.078 parts by mass with respect to 100 parts by mass of all monomers, N,N,N',N'-tetramethylethylenediamine (hereinafter referred to as the "TMEDA") was added in a ratio of 0.6 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 34 parts by mass of butadiene and 48 parts by mass of styrene was added thereto, followed by polymerization at 65°C for 2 hours. Finally, a cyclohexane solution (concentration of 20% by mass) containing 9 parts by mass of styrene was added thereto, followed by polymerization at 65°C for 1 hour. Thereafter, methanol was added thereto to stop the polymerization reaction.

A block copolymer obtained in this manner had a styrene content of 66% by mass, a polystyrene block content of 18% by mass, a vinyl bond content of 34% by mass, and a weight average molecular weight of 99,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-12.

The hydrogenated block copolymer (I)-12 thus obtained had a hydrogenation rate of 98%. The other physical properties thereof are shown in Table 2.

### [Example 13]

### (Hydrogenated Block Copolymer (I)-13)

A tank reactor (having a capacity of 10 L) equipped with a stirrer and a jacket was used for performing batch polymerization.

First, a cyclohexane solution (concentration of 20% by mass) containing 10.5 parts by mass of styrene was charged.

Next, n-butyllithium was added in a ratio of 0.079 parts by mass with respect to 100 parts by mass of all monomers, N,N,N',N'-tetramethylethylenediamine (hereinafter referred to as the "TMEDA") was added in a ratio of 0.5 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 32 parts by mass of butadiene and 47 parts by mass of styrene was added thereto, followed by polymerization at 65°C for 2 hours. Finally, a cyclohexane solution (concentration of 20% by mass) containing 10.5 parts by mass of styrene was added thereto, followed by polymerization at 65°C for 1 hour. Thereafter, methanol was added thereto to stop the polymerization reaction.

A block copolymer obtained in this manner had a styrene content of 68% by mass, a polystyrene block content of 21% by mass, a vinyl bond content of 32% by mass, and a weight average molecular weight of 97,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-13.

The hydrogenated block copolymer (I)-13 thus obtained had a hydrogenation rate of 98%. The other physical properties thereof are shown in Table 2.

### [Example 14]

### (Hydrogenated Block Copolymer (I)-14)

A tank reactor (having a capacity of 10 L) equipped with a stirrer and a jacket was used for performing batch polymerization.

First, a cyclohexane solution (concentration of 20% by mass) containing 12 parts by mass of styrene was charged.

Next, n-butyllithium was added in a ratio of 0.082 parts by mass with respect to 100 parts by mass of all monomers, N,N,N',N'-tetramethylethylenediamine (hereinafter referred to as the "TMEDA") was added in a ratio of 0.45 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 31 parts by mass of butadiene and 45 parts by mass of styrene was added thereto, followed by polymerization at 65°C for 2 hours. Finally, a cyclohexane solution (concentration of 20% by mass) containing 12 parts by mass of styrene was added thereto, followed by polymerization at 65°C for 1 hour. Thereafter, methanol was added thereto to stop the polymerization reaction.

A block copolymer obtained in this manner had a styrene content of 69% by mass, a polystyrene block content of 24% by mass, a vinyl bond content of 28% by mass, and a weight average molecular weight of 93,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-14.

The hydrogenated block copolymer (I)-14 thus obtained had a hydrogenation rate of 98%. The other physical properties thereof are shown in Table 2.

### [Example 15]

### (Hydrogenated Block Copolymer (I)-15)

A tank reactor (having a capacity of 10 L) equipped with a stirrer and a jacket was used for performing batch polymerization.

First, a cyclohexane solution (concentration of 20% by mass) containing 13 parts by mass of styrene was charged.

Next, n-butyllithium was added in a ratio of 0.082 parts by mass with respect to 100 parts by mass of all monomers, N,N,N',N'-tetramethylethylenediamine (hereinafter referred to as the "TMEDA") was added in a ratio of 0.40 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 30 parts by mass of butadiene and 44 parts by mass of styrene was added thereto, followed by polymerization at 65°C for 2 hours. Finally, a cyclohexane solution (concentration of 20% by mass) containing 13 parts by mass of styrene was added thereto, followed by polymerization at 65°C for 1 hour. Thereafter, methanol was added thereto to stop the polymerization reaction.

A block copolymer obtained in this manner had a styrene content of 70% by mass, a polystyrene block content of 26% by mass, a vinyl bond content of 26% by mass, and a weight average molecular weight of 92,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-15.

The hydrogenated block copolymer (I)-15 thus obtained had a hydrogenation rate of 98%. The other physical properties thereof are shown in Table 2.

### [Example 16]

### (Hydrogenated Block Copolymer (I)-16)

A tank reactor (having a capacity of 10 L) equipped with a stirrer and a jacket was used for performing batch polymerization.

First, a cyclohexane solution (concentration of 20% by mass) containing 17 parts by mass of styrene was charged.

Next, n-butyllithium was added in a ratio of 0.085 parts by mass with respect to 100 parts by mass of all monomers, N,N,N',N'-tetramethylethylenediamine (hereinafter referred to as the "TMEDA") was added in a ratio of 0.90 moles based on 1 mole of n-butyllithium, and the resultant was polymerized at 65°C for 1 hour.

Next, a cyclohexane solution (concentration of 20% by mass) containing 27 parts by mass of butadiene and 39 parts by mass of styrene was added thereto, followed by polymerization at 80°C for 2 hours. Finally, a cyclohexane solution (concentration of 20% by mass) containing 17 parts by mass of styrene was added thereto, followed by polymerization at 65°C for 1 hour. Thereafter, methanol was added thereto to stop the polymerization reaction. A block copolymer obtained in this manner had a styrene content of 73% by mass, a polystyrene block content of 34% by mass, a vinyl bond content of 22% by mass, and a weight average molecular weight of 87,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-16.

The hydrogenated block copolymer (I)-16 thus obtained had a hydrogenation rate of 98%. The other physical properties thereof are shown in Table 2.

### [Example 17]

### (Hydrogenated Block Copolymer (I)-17)

A tank reactor (having a capacity of 10 L) equipped with a stirrer and a jacket was used for performing batch polymerization.

First, a cyclohexane solution (concentration of 20% by mass) containing 18 parts by mass of styrene was charged.

Next, n-butyllithium was added in a ratio of 0.088 parts by mass with respect to 100 parts by mass of all monomers, N,N,N',N'-tetramethylethylenediamine (hereinafter referred to as the "TMEDA") was added in a ratio of 0.70 moles based on 1 mole of n-butyllithium, and the resultant was polymerized at 65°C for 1 hour.

Next, a cyclohexane solution (concentration of 20% by mass) containing 28 parts by mass of butadiene and 36 parts by mass of styrene was added thereto, followed by polymerization at 80°C for 2 hours. Finally, a cyclohexane solution (concentration of 20% by mass) containing 18 parts by mass of styrene was added thereto, followed by polymerization at 65°C for 1 hour. Thereafter, methanol was added thereto to stop the polymerization reaction.

A block copolymer obtained in this manner had a styrene content of 72% by mass, a polystyrene block content of 36% by mass, a vinyl bond content of 22% by mass, and a weight average molecular weight of 85,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-17.

The hydrogenated block copolymer (I)-17 thus obtained had a hydrogenation rate of 98%. The other physical properties thereof are shown in Table 2.

### [Example 18]

### (Hydrogenated Block Copolymer (I)-18)

A tank reactor (having a capacity of 10 L) equipped with a stirrer and a jacket was used for performing batch polymerization.

First, a cyclohexane solution (concentration of 20% by mass) containing 19 parts by mass of styrene was charged.

Next, n-butyllithium was added in a ratio of 0.087 parts by mass with respect to 100 parts by mass of all monomers, N,N,N',N'-tetramethylethylenediamine (hereinafter referred to as the "TMEDA") was added in a ratio of 0.50 moles based on 1 mole of n-butyllithium, and the resultant was polymerized at 65°C for 1 hour.

Next, a cyclohexane solution (concentration of 20% by mass) containing 29 parts by mass of butadiene and 33 parts by mass of styrene was added thereto, followed by polymerization at 80°C for 2 hours. Finally, a cyclohexane solution (concentration of 20% by mass) containing 19 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 38% by mass, a vinyl bond content of 22% by mass, and a weight average molecular weight of 86,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-18.

The hydrogenated block copolymer (I)-18 thus obtained had a hydrogenation rate of 98%. The other physical properties thereof are shown in Table 2.

### [Example 19]

### (Hydrogenated Block Copolymer (I)-19)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.119 parts by mass with respect to 100 parts by mass of all monomers, N,N,N',N'-tetramethylethylenediamine (hereinafter referred to as the "TMEDA") was added in a ratio of 1.20 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 48 parts by mass of butadiene and 22 parts by mass of styrene was added thereto, followed by polymerization at 65°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 52% by mass, a polystyrene block content of 30% by mass, a vinyl bond content of 73% by mass, and a weight average molecular weight of 70,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-19.

The hydrogenated block copolymer (I)-19 thus obtained had a hydrogenation rate of 98%. The other physical properties thereof are shown in Table 3.

### [Example 20]

### (Hydrogenated Block Copolymer (I)-20)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.088 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 39 parts by mass of butadiene and 31 parts by mass of styrene was added thereto, followed by polymerization at 65°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 61% by mass, a polystyrene block content of 30% by mass, a vinyl bond content of 47% by mass, and a weight average molecular weight of 90,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-20.

The hydrogenated block copolymer (I)-20 thus obtained had a hydrogenation rate of 98%. The other physical properties thereof are shown in Table 3.

### [Example 21]

### (Hydrogenated Block Copolymer (I)-21)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.085 parts by mass with respect to 100 parts by mass of all monomers, N,N,N',N'-tetramethylethylenediamine (hereinafter referred to as the "TMEDA") was added in a ratio of 0.70 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 37 parts by mass of butadiene and 33 parts by mass of styrene was added thereto, followed by polymerization at 65°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 63% by mass, a polystyrene block content of 30% by mass, a vinyl bond content of 42% by mass, and a weight average molecular weight of 92,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-21.

The hydrogenated block copolymer (I)-21 thus obtained had a hydrogenation rate of 98%. The other physical properties thereof are shown in Table 3.

### [Example 22]

### (Hydrogenated Block Copolymer (I)-22)

A tank reactor (having a capacity of 10 L) equipped with a stirrer and a jacket was used for performing batch polymerization.

First, a cyclohexane solution (concentration of 20% by mass) containing 12.5 parts by mass of styrene was charged.

Next, n-butyllithium was added in a ratio of 0.086 parts by mass with respect to 100 parts by mass of all monomers, N,N,N',N'-tetramethylethylenediamine (hereinafter referred to as the "TMEDA") was added in a ratio of 0.40 moles based on 1 mole of n-butyllithium, and the resultant was polymerized at 65°C for 1 hour.

Next, a cyclohexane solution (concentration of 20% by mass) containing 24 parts by mass of butadiene and 51 parts by mass of styrene was added thereto, followed by polymerization at 80°C for 2 hours. Finally, a cyclohexane solution (concentration of 20% by mass) containing 12.5 parts by mass of styrene was added thereto, followed by polymerization at 65°C for 1 hour. Thereafter, methanol was added thereto to stop the polymerization reaction.

A block copolymer obtained in this manner had a styrene content of 76% by mass, a polystyrene block content of 25% by mass, a vinyl bond content of 10% by mass, and a weight average molecular weight of 85,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-22.

The hydrogenated block copolymer (I)-22 thus obtained had a hydrogenation rate of 98%. The other physical properties thereof are shown in Table 3.

### [Example 23]

### (Hydrogenated Block Copolymer (I)-23)

A tank reactor (having a capacity of 10 L) equipped with a stirrer and a jacket was used for performing batch polymerization.

First, a cyclohexane solution (concentration of 20% by mass) containing 12.5 parts by mass of styrene was charged.

Next, n-butyllithium was added in a ratio of 0.083 parts by mass with respect to 100 parts by mass of all monomers, N,N,N',N'-tetramethylethylenediamine (hereinafter referred to as the "TMEDA") was added in a ratio of 0.45 moles based on 1 mole of n-butyllithium, and the resultant was polymerized at 65°C for 1 hour.

Next, a cyclohexane solution (concentration of 20% by mass) containing 22 parts by mass of butadiene and 53 parts by mass of styrene was added thereto, followed by polymerization at 80°C for 2 hours. Finally, a cyclohexane solution (concentration of 20% by mass) containing 12.5 parts by mass of styrene was added thereto, followed by polymerization at 65°C for 1 hour. Thereafter, methanol was added thereto to stop the polymerization reaction.

A block copolymer obtained in this manner had a styrene content of 78% by mass, a polystyrene block content of 25% by mass, a vinyl bond content of 10% by mass, and a weight average molecular weight of 87,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-23.

The hydrogenated block copolymer (I)-23 thus obtained had a hydrogenation rate of 98%. The other physical properties thereof are shown in Table 3.

### [Example 24]

### (Hydrogenated Block Copolymer (I)-24)

A tank reactor (having a capacity of 10 L) equipped with a stirrer and a jacket was used for performing batch polymerization.

First, a cyclohexane solution (concentration of 20% by mass) containing 5.5 parts by mass of styrene was charged.

Next, n-butyllithium was added in a ratio of 0.084 parts by mass with respect to 100 parts by mass of all monomers, N,N,N',N'-tetramethylethylenediamine (hereinafter referred to as the "TMEDA") was added in a ratio of 0.50 moles based on 1 mole of n-butyllithium, and the resultant was polymerized at 65°C for 1 hour.

Next, a cyclohexane solution (concentration of 20% by mass) containing 20 parts by mass of butadiene and 69 parts by mass of styrene was added thereto, followed by polymerization at 80°C for 2 hours. Finally, a cyclohexane solution (concentration of 20% by mass) containing 5.5 parts by mass of styrene was added thereto, followed by polymerization at 65°C for 1 hour. Thereafter, methanol was added thereto to stop the polymerization reaction.

A block copolymer obtained in this manner had a styrene content of 80% by mass, a polystyrene block content of 11% by mass, a vinyl bond content of 10% by mass, and a weight average molecular weight of 85,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-24.

The hydrogenated block copolymer (I)-24 thus obtained had a hydrogenation rate of 98%. The other physical properties thereof are shown in Table 3.

### [Example 25]

### (Hydrogenated Block Copolymer (I)-25)

A tank reactor (having a capacity of 10 L) equipped with a stirrer and a jacket was used for performing batch polymerization.

First, a cyclohexane solution (concentration of 20% by mass) containing 10 parts by mass of styrene was charged.

Next, n-butyllithium was added in a ratio of 0.185 parts by mass with respect to 100 parts by mass of all monomers, N,N,N',N'-tetramethylethylenediamine (hereinafter referred to as the "TMEDA") was added in a ratio of 0.20 moles based on 1 mole of n-butyllithium, sodium-t-pentoxide was added in a ratio of 0.01 moles based on 1 mole of n-butyllithium, and the resultant was polymerized at 65°C for 1 hour.

Next, a cyclohexane solution (concentration of 20% by mass) containing 55 parts by mass of butadiene and 25 parts by mass of styrene was added thereto, followed by polymerization at 70°C for 2 hours. Finally, a cyclohexane solution (concentration of 20% by mass) containing 10 parts by mass of styrene was added thereto, followed by polymerization at 65°C for 1 hour. Thereafter, methanol was added thereto to stop the polymerization reaction.

A block copolymer obtained in this manner had a styrene content of 45% by mass, a polystyrene block content of 20% by mass, a vinyl bond content of 20% by mass, and a weight average molecular weight of 48,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-25.

The hydrogenated block copolymer (I)-25 thus obtained had a hydrogenation rate of 98%. The other physical properties thereof are shown in Table 4.

### [Example 26]

### (Hydrogenated Block Copolymer (I)-26)

A tank reactor (having a capacity of 10 L) equipped with a stirrer and a jacket was used for performing batch polymerization.

First, a cyclohexane solution (concentration of 20% by mass) containing 10 parts by mass of styrene was charged.

Next, n-butyllithium was added in a ratio of 0.125 parts by mass with respect to 100 parts by mass of all monomers, N,N,N',N'-tetramethylethylenediamine (hereinafter referred to as the "TMEDA") was added in a ratio of 0.50 moles based on 1 mole of n-butyllithium, and the resultant was polymerized at 65°C for 1 hour.

Next, a cyclohexane solution (concentration of 20% by mass) containing 55 parts by mass of butadiene and 25 parts by mass of styrene was added thereto, followed by polymerization at 80°C for 2 hours. Finally, a cyclohexane solution (concentration of 20% by mass) containing 10 parts by mass of styrene was added thereto, followed by polymerization at 65°C for 1 hour. Thereafter, methanol was added thereto to stop the polymerization reaction.

A block copolymer obtained in this manner had a styrene content of 45% by mass, a polystyrene block content of 20% by mass, a vinyl bond content of 50% by mass, and a weight average molecular weight of 70,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-26.

The hydrogenated block copolymer (I)-26 thus obtained had a hydrogenation rate of 98%. The other physical properties thereof are shown in Table 4.

### [Example 27]

### (Hydrogenated Block Copolymer (I)-27)

A tank reactor (having a capacity of 10 L) equipped with a stirrer and a jacket was used for performing batch polymerization.

First, a cyclohexane solution (concentration of 20% by mass) containing 10 parts by mass of styrene was charged.

Next, n-butyllithium was added in a ratio of 0.114 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, and the resultant was polymerized at 65°C for 1 hour.

Next, a cyclohexane solution (concentration of 20% by mass) containing 52 parts by mass of butadiene and 28 parts by mass of styrene was added thereto, followed by polymerization at 80°C for 2 hours. Finally, a cyclohexane solution (concentration of 20% by mass) containing 10 parts by mass of styrene was added thereto, followed by polymerization at 65°C for 1 hour. Thereafter, methanol was added thereto to stop the polymerization reaction.

A block copolymer obtained in this manner had a styrene content of 48% by mass, a polystyrene block content of 20% by mass, a vinyl bond content of 50% by mass, and a weight average molecular weight of 75,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-27.

The hydrogenated block copolymer (I)-27 thus obtained had a hydrogenation rate of 98%. The other physical properties thereof are shown in Table 4.

### [Example 28]

### (Hydrogenated Block Copolymer (I)-28)

A tank reactor (having a capacity of 10 L) equipped with a stirrer and a jacket was used for performing batch polymerization.

First, a cyclohexane solution (concentration of 20% by mass) containing 10 parts by mass of styrene was charged.

Next, n-butyllithium was added in a ratio of 0.089 parts by mass with respect to 100 parts by mass of all monomers, N,N,N',N'-tetramethylethylenediamine (hereinafter referred to as the "TMEDA") was added in a ratio of 0.70 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 44 parts by mass of butadiene and 36 parts by mass of styrene was added thereto, followed by polymerization at 65°C for 2 hours. Finally, a cyclohexane solution (concentration of 20% by mass) containing 10 parts by mass of styrene was added thereto, followed by polymerization at 65°C for 1 hour. Thereafter, methanol was added thereto to stop the polymerization reaction.

A block copolymer obtained in this manner had a styrene content of 56% by mass, a polystyrene block content of 20% by mass, a vinyl bond content of 50% by mass, and a weight average molecular weight of 92,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-28.

The hydrogenated block copolymer (I)-28 thus obtained had a hydrogenation rate of 98%. The other physical properties thereof are shown in Table 4.

### [Example 29]

### (Hydrogenated Block Copolymer (I)-29)

A tank reactor (having a capacity of 10 L) equipped with a stirrer and a jacket was used for performing batch polymerization.

First, a cyclohexane solution (concentration of 20% by mass) containing 10 parts by mass of styrene was charged.

Next, n-butyllithium was added in a ratio of 0.102 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 44 parts by mass of butadiene and 36 parts by mass of styrene was added thereto, followed by polymerization at 65°C for 2 hours. Finally, a cyclohexane solution (concentration of 20% by mass) containing 10 parts by mass of styrene was added thereto, followed by polymerization at 65°C for 1 hour. Thereafter, methanol was added thereto to stop the polymerization reaction.

A block copolymer obtained in this manner had a styrene content of 56% by mass, a polystyrene block content of 20% by mass, a vinyl bond content of 55% by mass, and a weight average molecular weight of 80,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-29.

The hydrogenated block copolymer (I)-29 thus obtained had a hydrogenation rate of 98%. The other physical properties thereof are shown in Table 4.

### [Example 30]

### (Hydrogenated Block Copolymer (I)-30)

A tank reactor (having a capacity of 10 L) equipped with a stirrer and a jacket was used for performing batch polymerization.

First, a cyclohexane solution (concentration of 20% by mass) containing 10 parts by mass of styrene was charged.

Next, n-butyllithium was added in a ratio of 0.090 parts by mass with respect to 100 parts by mass of all monomers, N,N,N',N'-tetramethylethylenediamine (hereinafter referred to as the "TMEDA") was added in a ratio of 0.90 moles based on 1 mole of n-butyllithium, and the resultant was polymerized at 65°C for 1 hour.

Next, a cyclohexane solution (concentration of 20% by mass) containing 33 parts by mass of butadiene and 47 parts by mass of styrene was added thereto, followed by polymerization at 80°C for 2 hours. Finally, a cyclohexane solution (concentration of 20% by mass) containing 10 parts by mass of styrene was added thereto, followed by polymerization at 65°C for 1 hour. Thereafter, methanol was added thereto to stop the polymerization reaction.

A block copolymer obtained in this manner had a styrene content of 67% by mass, a polystyrene block content of 20% by mass, a vinyl bond content of 21% by mass, and a weight average molecular weight of 85,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-30.

The hydrogenated block copolymer (I)-30 thus obtained had a hydrogenation rate of 98%. The other physical properties thereof are shown in Table 4.

### [Example 31]

### (Hydrogenated Block Copolymer (I)-31)

A tank reactor (having a capacity of 10 L) equipped with a stirrer and a jacket was used for performing batch polymerization.

First, a cyclohexane solution (concentration of 20% by mass) containing 12 parts by mass of styrene was charged.

Next, n-butyllithium was added in a ratio of 0.089 parts by mass with respect to 100 parts by mass of all monomers, N,N,N',N'-tetramethylethylenediamine (hereinafter referred to as the "TMEDA") was added in a ratio of 0.90 moles based on 1 mole of n-butyllithium, and the resultant was polymerized at 65°C for 1 hour.

Next, a cyclohexane solution (concentration of 20% by mass) containing 31 parts by mass of butadiene and 45 parts by mass of styrene was added thereto, followed by polymerization at 80°C for 2 hours. Finally, a cyclohexane solution (concentration of 20% by mass) containing 12 parts by mass of styrene was added thereto, followed by polymerization at 65°C for 1 hour. Thereafter, methanol was added thereto to stop the polymerization reaction.

A block copolymer obtained in this manner had a styrene content of 69% by mass, a polystyrene block content of 24% by mass, a vinyl bond content of 21% by mass, and a weight average molecular weight of 85,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-31.

The hydrogenated block copolymer (I)-31 thus obtained had a hydrogenation rate of 98%. The other physical properties thereof are shown in Table 4.

### [Example 32]

### (Hydrogenated Block Copolymer (I)-32)

A tank reactor (having a capacity of 10 L) equipped with a stirrer and a jacket was used for performing batch polymerization.

First, a cyclohexane solution (concentration of 20% by mass) containing 17 parts by mass of styrene was charged.

Next, n-butyllithium was added in a ratio of 0.084 parts by mass with respect to 100 parts by mass of all monomers, N,N,N',N'-tetramethylethylenediamine (hereinafter referred to as the "TMEDA") was added in a ratio of 0.90 moles based on 1 mole of n-butyllithium, and the resultant was polymerized at 65°C for 1 hour.

Next, a cyclohexane solution (concentration of 20% by mass) containing 27 parts by mass of butadiene and 39 parts by mass of styrene was added thereto, followed by polymerization at 80°C for 2 hours. Finally, a cyclohexane solution (concentration of 20% by mass) containing 17 parts by mass of styrene was added thereto, followed by polymerization at 65°C for 1 hour. Thereafter, methanol was added thereto to stop the polymerization reaction.

A block copolymer obtained in this manner had a styrene content of 73% by mass, a polystyrene block content of 34% by mass, a vinyl bond content of 22% by mass, and a weight average molecular weight of 88,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-32.

The hydrogenated block copolymer (I)-32 thus obtained had a hydrogenation rate of 98%. The other physical properties thereof are shown in Table 4.

### [Example 33]

### (Hydrogenated Block Copolymer (I)-33)

A tank reactor (having a capacity of 10 L) equipped with a stirrer and a jacket was used for performing batch polymerization.

First, a cyclohexane solution (concentration of 20% by mass) containing 17 parts by mass of styrene was charged.

Next, n-butyllithium was added in a ratio of 0.083 parts by mass with respect to 100 parts by mass of all monomers, N,N,N',N'-tetramethylethylenediamine (hereinafter referred to as the "TMEDA") was added in a ratio of 0.40 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 24 parts by mass of butadiene and 42 parts by mass of styrene was added thereto, followed by polymerization at 65°C for 2 hours. Finally, a cyclohexane solution (concentration of 20% by mass) containing 17 parts by mass of styrene was added thereto, followed by polymerization at 65°C for 1 hour. Thereafter, methanol was added thereto to stop the polymerization reaction.

A block copolymer obtained in this manner had a styrene content of 76% by mass, a polystyrene block content of 34% by mass, a vinyl bond content of 21% by mass, and a weight average molecular weight of 88,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-33.

The hydrogenated block copolymer (I)-33 thus obtained had a hydrogenation rate of 98%. The other physical properties thereof are shown in Table 4.

### [Example 34]

### (Hydrogenated Block Copolymer (I)-34)

A tank reactor (having a capacity of 10 L) equipped with a stirrer and a jacket was used for performing batch polymerization.

First, a cyclohexane solution (concentration of 20% by mass) containing 17 parts by mass of styrene was charged.

Next, n-butyllithium was added in a ratio of 0.081 parts by mass with respect to 100 parts by mass of all monomers, N,N,N',N'-tetramethylethylenediamine (hereinafter referred to as the "TMEDA") was added in a ratio of 0.60 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 24 parts by mass of butadiene and 42 parts by mass of styrene was added thereto, followed by polymerization at 65°C for 2 hours. Finally, a cyclohexane solution (concentration of 20% by mass) containing 17 parts by mass of styrene was added thereto, followed by polymerization at 65°C for 1 hour. Thereafter, methanol was added thereto to stop the polymerization reaction.

A block copolymer obtained in this manner had a styrene content of 76% by mass, a polystyrene block content of 34% by mass, a vinyl bond content of 25% by mass, and a weight average molecular weight of 90,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-34.

The hydrogenated block copolymer (I)-34 thus obtained had a hydrogenation rate of 98%. The other physical properties thereof are shown in Table 4.

### [Example 35]

### (Hydrogenated Block Copolymer (I)-35)

A tank reactor (having a capacity of 10 L) equipped with a stirrer and a jacket was used for performing batch polymerization.

First, a cyclohexane solution (concentration of 20% by mass) containing 17 parts by mass of styrene was charged.

Next, n-butyllithium was added in a ratio of 0.081 parts by mass with respect to 100 parts by mass of all monomers, N,N,N',N'-tetramethylethylenediamine (hereinafter referred to as the "TMEDA") was added in a ratio of 1.00 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 24 parts by mass of butadiene and 42 parts by mass of styrene was added thereto, followed by polymerization at 65°C for 2 hours. Finally, a cyclohexane solution (concentration of 20% by mass) containing 17 parts by mass of styrene was added thereto, followed by polymerization at 65°C for 1 hour. Thereafter, methanol was added thereto to stop the polymerization reaction.

A block copolymer obtained in this manner had a styrene content of 76% by mass, a polystyrene block content of 34% by mass, a vinyl bond content of 30% by mass, and a weight average molecular weight of 90,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-35.

The hydrogenated block copolymer (I)-35 thus obtained had a hydrogenation rate of 98%. The other physical properties thereof are shown in Table 4.

### [Example 36]

### (Hydrogenated Block Copolymer (I)-36)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.085 parts by mass with respect to 100 parts by mass of all monomers, N,N,N',N'-tetramethylethylenediamine (hereinafter referred to as the "TMEDA") was added in a ratio of 0.6 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 18% by mass, and a weight average molecular weight of 88,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-36.

The hydrogenated block copolymer (I)-36 thus obtained had a hydrogenation rate of 98%. The other physical properties thereof are shown in Table 5.

### [Example 37]

### (Hydrogenated Block Copolymer (I)-37)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.085 parts by mass with respect to 100 parts by mass of all monomers, N,N,N',N'-tetramethylethylenediamine (hereinafter referred to as the "TMEDA") was added in a ratio of 0.45 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 65°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 28% by mass, and a weight average molecular weight of 88,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-37.

The hydrogenated block copolymer (I)-37 thus obtained had a hydrogenation rate of 98%. The other physical properties thereof are shown in Table 5.

### [Example 38]

### (Hydrogenated Block Copolymer (I)-38)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.085 parts by mass with respect to 100 parts by mass of all monomers, N,N,N',N'-tetramethylethylenediamine (hereinafter referred to as the "TMEDA") was added in a ratio of 0.60 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 65°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 31% by mass, and a weight average molecular weight of 88,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-38.

The hydrogenated block copolymer (I)-38 thus obtained had a hydrogenation rate of 98%. The other physical properties thereof are shown in Table 5.

### [Example 39]

### (Hydrogenated Block Copolymer (I)-39)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.084 parts by mass with respect to 100 parts by mass of all monomers, N,N,N',N'-tetramethylethylenediamine (hereinafter referred to as the "TMEDA") was added in a ratio of 0.90 moles based on 1 mole of n-butyllithium, and the resultant was polymerized at 65°C for 1 hour.

Next, a cyclohexane solution (concentration of 20% by mass) containing 27 parts by mass of butadiene and 40 parts by mass of styrene was added thereto, followed by polymerization at 80°C for 2 hours. Next, a cyclohexane solution (concentration of 20% by mass) containing 15 parts by mass of styrene was added thereto, followed by polymerization at 65°C for 1 hour. Finally, a cyclohexane solution (concentration of 20% by mass) containing 3 parts by mass of butadiene was added thereto, followed by polymerization at 60°C for 1 hour. Thereafter, methanol was added thereto to stop the polymerization reaction.

A block copolymer obtained in this manner had a styrene content of 70% by mass, a polystyrene block content of 30% by mass, a vinyl bond content of 25% by mass, and a weight average molecular weight of 90,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-39.

The hydrogenated block copolymer (I)-39 thus obtained had a hydrogenation rate of 98%. The other physical properties thereof are shown in Table 6.

### [Example 40]

### (Hydrogenated Block Copolymer (I)-40)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.082 parts by mass with respect to 100 parts by mass of all monomers, N,N,N',N'-tetramethylethylenediamine (hereinafter referred to as the "TMEDA") was added in a ratio of 0.90 moles based on 1 mole of n-butyllithium, and the resultant was polymerized at 65°C for 1 hour.

Next, a cyclohexane solution (concentration of 20% by mass) containing 27 parts by mass of butadiene and 38 parts by mass of styrene was added thereto, followed by polymerization at 80°C for 2 hours. Next, a cyclohexane solution (concentration of 20% by mass) containing 15 parts by mass of styrene was added thereto, followed by polymerization at 65°C for 1 hour. Finally, a cyclohexane solution (concentration of 20% by mass) containing 5 parts by mass of butadiene was added thereto, followed by polymerization at 60°C for 1 hour. Thereafter, methanol was added thereto to stop the polymerization reaction.

A block copolymer obtained in this manner had a styrene content of 68% by mass, a polystyrene block content of 30% by mass, a vinyl bond content of 28% by mass, and a weight average molecular weight of 93,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-40.

The hydrogenated block copolymer (I)-40 thus obtained had a hydrogenation rate of 98%. The other physical properties thereof are shown in Table 6.

### [Example 41]

### (Hydrogenated Block Copolymer (I)-41)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.094 parts by mass with respect to 100 parts by mass of all monomers, N,N,N',N'-tetramethylethylenediamine (hereinafter referred to as the "TMEDA") was added in a ratio of 0.90 moles based on 1 mole of n-butyllithium, and the resultant was polymerized at 65°C for 1 hour.

Next, a cyclohexane solution (concentration of 20% by mass) containing 20 parts by mass of butadiene and 29 parts by mass of styrene was added thereto, followed by polymerization at 80°C for 2 hours. Next, a cyclohexane solution (concentration of 20% by mass) containing 15 parts by mass of styrene was added thereto, followed by polymerization at 65°C for 1 hour. Finally, a cyclohexane solution (concentration of 20% by mass) containing 19 parts by mass of butadiene was added thereto, followed by polymerization at 60°C for 1 hour. Thereafter, methanol was added thereto to stop the polymerization reaction.

A block copolymer obtained in this manner had a styrene content of 59% by mass, a polystyrene block content of 30% by mass, a vinyl bond content of 44% by mass, and a weight average molecular weight of 85,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-41.

The hydrogenated block copolymer (I)-41 thus obtained had a hydrogenation rate of 98%. The other physical properties thereof are shown in Table 6.

### [Example 42]

### (Hydrogenated Block Copolymer (I)-42)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.103 parts by mass with respect to 100 parts by mass of all monomers, N,N,N',N'-tetramethylethylenediamine (hereinafter referred to as the "TMEDA") was added in a ratio of 0.90 moles based on 1 mole of n-butyllithium, and the resultant was polymerized at 65°C for 1 hour.

Next, a cyclohexane solution (concentration of 20% by mass) containing 16 parts by mass of butadiene and 24 parts by mass of styrene was added thereto, followed by polymerization at 80°C for 2 hours. Next, a cyclohexane solution (concentration of 20% by mass) containing 15 parts by mass of styrene was added thereto, followed by polymerization at 65°C for 1 hour. Finally, a cyclohexane solution (concentration of 20% by mass) containing 30 parts by mass of butadiene was added thereto, followed by polymerization at 60°C for 1 hour. Thereafter, methanol was added thereto to stop the polymerization reaction.

A block copolymer obtained in this manner had a styrene content of 54% by mass, a polystyrene block content of 30% by mass, a vinyl bond content of 50% by mass, and a weight average molecular weight of 80,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-42.

The hydrogenated block copolymer (I)-42 thus obtained had a hydrogenation rate of 98%. The other physical properties thereof are shown in Table 6.

### [Example 43]

### (Hydrogenated Block Copolymer (I)-43)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.114 parts by mass with respect to 100 parts by mass of all monomers, N,N,N',N'-tetramethylethylenediamine (hereinafter referred to as the "TMEDA") was added in a ratio of 0.90 moles based on 1 mole of n-butyllithium, and the resultant was polymerized at 65°C for 1 hour.

Next, a cyclohexane solution (concentration of 20% by mass) containing 12 parts by mass of butadiene and 18 parts by mass of styrene was added thereto, followed by polymerization at 80°C for 2 hours. Next, a cyclohexane solution (concentration of 20% by mass) containing 15 parts by mass of styrene was added thereto, followed by polymerization at 65°C for 1 hour. Finally, a cyclohexane solution (concentration of 20% by mass) containing 40 parts by mass of butadiene was added thereto, followed by polymerization at 60°C for 1 hour. Thereafter, methanol was added thereto to stop the polymerization reaction.

A block copolymer obtained in this manner had a styrene content of 48% by mass, a polystyrene block content of 30% by mass, a vinyl bond content of 60% by mass, and a weight average molecular weight of 75,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-43.

The hydrogenated block copolymer (I)-43 thus obtained had a hydrogenation rate of 98%. The other physical properties thereof are shown in Table 6.

### [Example 44]

### (Hydrogenated Block Copolymer (I)-44)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.109 parts by mass with respect to 100 parts by mass of all monomers, N,N,N',N'-tetramethylethylenediamine (hereinafter referred to as the "TMEDA") was added in a ratio of 0.60 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 9 parts by mass of butadiene and 21 parts by mass of styrene was added thereto, followed by polymerization at 65°C for 2 hours. Next, a cyclohexane solution (concentration of 20% by mass) containing 15 parts by mass of styrene was added thereto, followed by polymerization at 65°C for 1 hour. Finally, a cyclohexane solution (concentration of 20% by mass) containing 40 parts by mass of butadiene was added thereto, followed by polymerization at 60°C for 1 hour. Thereafter, methanol was added thereto to stop the polymerization reaction.

A block copolymer obtained in this manner had a styrene content of 51% by mass, a polystyrene block content of 30% by mass, a vinyl bond content of 70% by mass, and a weight average molecular weight of 77,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-44.

The hydrogenated block copolymer (I)-44 thus obtained had a hydrogenation rate of 98%. The other physical properties thereof are shown in Table 6.

### [Example 45]

### (Hydrogenated Block Copolymer (I)-45)

A tank reactor (having a capacity of 10 L) equipped with a stirrer and a jacket was used for performing batch polymerization.

First, a cyclohexane solution (concentration of 20% by mass) containing 8 parts by mass of butadiene was charged.

Next, n-butyllithium was added in a ratio of 0.079 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 60°C for 1 hour.

Next, a cyclohexane solution (concentration of 20% by mass) containing 15 parts by mass of styrene was added thereto, followed by polymerization at 65°C for 2 hours. Next, a cyclohexane solution (concentration 20% by mass) containing 22 parts by mass of butadiene and 32 parts by mass of styrene was added thereto, followed by polymerization at 65°C for 1 hour. Finally, a cyclohexane solution (concentration of 20% by mass) containing 8 parts by mass of butadiene was added thereto, followed by polymerization at 60°C for 1 hour. Thereafter, methanol was added thereto to stop the polymerization reaction.

A block copolymer obtained in this manner had a styrene content of 62% by mass, a polystyrene block content of 30% by mass, a vinyl bond content of 51% by mass, and a weight average molecular weight of 100,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-45.

The hydrogenated block copolymer (I)-45 thus obtained had a hydrogenation rate of 98%. The other physical properties thereof are shown in Table 7.

### [Example 46]

### (Hydrogenated Block Copolymer (I)-46)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.083 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 7 parts by mass of butadiene was added thereto, followed by polymerization at 60°C for 1 hour. Next, a cyclohexane solution (concentration 20% by mass) containing 24 parts by mass of butadiene and 34 parts by mass of styrene was added thereto, followed by polymerization at 65°C for 2 hours. Next, a cyclohexane solution (concentration 20% by mass) containing 15 parts by mass of styrene was added thereto, followed by polymerization at 65°C for 1 hour. Finally, a cyclohexane solution (concentration of 20% by mass) containing 5 parts by mass of butadiene was added thereto, followed by polymerization at 60°C for 1 hour. Thereafter, methanol was added thereto to stop the polymerization reaction.

A block copolymer obtained in this manner had a styrene content of 64% by mass, a polystyrene block content of 30% by mass, a vinyl bond content of 46% by mass, and a weight average molecular weight of 94,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-46.

The hydrogenated block copolymer (I)-46 thus obtained had a hydrogenation rate of 98%. The other physical properties thereof are shown in Table 7.

### [Example 47]

### (Hydrogenated Block Copolymer (I)-47)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.081 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 25 parts by mass of butadiene and 36 parts by mass of styrene was added thereto, followed by polymerization at 65°C for 2 hours. Next, a cyclohexane solution (concentration 20% by mass) containing 3 parts by mass of butadiene was added thereto, followed by polymerization at 60°C for 1 hour. Next, a cyclohexane solution (concentration 20% by mass) containing 15 parts by mass of styrene was added thereto, followed by polymerization at 65°C for 1 hour. Finally, a cyclohexane solution (concentration of 20% by mass) containing 6 parts by mass of styrene was added thereto, followed by polymerization at 60°C for 1 hour. Thereafter, methanol was added thereto to stop the polymerization reaction.

A block copolymer obtained in this manner had a styrene content of 66% by mass, a polystyrene block content of 30% by mass, a vinyl bond content of 46% by mass, and a weight average molecular weight of 95,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-47.

The hydrogenated block copolymer (I)-47 thus obtained had a hydrogenation rate of 98%. The other physical properties thereof are shown in Table 7.

### [Example 48]

### (Hydrogenated Block Copolymer (I)-48)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.091 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 5 parts by mass of butadiene was added thereto, followed by polymerization at 60°C for 1 hour. Next, a cyclohexane solution (concentration 20% by mass) containing 25 parts by mass of butadiene and 35 parts by mass of styrene was added thereto, followed by polymerization at 65°C for 2 hours. Next, a cyclohexane solution (concentration 20% by mass) containing 5 parts by mass of butadiene was added thereto, followed by polymerization at 60°C for 1 hour. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 65% by mass, a polystyrene block content of 30% by mass, a vinyl bond content of 43% by mass, and a weight average molecular weight of 85,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-48.

The hydrogenated block copolymer (I)-48 thus obtained had a hydrogenation rate of 98%. The other physical properties thereof are shown in Table 7.

### [Example 49]

### (Hydrogenated Block Copolymer (I)-49)

A tank reactor (having a capacity of 10 L) equipped with a stirrer and a jacket was used for performing batch polymerization.

First, a cyclohexane solution (concentration of 20% by mass) containing 5 parts by mass of butadiene was charged.

Next, n-butyllithium was added in a ratio of 0.078 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 60°C for 1 hour.

Next, a cyclohexane solution (concentration of 20% by mass) containing 15 parts by mass of styrene was added thereto, followed by polymerization at 65°C for 1 hour. Next, a cyclohexane solution (concentration 20% by mass) containing 23 parts by mass of butadiene and 32 parts by mass of styrene was added thereto, followed by polymerization at 65°C for 2 hours. Next, a cyclohexane solution (concentration 20% by mass) containing 5 parts by mass of butadiene was added thereto, followed by polymerization at 60°C for 1 hour. Next, a cyclohexane solution (concentration 20% by mass) containing 15 parts by mass of styrene was added thereto, followed by polymerization at 65°C for 1 hour. Finally, a cyclohexane solution (concentration of 20% by mass) containing 5 parts by mass of butadiene was added thereto, followed by polymerization at 60°C for 1 hour. Thereafter, methanol was added thereto to stop the polymerization reaction.

A block copolymer obtained in this manner had a styrene content of 62% by mass, a polystyrene block content of 30% by mass, a vinyl bond content of 50% by mass, and a weight average molecular weight of 100,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-49.

The hydrogenated block copolymer (I)-49 thus obtained had a hydrogenation rate of 98%. The other physical properties thereof are shown in Table 7.

### [Example 50]

### (Hydrogenated Block Copolymer (I)-50)

A tank reactor (having a capacity of 10 L) equipped with a stirrer and a jacket was used for performing batch polymerization.

First, a cyclohexane solution (concentration of 20% by mass) containing 3 parts by mass of butadiene was charged.

Next, n-butyllithium was added in a ratio of 0.081 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 60°C for 1 hour.

Next, a cyclohexane solution (concentration of 20% by mass) containing 15 parts by mass of styrene was added thereto, followed by polymerization at 65°C for 1 hour. Next, a cyclohexane solution (concentration 20% by mass) containing 6 parts by mass of butadiene was added thereto, followed by polymerization at 60°C for 1 hour. Next, a cyclohexane solution (concentration 20% by mass) containing 24 parts by mass of butadiene and 34 parts by mass of styrene was added thereto, followed by polymerization at 65°C for 2 hours. Next, a cyclohexane solution (concentration 20% by mass) containing 3 parts by mass of butadiene was added thereto, followed by polymerization at 60°C for 1 hour. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 64% by mass, a polystyrene block content of 30% by mass, a vinyl bond content of 45% by mass, and a weight average molecular weight of 96,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-50.

The hydrogenated block copolymer (I)-50 thus obtained had a hydrogenation rate of 98%. The other physical properties thereof are shown in Table 7.

### [Example 51]

### (Hydrogenated Block Copolymer (I)-51)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.099 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 6 parts by mass of butadiene was added thereto, followed by polymerization at 60°C for 1 hour. Next, a cyclohexane solution (concentration 20% by mass) containing 10.5 parts by mass of butadiene and 15 parts by mass of styrene was added thereto, followed by polymerization at 65°C for 2 hours. Next, a cyclohexane solution (concentration 20% by mass) containing 7 parts by mass of butadiene was added thereto, followed by polymerization at 60°C for 1 hour. Next, a cyclohexane solution (concentration 20% by mass) containing 10.5 parts by mass of butadiene and 15 parts by mass of styrene was added thereto, followed by polymerization at 65°C for 2 hours. Next, a cyclohexane solution (concentration 20% by mass) containing 6 parts by mass of butadiene was added thereto, followed by polymerization at 60°C for 1 hour. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 60% by mass, a polystyrene block content of 30% by mass, a vinyl bond content of 55% by mass, and a weight average molecular weight of 80,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-51.

The hydrogenated block copolymer (I)-51 thus obtained had a hydrogenation rate of 98%. The other physical properties thereof are shown in Table 7.

### [Example 52]

### (Hydrogenated Block Copolymer (I)-52)

A tank reactor (having a capacity of 10 L) equipped with a stirrer and a jacket was used for performing batch polymerization.

First, a cyclohexane solution (concentration of 20% by mass) containing 4 parts by mass of butadiene was charged.

Next, n-butyllithium was added in a ratio of 0.082 parts by mass with respect to 100 parts by mass of all monomers, N,N,N',N'-tetramethylethylenediamine (hereinafter referred to as the "TMEDA") was added in a ratio of 0.80 moles based on 1 mole of n-butyllithium, sodium-t-pentoxide was added in a ratio of 0.04 moles based on 1 mole of n-butyllithium, and the resultant was polymerized at 60°C for 1 hour.

Next, a cyclohexane solution (concentration of 20% by mass) containing 15 parts by mass of styrene was added thereto, followed by polymerization at 65°C for 1 hour. Next, a cyclohexane solution (concentration 20% by mass) containing 4 parts by mass of butadiene was added thereto, followed by polymerization at 60°C for 1 hour. Next, a cyclohexane solution (concentration 20% by mass) containing 15 parts by mass of styrene was added thereto, followed by polymerization at 65°C for 1 hour. Next, a cyclohexane solution (concentration 20% by mass) containing 22 parts by mass of butadiene and 32 parts by mass of styrene was added thereto, followed by polymerization at 65°C for 2 hours. Next, a cyclohexane solution (concentration 20% by mass) containing 4 parts by mass of butadiene was added thereto, followed by polymerization at 60°C for 1 hour. Next, a cyclohexane solution (concentration 20% by mass) containing 15 parts by mass of styrene was added thereto, followed by polymerization at 65°C for 1 hour. Finally, a cyclohexane solution (concentration of 20% by mass) containing 4 parts by mass of butadiene was added thereto, followed by polymerization at 60°C for 1 hour. Thereafter, methanol was added thereto to stop the polymerization reaction.

A block copolymer obtained in this manner had a styrene content of 62% by mass, a polystyrene block content of 30% by mass, a vinyl bond content of 60% by mass, and a weight average molecular weight of 96,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-52.

The hydrogenated block copolymer (I)-52 thus obtained had a hydrogenation rate of 98%. The other physical properties thereof are shown in Table 7.

### [Example 95]

### (Hydrogenated Block Copolymer (I)-95)

A tank reactor (having a capacity of 10 L) equipped with a stirrer and a jacket was used for performing batch polymerization.

First, a cyclohexane solution (concentration of 20% by mass) containing 8 parts by mass of styrene was charged.

Next, n-butyllithium was added in a ratio of 0.091 parts by mass with respect to 100 parts by mass of all monomers, N,N,N',N'-tetramethylethylenediamine (hereinafter referred to as the "TMEDA") was added in a ratio of 0.60 moles based on 1 mole of n-butyllithium, and the resultant was polymerized at 65°C for 1 hour.

Next, a cyclohexane solution (concentration of 20% by mass) containing 39 parts by mass of butadiene and 45 parts by mass of styrene was added thereto, followed by polymerization at 80°C for 2 hours. Finally, a cyclohexane solution (concentration of 20% by mass) containing 8 parts by mass of styrene was added thereto, followed by polymerization at 65°C for 1 hour. Thereafter, methanol was added thereto to stop the polymerization reaction.

A block copolymer obtained in this manner had a styrene content of 61% by mass, a polystyrene block content of 16% by mass, a vinyl bond content of 24% by mass, and a weight average molecular weight of 88,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-95.

The hydrogenated block copolymer (I)-95 thus obtained had a hydrogenation rate of 98%. The other physical properties thereof are shown in Table 8.

### [Example 96]

### (Hydrogenated Block Copolymer (I)-96)

A tank reactor (having a capacity of 10 L) equipped with a stirrer and a jacket was used for performing batch polymerization.

First, a cyclohexane solution (concentration of 20% by mass) containing 8 parts by mass of styrene was charged.

Next, n-butyllithium was added in a ratio of 0.072 parts by mass with respect to 100 parts by mass of all monomers, N,N,N',N'-tetramethylethylenediamine (hereinafter referred to as the "TMEDA") was added in a ratio of 0.75 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 39 parts by mass of butadiene and 45 parts by mass of styrene was added thereto, followed by polymerization at 65°C for 2 hours. Finally, a cyclohexane solution (concentration of 20% by mass) containing 8 parts by mass of styrene was added thereto, followed by polymerization at 65°C for 1 hour. Thereafter, methanol was added thereto to stop the polymerization reaction.

A block copolymer obtained in this manner had a styrene content of 61% by mass, a polystyrene block content of 16% by mass, a vinyl bond content of 43% by mass, and a weight average molecular weight of 110,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-96.

The hydrogenated block copolymer (I)-96 thus obtained had a hydrogenation rate of 98%. The other physical properties thereof are shown in Table 8.

### [Example 97]

### (Hydrogenated Block Copolymer (I)-97)

A tank reactor (having a capacity of 10 L) equipped with a stirrer and a jacket was used for performing batch polymerization.

First, a cyclohexane solution (concentration of 20% by mass) containing 13 parts by mass of styrene was charged.

Next, n-butyllithium was added in a ratio of 0.080 parts by mass with respect to 100 parts by mass of all monomers, N,N,N',N'-tetramethylethylenediamine (hereinafter referred to as the "TMEDA") was added in a ratio of 0.85 moles based on 1 mole of n-butyllithium, and the resultant was polymerized at 65°C for 1 hour.

Next, a cyclohexane solution (concentration of 20% by mass) containing 14 parts by mass of butadiene and 33 parts by mass of styrene was added thereto, followed by polymerization at 80°C for 2 hours. Finally, a cyclohexane solution (concentration of 20% by mass) containing 13 parts by mass of styrene was added thereto, followed by polymerization at 65°C for 1 hour. Thereafter, methanol was added thereto to stop the polymerization reaction.

A block copolymer obtained in this manner had a styrene content of 59% by mass, a polystyrene block content of 26% by mass, a vinyl bond content of 47% by mass, and a weight average molecular weight of 100,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-97.

The hydrogenated block copolymer (I)-97 thus obtained had a hydrogenation rate of 98%. The other physical properties thereof are shown in Table 8.

### [Example 98]

### (Hydrogenated Block Copolymer (I)-98)

A tank reactor (having a capacity of 10 L) equipped with a stirrer and a jacket was used for performing batch polymerization.

First, a cyclohexane solution (concentration of 20% by mass) containing 14 parts by mass of styrene was charged.

Next, n-butyllithium was added in a ratio of 0.082 parts by mass with respect to 100 parts by mass of all monomers, N,N,N',N'-tetramethylethylenediamine (hereinafter referred to as the "TMEDA") was added in a ratio of 0.70 moles based on 1 mole of n-butyllithium, and the resultant was polymerized at 65°C for 1 hour.

Next, a cyclohexane solution (concentration of 20% by mass) containing 36 parts by mass of butadiene and 36 parts by mass of styrene was added thereto, followed by polymerization at 80°C for 2 hours. Finally, a cyclohexane solution (concentration of 20% by mass) containing 14 parts by mass of styrene was added thereto, followed by polymerization at 65°C for 1 hour. Thereafter, methanol was added thereto to stop the polymerization reaction.

A block copolymer obtained in this manner had a styrene content of 64% by mass, a polystyrene block content of 28% by mass, a vinyl bond content of 30% by mass, and a weight average molecular weight of 95,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-98.

The hydrogenated block copolymer (I)-98 thus obtained had a hydrogenation rate of 98%. The other physical properties thereof are shown in Table 8.

### [Example 99]

### (Hydrogenated Block Copolymer (I)-99)

A tank reactor (having a capacity of 10 L) equipped with a stirrer and a jacket was used for performing batch polymerization.

First, a cyclohexane solution (concentration of 20% by mass) containing 13 parts by mass of styrene was charged.

Next, n-butyllithium was added in a ratio of 0.084 parts by mass with respect to 100 parts by mass of all monomers, N,N,N',N'-tetramethylethylenediamine (hereinafter referred to as the "TMEDA") was added in a ratio of 0.60 moles based on 1 mole of n-butyllithium, and the resultant was polymerized at 80°C for 1 hour.

Next, a cyclohexane solution (concentration of 20% by mass) containing 30 parts by mass of butadiene and 44 parts by mass of styrene was added thereto, followed by polymerization at 80°C for 2 hours. Finally, a cyclohexane solution (concentration of 20% by mass) containing 13 parts by mass of styrene was added thereto, followed by polymerization at 65°C for 1 hour. Thereafter, methanol was added thereto to stop the polymerization reaction.

A block copolymer obtained in this manner had a styrene content of 70% by mass, a polystyrene block content of 26% by mass, a vinyl bond content of 18% by mass, and a weight average molecular weight of 90,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-99.

The hydrogenated block copolymer (I)-99 thus obtained had a hydrogenation rate of 98%. The other physical properties thereof are shown in Table 8.

### [Example 100]

### (Hydrogenated Block Copolymer (I)-100)

A tank reactor (having a capacity of 10 L) equipped with a stirrer and a jacket was used for performing batch polymerization.

First, a cyclohexane solution (concentration of 20% by mass) containing 13 parts by mass of styrene was charged.

Next, n-butyllithium was added in a ratio of 0.084 parts by mass with respect to 100 parts by mass of all monomers, N,N,N',N'-tetramethylethylenediamine (hereinafter referred to as the "TMEDA") was added in a ratio of 0.35 moles based on 1 mole of n-butyllithium, and the resultant was polymerized at 80°C for 1 hour.

Next, a cyclohexane solution (concentration of 20% by mass) containing 30 parts by mass of butadiene and 44 parts by mass of styrene was added thereto, followed by polymerization at 80°C for 2 hours. Finally, a cyclohexane solution (concentration of 20% by mass) containing 13 parts by mass of styrene was added thereto, followed by polymerization at 65°C for 1 hour. Thereafter, methanol was added thereto to stop the polymerization reaction.

A block copolymer obtained in this manner had a styrene content of 70% by mass, a polystyrene block content of 26% by mass, a vinyl bond content of 15% by mass, and a weight average molecular weight of 90,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-100.

The hydrogenated block copolymer (I)-100 thus obtained had a hydrogenation rate of 98%. The other physical properties thereof are shown in Table 8.

### [Comparative Example 1]

### (Hydrogenated Block Copolymer (I)-A)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.058 parts by mass with respect to 100 parts by mass of all monomers, N,N,N',N'-tetramethylethylenediamine (hereinafter referred to as the "TMEDA") was added in a ratio of 0.9 moles based on 1 mole of n-butyllithium, and the resultant was polymerized at 65°C for 1 hour.

Next, a cyclohexane solution (concentration of 20% by mass) containing 29 parts by mass of butadiene and 41 parts by mass of styrene was added thereto, followed by polymerization at 80°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 71% by mass, a polystyrene block content of 30% by mass, a vinyl bond content of 22% by mass, and a weight average molecular weight of 128,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-A.

The hydrogenated block copolymer (I)-A thus obtained had a hydrogenation rate of 98%. The other physical properties thereof are shown in Table 9.

### [Comparative Example 2]

### (Hydrogenated Block Copolymer (I)-B)

A tank reactor (having a capacity of 10 L) equipped with a stirrer and a jacket was used for performing batch polymerization.

First, a cyclohexane solution (concentration of 20% by mass) containing 4.5 parts by mass of styrene was charged.

Next, n-butyllithium was added in a ratio of 0.070 parts by mass with respect to 100 parts by mass of all monomers, N,N,N',N'-tetramethylethylenediamine (hereinafter referred to as the "TMEDA") was added in a ratio of 1.1 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 37 parts by mass of butadiene and 54 parts by mass of styrene was added thereto, followed by polymerization at 65°C for 2 hours. Finally, a cyclohexane solution (concentration of 20% by mass) containing 4.5 parts by mass of styrene was added thereto, followed by polymerization at 65°C for 1 hour. Thereafter, methanol was added thereto to stop the polymerization reaction.

A block copolymer obtained in this manner had a styrene content of 63% by mass, a polystyrene block content of 9% by mass, a vinyl bond content of 42% by mass, and a weight average molecular weight of 112,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-B.

The hydrogenated block copolymer (I)-B thus obtained had a hydrogenation rate of 98%. The other physical properties thereof are shown in Table 9.

### [Comparative Example 3]

### (Hydrogenated Block Copolymer (I)-C)

A tank reactor (having a capacity of 10 L) equipped with a stirrer and a jacket was used for performing batch polymerization.

First, a cyclohexane solution (concentration of 20% by mass) containing 21 parts by mass of styrene was charged.

Next, n-butyllithium was added in a ratio of 0.091 parts by mass with respect to 100 parts by mass of all monomers, N,N,N',N'-tetramethylethylenediamine (hereinafter referred to as the "TMEDA") was added in a ratio of 0.4 moles based on 1 mole of n-butyllithium, and the resultant was polymerized at 65°C for 1 hour.

Next, a cyclohexane solution (concentration of 20% by mass) containing 30 parts by mass of butadiene and 28 parts by mass of styrene was added thereto, followed by polymerization at 80°C for 2 hours. Finally, a cyclohexane solution (concentration of 20% by mass) containing 21 parts by mass of styrene was added thereto, followed by polymerization at 65°C for 1 hour. Thereafter, methanol was added thereto to stop the polymerization reaction.

A block copolymer obtained in this manner had a styrene content of 70% by mass, a polystyrene block content of 42% by mass, a vinyl bond content of 22% by mass, and a weight average molecular weight of 83,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-C.

The hydrogenated block copolymer (I)-C thus obtained had a hydrogenation rate of 98%. The other physical properties thereof are shown in Table 9.

### [Comparative Example 4]

### (Hydrogenated Block Copolymer (I)-D)

A tank reactor (having a capacity of 10 L) equipped with a stirrer and a jacket was used for performing batch polymerization.

First, a cyclohexane solution (concentration of 20% by mass) containing 15 parts by mass of styrene was charged.

Next, n-butyllithium was added in a ratio of 0.139 parts by mass with respect to 100 parts by mass of all monomers, N,N,N',N'-tetramethylethylenediamine (hereinafter referred to as the "TMEDA") was added in a ratio of 1.80 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 50 parts by mass of butadiene and 20 parts by mass of styrene was added thereto, followed by polymerization at 60°C for 2 hours. Finally, a cyclohexane solution (concentration of 20% by mass) containing 15 parts by mass of styrene was added thereto, followed by polymerization at 65°C for 1 hour. Thereafter, methanol was added thereto to stop the polymerization reaction.

A block copolymer obtained in this manner had a styrene content of 50% by mass, a polystyrene block content of 30% by mass, a vinyl bond content of 80% by mass, and a weight average molecular weight of 60,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-D.

The hydrogenated block copolymer (I)-D thus obtained had a hydrogenation rate of 98%. The other physical properties thereof are shown in Table 9.

### [Comparative Example 5]

### (Hydrogenated Block Copolymer (I)-E)

A tank reactor (having a capacity of 10 L) equipped with a stirrer and a jacket was used for performing batch polymerization.

First, a cyclohexane solution (concentration of 20% by mass) containing 5.5 parts by mass of styrene was charged.

Next, n-butyllithium was added in a ratio of 0.085 parts by mass with respect to 100 parts by mass of all monomers, N,N,N',N'-tetramethylethylenediamine (hereinafter referred to as the "TMEDA") was added in a ratio of 0.6 moles based on 1 mole of n-butyllithium, and the resultant was polymerized at 65°C for 1 hour.

Next, a cyclohexane solution (concentration of 20% by mass) containing 18 parts by mass of butadiene and 71 parts by mass of styrene was added thereto, followed by polymerization at 65°C for 2 hours. Finally, a cyclohexane solution (concentration of 20% by mass) containing 5.5 parts by mass of styrene was added thereto, followed by polymerization at 65°C for 1 hour. Thereafter, methanol was added thereto to stop the polymerization reaction.

A block copolymer obtained in this manner had a styrene content of 82% by mass, a polystyrene block content of 11% by mass, a vinyl bond content of 10% by mass, and a weight average molecular weight of 83,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-E.

The hydrogenated block copolymer (I)-E thus obtained had a hydrogenation rate of 98%. The other physical properties thereof are shown in Table 9.

### [Comparative Example 6]

### (Hydrogenated Block Copolymer (I)-F)

A tank reactor (having a capacity of 10 L) equipped with a stirrer and a jacket was used for performing batch polymerization.

First, a cyclohexane solution (concentration of 20% by mass) containing 10 parts by mass of styrene was charged.

Next, n-butyllithium was added in a ratio of 0.190 parts by mass with respect to 100 parts by mass of all monomers, N,N,N',N'-tetramethylethylenediamine (hereinafter referred to as the "TMEDA") was added in a ratio of 0.10 moles based on 1 mole of n-butyllithium, sodium-t-pentoxide was added in a ratio of 0.01 moles based on 1 mole of n-butyllithium, and the resultant was polymerized at 65°C for 1 hour.

Next, a cyclohexane solution (concentration of 20% by mass) containing 55 parts by mass of butadiene and 25 parts by mass of styrene was added thereto, followed by polymerization at 70°C for 2 hours. Finally, a cyclohexane solution (concentration of 20% by mass) containing 10 parts by mass of styrene was added thereto, followed by polymerization at 65°C for 1 hour. Thereafter, methanol was added thereto to stop the polymerization reaction.

A block copolymer obtained in this manner had a styrene content of 45% by mass, a polystyrene block content of 20% by mass, a vinyl bond content of 12% by mass, and a weight average molecular weight of 47,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-F.

The hydrogenated block copolymer (I)-F thus obtained had a hydrogenation rate of 98%. The other physical properties thereof are shown in Table 9.

### [Comparative Example 7]

### (Hydrogenated Block Copolymer (I)-G)

A tank reactor (having a capacity of 10 L) equipped with a stirrer and a jacket was used for performing batch polymerization.

First, a cyclohexane solution (concentration of 20% by mass) containing 17 parts by mass of styrene was charged.

Next, n-butyllithium was added in a ratio of 0.077 parts by mass with respect to 100 parts by mass of all monomers, N,N,N',N'-tetramethylethylenediamine (hereinafter referred to as the "TMEDA") was added in a ratio of 1.80 moles based on 1 mole of n-butyllithium, sodium-t-pentoxide was added in a ratio of 0.04 moles based on 1 mole of n-butyllithium, and the resultant was polymerized at 65°C for 1 hour.

Next, a cyclohexane solution (concentration of 20% by mass) containing 24 parts by mass of butadiene and 42 parts by mass of styrene was added thereto, followed by polymerization at 65°C for 2 hours. Finally, a cyclohexane solution (concentration of 20% by mass) containing 17 parts by mass of styrene was added thereto, followed by polymerization at 65°C for 1 hour. Thereafter, methanol was added thereto to stop the polymerization reaction.

A block copolymer obtained in this manner had a styrene content of 76% by mass, a polystyrene block content of 34% by mass, a vinyl bond content of 40% by mass, and a weight average molecular weight of 94,000.

To the thus obtained block copolymer, the hydrogenation catalyst prepared as described above was added in an amount of 100 ppm, in terms of Ti, based on 100 parts by mass of the block copolymer, followed by a hydrogenation reaction at a hydrogen pressure of 0.7 MPa and a temperature of 65°C.

Next, octadecyl-3-(3,5-di-t-butyl-4-hydroxyphenyl)propionate, used as a stabilizer, was added in an amount of 0.3 parts by mass with respect to 100 parts by mass of the block copolymer to obtain a hydrogenated block copolymer (I)-G.

The hydrogenated block copolymer (I)-G thus obtained had a hydrogenation rate of 98%. The other physical properties thereof are shown in Table 9.

### [Production of Pressed Sheet]

Each of the hydrogenated block copolymers (I)-1 to (I)-52, (I)-95 to (I)-100, and (I)-A to (I)-G produced as described above was rolled out by using a 4-inch roll at 160°C, and the resultant was pressed at 200°C and 100 kg/cm² by using a hydraulic press to produce a pressed sheet having a thickness of 2 mm.

The hydrogenated block copolymers (I)-1 to (I)-52, (I)-95 to (I)-100, and (I)-A to (I)-G of Examples 1 to 52 and 95 to 100, and Comparative Examples 1 to 7 described above were measured for values of the following items:

### (Structural Analysis Values)

Content (% by mass) of all vinyl aromatic monomer units (styrene) in hydrogenated block copolymer (I)
Content (% by mass) of polymer block (polystyrene block) (a) principally containing vinyl aromatic monomer unit in hydrogenated block copolymer (I)
Content (% by mass) of hydrogenated copolymer block (b) containing vinyl aromatic monomer unit and conjugated diene monomer unit in hydrogenated block copolymer (I)
Content (% by mass) of a vinyl aromatic monomer unit in hydrogenated copolymer block (b)
Content (% by mass) of a vinyl aromatic monomer unit in hydrogenated copolymer block (b) in entire hydrogenated block copolymer (I)
Content (% by mass) of conjugated diene in hydrogenated copolymer block (b) in entire hydrogenated block copolymer (I)
Content (% by mass) of hydrogenated polymer block (c) principally containing conjugated diene monomer unit Number of hydrogenated polymer blocks (c)
Vinyl bond content (% by mass) in hydrogenated block copolymer (I) before hydrogenation
Vinyl bond content (% by mass) in hydrogenated copolymer block (b) before hydrogenation
Vinyl bond content (% by mass) in hydrogenated polymer block (c) before hydrogenation
Molecular weight distribution of hydrogenated block copolymer (I)
Weight average molecular weight (ten thousand) of hydrogenated block copolymer (I)
Hydrogenation rate (%) of double bond of conjugated diene monomer unit of hydrogenated block copolymer (I)

### (Physical Properties)

- Melt flow rate (MFR: 230°C, 2.16 kg)
- tanδ peak temperature (°C) at -20 to 60°C in viscoelasticity measurement chart
- Hardness A (instantaneous), Hardness D (instantaneous)
- Pellet blocking resistance

It is noted that the polymer blocks (a) to (c) respectively refer to the following polymer blocks:
Polymer block (a): polymer block principally containing vinyl aromatic monomer unit
Hydrogenated copolymer block (b): hydrogenated copolymer block containing vinyl aromatic monomer unit and conjugate diene monomer unit, excluding polymer block (a) and hydrogenated polymer block (c)
Hydrogenated polymer block (c): hydrogenated polymer block principally containing conjugated diene monomer unit

**[Table 1]**

| | Example 1 | Example 2 | Example 3 | Example 4 | Example 5 | Example 6 | Example 7 | Example 8 |
|---|---|---|---|---|---|---|---|---|
| Hydrogenated block copolymer | (I)-1 | (I)-2 | (I)-3 | (I)-4 | (I)-5 | (I)-6 | (I)-7 | (I)-8 |
| Content of all vinyl aromatic monomer unit (mass%) | 71 | 71 | 71 | 71 | 71 | 71 | 71 | 71 |
| Content of polymer block (a) (mass%) | 30 | 30 | 30 | 30 | 30 | 30 | 30 | 30 |
| Content of hydrogenated copolymer block (b) (mass%) | 70 | 70 | 70 | 70 | 70 | 70 | 70 | 70 |
| Content of vinyl aromatic monomer unit in hydrogenated copolymer block (b) (mass%) | 59 | 59 | 59 | 59 | 59 | 59 | 59 | 59 |
| Content in entire polymer of vinyl aromatic monomer unit in hydrogenated copolymer block (b) (mass%) | 41 | 41 | 41 | 41 | 41 | 41 | 41 | 41 |
| Content in entire polymer of conjugated diene in hydrogenated copolymer block (b) (mass%) | 29 | 29 | 29 | 29 | 29 | 29 | 29 | 29 |
| Content of hydrogenated polymer block (c) (mass%) | 0 | 0 | 0 | 0 | 0 | 0 | 0 | 0 |
| Number of blocks (c) | 0 | 0 | 0 | 0 | 0 | 0 | 0 | 0 |
| Vinyl bond content in hydrogenated block copolymer (I) (mass%) | 22 | 22 | 22 | 22 | 22 | 22 | 22 | 22 |
| Vinyl bond content in hydrogenated copolymer block (b) (mass%) | 22 | 22 | 22 | 22 | 22 | 22 | 22 | 22 |
| Vinyl bond content in hydrogenated polymer block (c) (mass%) | - | - | - | - | - | - | - | - |
| Molecular weight distribution | 1.06 | 1.06 | 1.06 | 1.06 | 1.06 | 1.06 | 1.06 | 1.06 |
| Weight average molecular weight (ten thousand) | 8.8 | 5 | 9.3 | 10.2 | 10.6 | 11 | 11.9 | 12.3 |
| Hydrogenation rate of double bond in conjugated diene monomer unit (%) | 98 | 98 | 98 | 98 | 98 | 98 | 98 | 98 |
| MFR(230°C, 2.16kg) | 53 | 200 | 45 | 32 | 29 | 17 | 14 | 11 |
| Hardness (JIS-A, instantaneous) | 92 | 92 | 92 | 92 | 92 | 92 | 92 | 92 |
| Hardness (JIS-D, instantaneous) | 43 | 43 | 43 | 43 | 43 | 43 | 43 | 43 |
| tan δ Peak Temperature (°C) at -20 to 60°C | 17 | 17 | 17 | 17 | 17 | 17 | 17 | 17 |
| Pellet blocking rate | 6 | 5 | 3 | 4 | 6 | 3 | 6 | 7 |
| Evaluation of pellet blocking resistance | 10 | 10 | 10 | 10 | 10 | 10 | 10 | 10 |

**[Table 2]**

| | Example 9 | Example 10 | Example 11 | Example 12 | Example 13 | Example 14 | Example 15 | Example 16 | Example 17 | Example 18 |
|---|---|---|---|---|---|---|---|---|---|---|
| Hydrogenated block copolymer | (I)-9 | (I)-10 | (I)-11 | (I)-12 | (I)-13 | (I)-14 | (I)-15 | (I)-16 | (I)-17 | (I)-18 |
| Content of all vinyl aromatic monomer unit (mass%) | 64 | 65 | 66 | 66 | 68 | 69 | 70 | 73 | 72 | 71 |
| Content of polymer block (a) (mass%) | 12 | 14 | 16 | 18 | 21 | 24 | 26 | 34 | 36 | 38 |
| Content of hydrogenated copolymer block (b) (mass%) | 88 | 86 | 84 | 82 | 79 | 76 | 74 | 66 | 64 | 62 |
| Content of vinyl aromatic monomer unit in hydrogenated copolymer block (b) (mass%) | 59 | 59 | 59 | 59 | 59 | 59 | 59 | 59 | 56 | 53 |
| Content in entire polymer of vinyl aromatic monomer unit in hydrogenated copolymer block (b) (mass%) | 52 | 51 | 50 | 48 | 47 | 45 | 44 | 39 | 36 | 33 |
| Content in entire polymer of conjugated diene in hydrogenated copolymer block (b) (mass%) | 36 | 35 | 34 | 34 | 32 | 31 | 30 | 27 | 28 | 29 |
| Content of hydrogenated polymer block (c) (mass%) | 0 | 0 | 0 | 0 | 0 | 0 | 0 | 0 | 0 | 0 |
| Number of blocks (c) | 0 | 0 | 0 | 0 | 0 | 0 | 0 | 0 | 0 | 0 |
| Vinyl bond content in hydrogenated block copolymer (I) (mass%) | 20 | 38 | 36 | 34 | 32 | 28 | 26 | 22 | 22 | 22 |
| Vinyl bond content in hydrogenated copolymer block (b) (mass%) | 20 | 38 | 36 | 34 | 32 | 28 | 26 | 22 | 22 | 22 |
| Vinyl bond content in hydrogenated polymer block (c) (mass%) | - | - | - | - | - | - | - | - | - | - |
| Molecular weight distribution | 1.06 | 1.06 | 1.06 | 1.06 | 1.06 | 1.06 | 1.06 | 1.06 | 1.06 | 1.06 |
| Weight average molecular weight (ten thousand) | 11 | 10.3 | 10.2 | 9.9 | 9.7 | 9.3 | 9.2 | 8.7 | 8.5 | 8.6 |
| Hydrogenation rate of double bond in conjugated diene monomer unit (%) | 98 | 98 | 98 | 98 | 98 | 98 | 98 | 98 | 98 | 98 |
| MFR(230°C, 2.16kg) | 53 | 54 | 51 | 52 | 52 | 52 | 51 | 53 | 53 | 53 |
| Hardness (JIS-A, instantaneous) | 93 | 92 | 92 | 93 | 93 | 91 | 92 | 90 | 88 | 93 |
| Hardness (JIS-D, instantaneous) | 44 | 43 | 43 | 44 | 44 | 41 | 43 | 40 | 38 | 44 |
| tan δ Peak Temperature (°C) at -20 to 60°C | 29 | 28 | 27 | 26 | 25 | 23 | 22 | 18 | 14 | 10 |
| Pellet blocking rate | 46 | 47 | 26 | 23 | 17 | 17 | 3 | 4 | 3 | 4 |
| Evaluation of pellet blocking resistance | 6 | 6 | 8 | 8 | 9 | 9 | 10 | 10 | 10 | 10 |

**[Table 3]**

| | Example 19 | Example 20 | Example 21 | Example 22 | Example 23 | Example 24 |
|---|---|---|---|---|---|---|
| Hydrogenated block copolymer | (I)-19 | (I)-20 | (I)-21 | (I)-22 | (I)-23 | (I)-24 |
| Content of all vinyl aromatic monomer unit (mass%) | 52 | 61 | 63 | 76 | 78 | 80 |
| Content of polymer block (a) (mass%) | 30 | 30 | 30 | 25 | 25 | 11 |
| Content of hydrogenated copolymer block (b) (mass%) | 70 | 70 | 70 | 75 | 75 | 89 |
| Content of vinyl aromatic monomer unit in hydrogenated copolymer block (b) (mass%) | 31 | 44 | 47 | 68 | 71 | 77 |
| Content in entire polymer of vinyl aromatic monomer unit in hydrogenated copolymer block (b) (mass%) | 22 | 31 | 33 | 51 | 53 | 69 |
| Content in entire polymer of conjugated diene in hydrogenated copolymer block (b) (mass%) | 48 | 39 | 37 | 24 | 22 | 20 |
| Content of hydrogenated polymer block (c) (mass%) | 0 | 0 | 0 | 0 | 0 | 0 |
| Number of blocks (c) | 0 | 0 | 0 | 0 | 0 | 0 |
| Vinyl bond content in hydrogenated block copolymer (l) (mass%) | 73 | 47 | 42 | 10 | 10 | 10 |
| Vinyl bond content in hydrogenated copolymer block (b) (mass%) | 73 | 47 | 42 | 10 | 10 | 10 |
| Vinyl bond content in hydrogenated polymer block (c) (mass%) | - | - | - | - | - | - |
| Molecular weight distribution | 1.06 | 1.06 | 1.06 | 1.06 | 1.06 | 1.06 |
| Weight average molecular weight (ten thousand) | 7 | 9 | 9.2 | 8.5 | 8.7 | 8.5 |
| Hydrogenation rate of double bond in conjugated diene monomer unit (%) | 98 | 98 | 98 | 98 | 98 | 98 |
| MFR(230°C, 2.16kg) | 51 | 50 | 52 | 50 | 51 | 55 |
| Hardness (JIS-A, instantaneous) | 87 | 90 | 91 | 92 | 95 | >95 |
| Hardness (JIS-D, instantaneous) | 37 | 40 | 41 | 43 | 47 | 62 |
| tan δ Peak Temperature (°C) at -20 to 60°C | 20 | 20 | 20 | 28 | 30 | 45 |
| Pellet blocking rate | 3 | 3 | 5 | 7 | 5 | 44 |
| Evaluation of pellet blocking resistance | 10 | 10 | 10 | 10 | 10 | 6 |

**[Table 4]**

| | Example 25 | Example 26 | Example 27 | Example 28 | Example 29 | Example 30 | Example 31 | Example 32 | Example 33 | Example 34 | Example 35 |
|---|---|---|---|---|---|---|---|---|---|---|---|
| Hydroqenated block copolymer | (I)-25 | (I)-26 | (I)-27 | (I)-28 | (I)-29 | (I)-30 | (I)-31 | (I)-32 | (I)-33 | (I)-34 | (I)-35 |
| Content of all vinyl aromatic monomer unit (mass%) | 45 | 45 | 48 | 56 | 56 | 67 | 69 | 73 | 76 | 76 | 76 |
| Content of polymer block (a) (mass%) | 20 | 20 | 20 | 20 | 20 | 20 | 24 | 34 | 34 | 34 | 34 |
| Content of hydrogenated copolymer block (b) (mass%) | 80 | 80 | 80 | 80 | 80 | 80 | 76 | 66 | 66 | 66 | 66 |
| Content of vinyl aromatic monomer unit in hydrogenated copolymer block (b) (mass%) | 31 | 31 | 35 | 45 | 45 | 59 | 59 | 59 | 64 | 64 | 64 |
| Content in entire polymer of vinyl aromatic monomer unit in hydrogenated copolymer block (b) (mass%) | 25 | 25 | 28 | 36 | 36 | 47 | 45 | 39 | 42 | 42 | 42 |
| Content in entire polymer of conjugated diene in hydrogenated copolymer block (b) (mass%) | 55 | 55 | 52 | 44 | 44 | 33 | 31 | 27 | 24 | 24 | 24 |
| Content of hydrogenated polymer block (c) (mass%) | 0 | 0 | 0 | 0 | 0 | 0 | 0 | 0 | 0 | 0 | 0 |
| Number of blocks (c) | 0 | 0 | 0 | 0 | 0 | 0 | 0 | 0 | 0 | 0 | 0 |
| Vinyl bond content in hydrogenated block copolymer (I) (mass%) | 20 | 50 | 50 | 50 | 55 | 21 | 21 | 22 | 21 | 25 | 30 |
| Vinyl bond content in hydrogenated copolymer block (b) (mass%) | 20 | 50 | 50 | 50 | 55 | 21 | 21 | 22 | 21 | 25 | 30 |
| Vinyl bond content in hydrogenated polymer block (c) (mass%) | - | - | - | - | - | - | - | - | - | - | - |
| Molecular weight distribution | 1.06 | 1.06 | 1.06 | 1.06 | 1.06 | 1.06 | 1.06 | 1.06 | 1.06 | 1.06 | 1.06 |
| Weight average molecular weight (ten thousand) | 4.8 | 7 | 7.5 | 9.2 | 8 | 8.5 | 8.5 | 8.8 | 8.8 | 9 | 9 |
| Hydrogenation rate of double bond in conjugated diene monomer unit (%) | 98 | 98 | 98 | 98 | 98 | 98 | 98 | 98 | 98 | 98 | 98 |
| MFR(230°C, 2.16kg) | 55 | 55 | 55 | 56 | 56 | 53 | 57 | 51 | 57 | 59 | 58 |
| Hardness (JIS-A, instantaneous) | 62 | 68 | 71 | 79 | 81 | 83 | 86 | 95 | >95 | >95 | >95 |
| Hardness (JIS-D, instantaneous) | 17 | 21 | 23 | 29 | 31 | 32 | 36 | 47 | 54 | 56 | 64 |
| tan δ Peak Temperature (°C) at -20 to 60°C | -10 | 0 | 4 | 14 | 17 | 21 | 18 | 15 | 26 | 28 | 32 |
| Pellet blocking rate | 53 | 56 | 37 | 37 | 26 | 25 | 15 | 6 | 5 | 5 | 6 |
| Evaluation of pellet blocking resistance | 5 | 5 | 7 | 7 | 8 | 8 | 9 | 10 | 10 | 10 | 10 |

**[Table 5]**

| | Example 36 | Example 37 | Example 38 |
|---|---|---|---|
| Hydrogenated block copolymer | (I)-36 | (I)-37 | (I)-38 |
| Content of all vinyl aromatic monomer unit (mass%) | 71 | 71 | 71 |
| Content of polymer block (a) (mass%) | 30 | 30 | 30 |
| Content of hydrogenated copolymer block (b) (mass%) | 70 | 70 | 70 |
| Content of vinyl aromatic monomer unit in hydrogenated copolymer block (b) (mass%) | 59 | 59 | 59 |
| Content in entire polymer of vinyl aromatic monomer unit in hydrogenated copolymer block (b) (mass%) | 41 | 41 | 41 |
| Content in entire polymer of conjugated diene in hydrogenated copolymer block (b) (mass%) | 29 | 29 | 29 |
| Content of hydrogenated polymer block (c) (mass%) | 0 | 0 | 0 |
| Number of blocks (c) | 0 | 0 | 0 |
| Vinyl bond content in hydrogenated block copolymer (I) (mass%) | 18 | 28 | 31 |
| Vinyl bond content in hydrogenated copolymer block (b) (mass%) | 18 | 28 | 31 |
| Vinyl bond content in hydrogenated polymer block (c) (mass%) | - | - | - |
| Molecular weight distribution | 1.06 | 1.06 | 1.06 |
| Weight average molecular weight (ten thousand) | 8.8 | 8.8 | 8.8 |
| Hydrogenation rate of double bond in conjugated diene monomer unit (%) | 98 | 98 | 98 |
| MFR(230°C, 2.16kg) | 50 | 59 | 60 |
| Hardness (JIS-A, instantaneous) | 90 | 93 | 93 |
| Hardness (JIS-D, instantaneous) | 40 | 44 | 44 |
| tan δ Peak Temperature (°C) at -20 to 60°C | 13 | 20 | 22 |
| Pellet blocking rate | 4 | 5 | 4 |
| Evaluation of pellet blocking resistance | 10 | 10 | 10 |

**[Table 6]**

| | Example 39 | Example 40 | Example 41 | Example 42 | Example 43 | Example 44 |
|---|---|---|---|---|---|---|
| Hydrogenated block copolymer | (I)-39 | (I)-40 | (I)-41 | (I)-42 | (I)-43 | (I)-44 |
| Content of all vinyl aromatic monomer unit (mass%) | 70 | 68 | 59 | 54 | 48 | 51 |
| Content of polymer block (a) (mass%) | 30 | 30 | 30 | 30 | 30 | 30 |
| Content of hydrogenated copolymer block (b) (mass%) | 67 | 65 | 49 | 40 | 30 | 30 |
| Content of vinyl aromatic monomer unit in hydrogenated copolymer block (b) (mass%) | 59 | 59 | 59 | 59 | 59 | 69 |
| Content in entire polymer of vinyl aromatic monomer unit in hydrogenated copolymer block (b) (mass%) | 40 | 38 | 29 | 24 | 18 | 21 |
| Content in entire polymer of conjugated diene in hydrogenated copolymer block (b) (mass%) | 27 | 27 | 20 | 16 | 12 | 9 |
| Content of hydrogenated polymer block (c) (mass%) | 3 | 5 | 19 | 30 | 40 | 40 |
| Number of blocks (c) | 1 | 1 | 1 | 1 | 1 | 1 |
| Vinyl bond content in hydrogenated block copolymer (I) (mass%) | 25 | 28 | 44 | 50 | 60 | 70 |
| Vinyl bond content in hydrogenated copolymer block (b) (mass%) | 22 | 22 | 22 | 22 | 22 | 22 |
| Vinyl bond content in hydrogenated polymer block (c) (mass%) | 52 | 60 | 72 | 65 | 72 | 81 |
| Molecular weight distribution | 1.06 | 1.06 | 1.06 | 1.06 | 1.06 | 1.06 |
| Weight average molecular weight (ten thousand) | 9 | 9.3 | 8.5 | 8 | 7.5 | 7.7 |
| Hydrogenation rate of double bond in conjugated diene monomer unit (%) | 98 | 98 | 98 | 98 | 98 | 98 |
| MFR(230°C, 2.16kg) | 87 | 85 | 80 | 85 | 80 | 82 |
| Hardness (JIS-A, instantaneous) | 90 | 90 | 90 | 88 | 86 | 86 |
| Hardness (JIS-D, instantaneous) | 40 | 40 | 40 | 38 | 36 | 36 |
| tan δ Peak Temperature (°C) at -20 to 60°C | 13 | 12 | 12 | 12 | 12 | 12 |
| Pellet blocking rate | 5 | 5 | 5 | 5 | 4 | 7 |
| Evaluation of pellet blocking resistance | 10 | 10 | 10 | 10 | 10 | 10 |

**[Table 7]**

| | Example 45 | Example 46 | Example 47 | Example 48 | Example 49 | Example 50 | Example 51 | Example 52 |
|---|---|---|---|---|---|---|---|---|
| Hydrogenated block copolymer | (I)-45 | (I)-46 | (I)-47 | (I)-48 | (I)-49 | (I)-50 | (I)-51 | (I)-52 |
| Content of all vinyl aromatic monomer unit (mass%) | 62 | 64 | 66 | 65 | 62 | 64 | 60 | 62 |
| Content of polymer block (a) (mass%) | 30 | 30 | 30 | 30 | 30 | 30 | 30 | 30 |
| Content of hydrogenated copolymer block (b) (mass%) | 54 | 58 | 61 | 60 | 55 | 58 | 51 | 54 |
| Content of vinyl aromatic monomer unit in hydrogenated copolymer block (b) (mass%) | 59 | 59 | 59 | 59 | 59 | 59 | 59 | 59 |
| Content in entire polymer of vinyl aromatic monomer unit in hydrogenated copolymer block (b) (mass%) | 32 | 34 | 36 | 35 | 32 | 34 | 30 | 32 |
| Content in entire polymer of conjugated diene in hydrogenated copolymer block (b) (mass%) | 22 | 24 | 25 | 25 | 23 | 24 | 21 | 22 |
| Content of hydrogenated polymer block (c) (mass%) | 16 | 12 | 9 | 10 | 15 | 12 | 19 | 16 |
| Number of blocks (c) | 2 | 2 | 2 | 2 | 3 | 3 | 3 | 4 |
| Vinyl bond content in hydrogenated block copolymer (I) (mass%) | 51 | 46 | 46 | 43 | 50 | 45 | 55 | 60 |
| Vinyl bond content in hydrogenated copolymer block (b) (mass%) | 36 | 36 | 34 | 38 | 33 | 32 | 37 | 38 |
| Vinyl bond content in hydrogenated polymer block (c) (mass%) | 72 | 66 | 79 | 55 | 76 | 71 | 75 | 90 |
| Molecular weight distribution | 1.06 | 1.06 | 1.06 | 1.06 | 1.06 | 1.06 | 1.06 | 1.06 |
| Weight average molecular weight (ten thousand) | 10 | 9.4 | 9.5 | 8.5 | 10 | 9.6 | 8 | 9.6 |
| Hydrogenation rate of double bond in conjugated diene monomer unit (%) | 98 | 98 | 98 | 98 | 98 | 98 | 98 | 98 |
| MFR(230°C, 2.16kg) | 90 | 85 | 85 | 84 | 95 | 90 | 85 | 87 |
| Hardness (JIS-A, instantaneous) | 92 | 92 | 93 | 92 | 93 | 92 | 93 | 92 |
| Hardness (JIS-D, instantaneous) | 43 | 43 | 44 | 43 | 44 | 43 | 44 | 43 |
| tan δ Peak Temperature (°C) at -20 to 60°C | 20 | 20 | 20 | 20 | 20 | 20 | 20 | 20 |
| Pellet blocking rate | 7 | 6 | 3 | 5 | 3 | 6 | 7 | 6 |
| Evaluation of pellet blocking resistance | 10 | 10 | 10 | 10 | 10 | 10 | 10 | 10 |

**[Table 8]**

| | Example 95 | Example 96 | Example 97 | Example 98 | Example 99 | Example 100 |
|---|---|---|---|---|---|---|
| Hydrogenated block copolymer | (I)-95 | (I)-96 | (I)-97 | (I)-98 | (I)-99 | (I)-100 |
| Content of all vinyl aromatic compounds (mass%) | 61 | 61 | 59 | 64 | 70 | 70 |
| Content of polymer block (a) (mass%) | 16 | 16 | 26 | 28 | 26 | 26 |
| Content of hydrogenated copolymer block (b) (mass%) | 84 | 84 | 47 | 72 | 74 | 74 |
| Content of vinyl aromatic compound in hydrogenated copolymer block (b) (mass%) | 54 | 54 | 71 | 50 | 59 | 59 |
| Content in entire polymer of vinyl aromatic compound in hydrogenated copolymer block (b) (mass%) | 45 | 45 | 33 | 36 | 44 | 44 |
| Content in entire polymer of conjugated diene in hydrogenated copolymer block (b) (mass%) | 39 | 39 | 14 | 36 | 30 | 30 |
| Content of hydrogenated polymer block (c) (mass%) | 0 | 0 | 27 | 0 | 0 | 0 |
| Number of blocks (c) | 0 | 0 | 1 | 0 | 0 | 0 |
| Vinyl bond content in hydrogenated block copolymer (I) (mass%) | 24 | 43 | 47 | 30 | 18 | 15 |
| Vinyl bond content in hydrogenated copolymer block (b) (mass%) | 24 | 43 | 24 | 30 | 18 | 15 |
| Vinyl bond content in hydrogenated polymer block (c) (mass%) | - | - | 59 | - | - | - |
| Molecular weight distribution | 1.06 | 1.06 | 1.06 | 1.06 | 1.06 | 1.06 |
| Weight average molecular weight (ten thousand) | 8.8 | 11 | 10 | 9.5 | 9 | 9 |
| Hydrogenation rate of double bond in conjugated diene monomer unit (%) | 98 | 98 | 98 | 98 | 98 | 98 |
| MFR(230°C, 2.16kg) | 53 | 53 | 55 | 51 | 56 | 52 |
| Hardness (JIS-A, instantaneous) | 76 | 86 | 95> | 83 | 86 | 84 |
| Hardness (JIS-D, instantaneous) | 26 | 36 | 67 | 32 | 36 | 33 |
| tan δ Peak Temperature (°C) at -20 to 60°C | 12 | 26 | 46 | 8 | 14 | 10 |
| Pellet blocking rate | 44 | 24 | 6 | 16 | 3 | 15 |
| Evaluation of pellet blocking resistance | 6 | 8 | 10 | 9 | 10 | 9 |

**[Table 9]**

| | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|
| Hydrogenated block copolymer | (I)-A | (I)-8 | (I)-C | (I)-D | (I)-E | (I)-F | (I)-G |
| Content of all vinyl aromatic monomer unit (mass%) | 71 | 63 | 70 | 50 | 82 | 45 | 76 |
| Content of polymer block (a) (mass%) | 30 | 9 | 42 | 30 | 11 | 20 | 34 |
| Content of hydrogenated copolymer block (b) (mass%) | 70 | 91 | 58 | 70 | 89 | 80 | 66 |
| Content of vinyl aromatic monomer unit in hydrogenated copolymer block (b) (mass%) | 59 | 59 | 48 | 29 | 80 | 31 | 64 |
| Content in entire polymer of vinyl aromatic monomer unit in hydrogenated copolymer block (b) (mass%) | 41 | 54 | 28 | 20 | 71 | 25 | 42 |
| Content in entire polymer of conjugated diene in hydrogenated copolymer block (b) (mass%) | 29 | 37 | 30 | 50 | 18 | 55 | 24 |
| Content of hydrogenated polymer block (c) (mass%) | 0 | 0 | 0 | 0 | 0 | 0 | 0 |
| Number of blocks (c) | 0 | 0 | 0 | 0 | 0 | 0 | 0 |
| Vinyl bond content in hydrogenated block copolymer (I) (mass%) | 22 | 42 | 22 | 80 | 10 | 12 | 40 |
| Vinyl bond content in hydrogenated copolymer block (b) (mass%) | 22 | 42 | 22 | 80 | 10 | 12 | 40 |
| Vinyl bond content in hydrogenated polymer block (c) (mass%) | - | - | - | - | - | - | - |
| Molecular weight distribution | 1.06 | 1.06 | 1.06 | 1.06 | 1.06 | 1.06 | 1.06 |
| Weight average molecular weight (ten thousand) | 12.8 | 11.2 | 8.3 | 6 | 8.3 | 4.7 | 9.4 |
| Hydrogenation rate of double bond in conjugated diene monomer unit (%) | 98 | 98 | 98 | 98 | 98 | 98 | 98 |
| MFR(230°C, 2.16kg) | 8 | 54 | 51 | 51 | 56 | 50 | 53 |
| Hardness (JIS-A, instantaneous) | 92 | 92 | 94 | 86 | >95 | 59 | >95 |
| Hardness (JIS-D, instantaneous) | 43 | 43 | 45 | 36 | 64 | 16 | 67 |
| tan δ Peak Temperature (°C) at -20 to 60°C | 17 | 30 | 0 | 20 | 49 | -13 | 40 |
| Pellet blocking rate | 3 | 87 | 7 | 7 | 43 | 93 | 7 |
| Evaluation of pellet blocking resistance | 10 | 2 | 10 | 10 | 6 | 1 | 10 |

### [Production of Hydrogenated Block Copolymer Composition]

Hydrogenated block copolymer compositions were produced by respectively using the hydrogenated block copolymers (I)-1 to (I)-52, (I)-95 to (I)-100, and (I)-A to (I)-G, and the following components (II) to (IV):
<Component (II)>
   Olefin-based resin: polypropylene resin, PM801A (manufactured by Sum Allomer, Ltd.)
<Component (III)>
   Thermoplastic resin: styrene-based thermoplastic elastomer, N504 (manufactured by Japan Elastomer Co., Ltd.)
<Component (IV)>
   Softener: paraffin oil, PW-90 (manufactured by Idemitsu Kosan Co., Ltd.)

It is noted that in the following specific examples of the hydrogenated block copolymer composition, examples using the polymers of the above-described examples are referred to as "Production Examples", and examples using the polymers of the comparative examples are referred to as "Production Comparative Examples".

### (Production Example 1)

The hydrogenated block copolymer (I)-1 formed into a pellet shape, the olefin-based resin (II), the thermoplastic resin (III), and the softener (IV) were compounded in a ratio (% by mass) shown in Table 10, the resultant was kneaded with a twin screw extruder (TEX-30) into a pellet shape, and thus, a hydrogenated block copolymer composition was obtained.

Conditions for extrusion were a cylinder temperature of 230°C, and a screw speed of 300 rpm.

The thus obtained hydrogenated block copolymer composition was used, and injection molded at 210°C to produce an injection molded sheet having a thickness of 2 mm, and thus, a physical property measurement sample was obtained.

Results of the physical property measurement are shown in Table 10.

### (Production Examples 2 to 54 and 95 to 100, and Production Comparative Examples 1 to 8)

Hydrogenated block copolymer compositions were produced in the same manner as in Production Example 1 described above except that the respective components were changed as shown in Tables 10 to 18 and 19, and their physical properties were measured.

Results of the physical property measurement are shown in Tables 10 to 19.

It was found that, from the hydrogenated block copolymers of Examples 1 to 52 and Examples 95 to 100, hydrogenated block copolymer pellets having high blocking resistance could be obtained, and that the hydrogenated block copolymer compositions of Production Examples 1 to 54 and 95 to 100 are excellent in processability, heat resistance, wear resistance, oil resistance and low temperature property.

**[Table 10]**

| (parts by mass) | Production Example 1 | Production Example 2 | Production Example 3 | Production Example 4 | Production Example 5 | Production Example 6 | Production Example 7 | Production Example 8 |
|---|---|---|---|---|---|---|---|---|
| Hydrogenated block polymer (I)-1 | 50 | - | - | - | - | - | - | - |
| Hydrogenated block polymer (I)-2 | - | 50 | - | - | - | - | - | - |
| Hydrogenated block polymer (I)-3 | - | - | 50 | - | - | - | - | - |
| Hydrogenated block polymer (I)-4 | - | - | - | 50 | - | - | - | - |
| Hydrogenated block polymer (I)-5 | - | - | - | - | 50 | - | - | - |
| Hydrogenated block polymer (I)-6 | - | - | - | - | - | 50 | - | - |
| Hydrogenated block polymer (I)-7 | - | - | - | - | - | - | 50 | - |
| Hydrogenated block polymer (I)-8 | - | - | - | - | - | - | - | 50 |
| Olefine-based resin (II) | 40 | 40 | 40 | 40 | 40 | 40 | 40 | 40 |
| Thermoplastic resin (III) | 50 | 50 | 50 | 50 | 50 | 50 | 50 | 50 |
| Softener (IV) | 80 | 80 | 80 | 80 | 80 | 80 | 80 | 80 |
| Processability (MFR (230°C, 2.16kg)) | 103 | 377 | 89 | 64 | 59 | 36 | 31 | 25 |
| Evaluation of processability (1-5) | 5 | 5 | 4 | 4 | 3 | 3 | 2 | 2 |
| Heat resistance(70°C C-Set(%)) | 69 | 68 | 67 | 69 | 68 | 67 | 67 | 69 |
| Evaluation of heat resistance (1-7) | 7 | 7 | 7 | 7 | 7 | 7 | 7 | 7 |
| Abrasion resistance (mass reduction after rubbing(mg)) | 72 | 78 | 78 | 74 | 78 | 71 | 74 | 71 |
| Evaluation of abrasion resistance (1-6) | 5 | 5 | 5 | 5 | 5 | 5 | 5 | 5 |
| Oil resistance (swelling rate (%)) | 45 | 45 | 44 | 44 | 44 | 46 | 45 | 46 |
| Oil resistance (1-3) | 3 | 3 | 3 | 3 | 3 | 3 | 3 | 3 |
| Low temperature property (elongation at break at -30°C (%)) | 125 | 124 | 126 | 125 | 122 | 122 | 126 | 128 |
| Evaluation of low temperature property (1-7) | 3 | 3 | 3 | 3 | 3 | 3 | 3 | 3 |

**[Table 11]**

| (parts by mass) | Production Example 9 | Production Example 10 | Production Example 11 | Production Example 12 | Production Example 13 | Production Example 14 | Production Example 15 | Production Example 16 | Production Example 17 | Production Example 18 |
|---|---|---|---|---|---|---|---|---|---|---|
| Hydrogenated block polymer (I)-9 | 50 | - | - | - | - | - | - | - | - | - |
| Hydrogenated block polymer (I)-10 | - | 50 | - | - | - | - | - | - | - | - |
| Hydrogenated block polymer (I)-11 | - | - | 50 | - | - | - | - | - | - | - |
| Hydrogenated block polymer (I)-12 | - | - | - | 50 | - | - | - | - | - | - |
| Hydrogenated block polymer (I)-13 | - | - | - | - | 50 | - | - | - | - | - |
| Hydrogenated block polymer (I)-14 | - | - | - | - | - | 50 | - | - | - | - |
| Hydrogenated block polymer (I)-15 | - | - | - | - | - | - | 50 | - | - | - |
| Hydrogenated block polymer (I)-16 | - | - | - | - | - | - | - | 50 | - | - |
| Hydrogenated block polymer (I)-17 | - | - | - | - | - | - | - | - | 50 | - |
| Hydrogenated block polymer (I)-18 | - | - | - | - | - | - | - | - | - | 50 |
| Olefine-based resin (II) | 40 | 40 | 40 | 40 | 40 | 40 | 40 | 40 | 40 | 40 |
| Thermoplastic resin (III) | 50 | 50 | 50 | 50 | 50 | 50 | 50 | 50 | 50 | 50 |
| Softener (IV) | 80 | 80 | 80 | 80 | 80 | 80 | 80 | 80 | 80 | 80 |
| Processability (MFR (230°C, 2.16kg)) | 103 | 105 | 100 | 102 | 102 | 102 | 100 | 103 | 103 | 103 |
| Evaluation of processability (1-5) | 5 | 5 | 5 | 5 | 5 | 5 | 5 | 5 | 5 | 5 |
| Heat resistance(70°C C-Set(%)) | 68 | 68 | 68 | 67 | 67 | 68 | 67 | 67 | 73 | 72 |
| Evaluation of heat resistance (1-7) | 7 | 7 | 7 | 7 | 7 | 7 | 7 | 7 | 6 | 6 |
| Abrasion resistance (mass reduction after rubbing(mg)) | 228 | 229 | 176 | 171 | 126 | 127 | 79 | 71 | 72 | 75 |
| Evaluation of abrasion resistance (1-6) | 2 | 2 | 3 | 3 | 4 | 4 | 5 | 5 | 5 | 5 |
| Oil resistance (swelling rate (%)) | 45 | 46 | 45 | 45 | 46 | 45 | 46 | 45 | 45 | 44 |
| Oil resistance (1-3) | 3 | 3 | 3 | 3 | 3 | 3 | 3 | 3 | 3 | 3 |
| Low temperature property (elongation at break at -30°C (%)) | 121 | 222 | 223 | 226 | 221 | 175 | 174 | 121 | 126 | 122 |
| Evaluation of low temperature property (1-7) | 3 | 5 | 5 | 5 | 5 | 4 | 4 | 3 | 3 | 3 |

**[Table 12]**

| (parts by mass) | Production Example 19 | Production Example 20 | Production Example 21 | Production Example 22 | Production Example 23 | Production Example 24 |
|---|---|---|---|---|---|---|
| Hydrogenated block polymer (I)-19 | 50 | - | - | - | - | - |
| Hydrogenated block polymer (I)-20 | - | 50 | - | - | - | - |
| Hydrogenated block polymer (I)-21 | - | - | 50 | - | - | - |
| Hydrogenated block polymer (I)-22 | - | - | - | 50 | - | - |
| Hydrogenated block polymer (I)-23 | - | - | - | - | 50 | - |
| Hydrogenated block polymer (I)-24 | - | - | - | - | - | 50 |
| Olefine-based resin (II) | 40 | 40 | 40 | 40 | 40 | 40 |
| Thermoplastic resin (III) | 50 | 50 | 50 | 50 | 50 | 50 |
| Softener (IV) | 80 | 80 | 80 | 80 | 80 | 80 |
| Processability (MFR (230°C, 2.16kg)) | 100 | 98 | 102 | 98 | 100 | 107 |
| Evaluation of processability (1-5) | 5 | 5 | 5 | 5 | 5 | 5 |
| Heat resistance(70°C C-Set(%)) | 68 | 68 | 67 | 67 | 78 | 83 |
| Evaluation of heat resistance (1-7) | 7 | 7 | 7 | 7 | 5 | 4 |
| Abrasion resistance (mass reduction after rubbing(mg)) | 176 | 176 | 76 | 79 | 71 | 225 |
| Evaluation of abrasion resistance (1-6) | 3 | 3 | 5 | 5 | 5 | 2 |
| Oil resistance (swelling rate (%)) | 55 | 46 | 45 | 45 | 44 | 45 |
| Oil resistance (1-3) | 2 | 3 | 3 | 3 | 3 | 3 |
| Low temperature property (elongation at break at -30°C (%)) | 271 | 274 | 221 | 128 | 77 | 77 |
| Evaluation of low temperature property (1-7) | 6 | 6 | 5 | 3 | 2 | 2 |

**[Table 13]**

| (parts by mass) | Production Example 25 | Production Example 26 | Production Example 27 | Production Example 28 | Production Example 29 | Production Example 30 | Production Example 31 | Production Example 32 | Production Example 33 | Production Example 34 | Production Example 35 |
|---|---|---|---|---|---|---|---|---|---|---|---|
| Hydrogenated block polymer (I)-25 | 50 | - | - | - | - | - | - | - | - | - | - |
| Hydrogenated block polymer (I)-26 | - | 50 | - | - | - | - | - | - | - | - | - |
| Hydrogenated block polymer (I)-27 | - | - | 50 | - | - | - | - | - | - | - | - |
| Hydrogenated block polymer (I)-28 | - | - | - | 50 | - | - | - | - | - | - | - |
| Hydrogenated block polymer (I)-29 | - | - | - | - | 50 | - | - | - | - | - | - |
| Hydrogenated block polymer (I)-30 | - | - | - | - | - | 50 | - | - | - | - | - |
| Hydrogenated block polymer (I)-31 | - | - | - | - | - | - | 50 | - | - | - | - |
| Hydrogenated block polymer (I)-32 | - | - | - | - | - | - | - | 50 | - | - | - |
| Hydrogenated block polymer (I)-33 | - | - | - | - | - | - | - | - | 50 | - | - |
| Hydrogenated block polymer (I)-34 | - | - | - | - | - | - | - | - | - | 50 | - |
| Hydrogenated block polymer (I)-35 | - | - | - | - | - | - | - | - | - | - | 50 |
| Olefine-based resin (II) | 40 | 40 | 40 | 40 | 40 | 40 | 40 | 40 | 40 | 40 | 40 |
| Thermoplastic resin (III) | 50 | 50 | 50 | 50 | 50 | 50 | 50 | 50 | 50 | 50 | 50 |
| Softener (IV) | 80 | 80 | 80 | 80 | 80 | 80 | 80 | 80 | 80 | 80 | 80 |
| Processability (MFR (230°C, 2.16kg)) | 107 | 107 | 107 | 109 | 109 | 103 | 111 | 100 | 111 | 115 | 113 |
| Evaluation of processability | 5 | 5 | 5 | 5 | 5 | 5 | 5 | 5 | 5 | 5 | 5 |
| Heat resistance(70°C C-Set(%)) | 69 | 69 | 69 | 67 | 68 | 68 | 69 | 74 | 74 | 78 | 77 |
| Evaluation of heat resistance | 7 | 7 | 7 | 7 | 7 | 7 | 7 | 6 | 6 | 5 | 5 |
| Abrasion resistance (mass reduction after rubbing(mg)) | 227 | 222 | 224 | 121 | 123 | 122 | 127 | 71 | 71 | 74 | 71 |
| Evaluation of abrasion resistance (1-6) | 2 | 2 | 2 | 4 | 4 | 4 | 4 | 5 | 5 | 5 | 5 |
| Oil resistance (swelling rate (%)) | 66 | 66 | 66 | 55 | 55 | 46 | 46 | 45 | 45 | 46 | 44 |
| Evaluation of oil resistance | 1 | 1 | 1 | 2 | 2 | 3 | 3 | 3 | 3 | 3 | 3 |
| Low temperature property (elongation at break at -30°C (%)) | 172 | 278 | 277 | 227 | 225 | 121 | 125 | 126 | 129 | 176 | 221 |
| Evaluation of low temperature property | 4 | 6 | 6 | 5 | 5 | 3 | 3 | 3 | 3 | 4 | 5 |

**[Table 14]**

| (parts by mass) | Production Example 36 | Production Example 37 | Production Example 38 |
|---|---|---|---|
| Hydrogenated block polymer (I)-36 | 50 | - | - |
| Hydrogenated block polymer (I)-37 | - | 50 | - |
| Hydrogenated block polymer (I)-38 | - | - | 50 |
| Olefine-based resin (II) | 40 | 40 | 40 |
| Thermoplastic resin (III) | 50 | 50 | 50 |
| Softener (IV) | 80 | 80 | 80 |
| Processability (MFR (230°C, 2.16kg)) | 98 | 115 | 116 |
| Evaluation of processability | 5 | 5 | 5 |
| Heat resistance(70°C C-Set(%)) | 67 | 67 | 67 |
| Evaluation of heat resistance | 7 | 7 | 7 |
| Abrasion resistance (mass reduction after rubbing(mg)) | 72 | 72 | 73 |
| Evaluation of abrasion resistance (1-6) | 5 | 5 | 5 |
| Oil resistance (swelling rate (%)) | 44 | 44 | 45 |
| Evaluation of oil resistance | 3 | 3 | 3 |
| Low temperature property (elongation at break at -30°C (%)) | 123 | 172 | 226 |
| Evaluation of low temperature property | 3 | 4 | 5 |

**[Table 15]**

| (parts by mass) | Production Example 39 | Production Example 40 | Production Example 41 | Production Example 42 | Production Example 43 | Production Example 44 |
|---|---|---|---|---|---|---|
| Hydrogenated block polymer (I)-39 | 50 | - | - | - | - | - |
| Hydrogenated block polymer (I)-40 | - | 50 | - | - | - | - |
| Hydrogenated block polymer (I)-41 | - | - | 50 | - | - | - |
| Hydrogenated block polymer (I)-42 | - | - | - | 50 | - | - |
| Hydrogenated block polymer (I)-43 | - | - | - | - | 50 | - |
| Hydrogenated block polymer (I)-44 | - | - | - | - | - | 50 |
| Olefine-based resin (II) | 40 | 40 | 40 | 40 | 40 | 40 |
| Thermoplastic resin (III) | 50 | 50 | 50 | 50 | 50 | 50 |
| Softener (IV) | 80 | 80 | 80 | 80 | 80 | 80 |
| Processability (MFR (230°C, 2.16kg)) | 167 | 163 | 154 | 163 | 154 | 157 |
| Evaluation of processability | 5 | 5 | 5 | 5 | 5 | 5 |
| Heat resistance(70°C C-Set(%)) | 67 | 69 | 69 | 69 | 68 | 68 |
| Evaluation of heat resistance | 7 | 7 | 7 | 7 | 7 | 7 |
| Abrasion resistance (mass reduction after rubbing(mg)) | 25 | 22 | 23 | 23 | 23 | 23 |
| Evaluation of abrasion resistance (1-6) | 6 | 6 | 6 | 6 | 6 | 6 |
| Oil resistance (swelling rate (%)) | 45 | 46 | 55 | 54 | 66 | 55 |
| Evaluation of oil resistance | 3 | 3 | 2 | 2 | 1 | 2 |
| Low temperature property (elongation at break at -30°C (%)) | 143 | 149 | 221 | 276 | 325 | 321 |
| Evaluation of low temperature property | 3 | 4 | 5 | 6 | 7 | 7 |

**[Table 16]**

| (parts by mass) | Production Example 45 | Production Example 46 | Production Example 47 | Production Example 48 | Production Example 49 | Production Example 50 | Production Example 51 | Production Example 52 |
|---|---|---|---|---|---|---|---|---|
| Hydrogenated block polymer (I)-45 | 50 | - | - | - | - | - | - | - |
| Hydrogenated block polymer (I)-46 | - | 50 | - | - | - | - | - | - |
| Hydrogenated block polymer (I)-47 | - | - | 50 | - | - | - | - | - |
| Hydrogenated block polymer (I)-48 | - | - | - | 50 | - | - | - | - |
| Hydrogenated block polymer (I)-49 | - | - | - | - | 50 | - | - | - |
| Hydrogenated block polymer (I)-50 | - | - | - | - | - | 50 | - | - |
| Hydrogenated block polymer (I)-51 | - | - | - | - | - | - | 50 | - |
| Hydrogenated block polymer (I)-52 | - | - | - | - | - | - | - | 50 |
| Olefine-based resin (II) | 40 | 40 | 40 | 40 | 40 | 40 | 40 | 40 |
| Thermoplastic resin (III) | 50 | 50 | 50 | 50 | 50 | 50 | 50 | 50 |
| Softener (IV) | 80 | 80 | 80 | 80 | 80 | 80 | 80 | 80 |
| Processability (MFR (230°C, 2.16kg)) | 172 | 163 | 163 | 161 | 182 | 172 | 163 | 167 |
| Evaluation of processability | 5 | 5 | 5 | 5 | 5 | 5 | 5 | 5 |
| Heat resistance(70°C C-Set(%)) | 67 | 69 | 68 | 68 | 68 | 68 | 69 | 68 |
| Evaluation of heat resistance | 7 | 7 | 7 | 7 | 7 | 7 | 7 | 7 |
| Abrasion resistance (mass reduction after rubbing(mg)) | 29 | 29 | 27 | 28 | 24 | 24 | 21 | 28 |
| Evaluation of abrasion resistance (1-6) | 6 | 6 | 6 | 6 | 6 | 6 | 6 | 6 |
| Oil resistance (swelling rate (%)) | 45 | 45 | 44 | 46 | 44 | 44 | 44 | 45 |
| Evaluation of oil resistance | 3 | 3 | 3 | 3 | 3 | 3 | 3 | 3 |
| Low temperature property (elongation at break at -30°C (%)) | 307 | 281 | 267 | 274 | 300 | 283 | 320 | 305 |
| Evaluation of low temperature property | 7 | 6 | 6 | 6 | 7 | 6 | 7 | 7 |

**[Table 17]**

| (mass%) | Production Example 2 | Production Example 53 | Production Example 54 | Production Comp. Ex. 8 |
|---|---|---|---|---|
| Hydrogenated block polymer (I)-2 | 50 | 50 | 50 | - |
| Olefine-based resin (II) | 40 | 50 | 30 | 40 |
| Thermoplastic resin (III) | 50 | 50 | 50 | 100 |
| Softener (IV) | 80 | 70 | 90 | 80 |
| Processability (MFR (230°C, 2.16kg)) | 377 | 350 | 400 | 5 |
| Evaluation of processability (1-5) | 5 | 5 | 5 | 1 |
| Heat resistance(70°C C-Set(%)) | 68 | 68 | 68 | 69 |
| Evaluation of heat resistance (1-7) | 7 | 7 | 7 | 7 |
| Abrasion resistance (mass reduction after rubbing(mg)) | 78 | 60 | 85 | 280 |
| Evaluation of abrasion resistance (1-6) | 5 | 5 | 5 | 1 |
| Oil resistance (swelling rate (%)) | 45 | 48 | 43 | 70 |
| Oil resistance (1-3) | 3 | 3 | 3 | 1 |
| Low temperature property (elongation at break at -30°C (%)) | 124 | 120 | 130 | 126 |
| Evaluation of low temperature property (1-7) | 3 | 3 | 3 | 3 |

**[Table 18]**

| (mass%) | Production Comp. Ex. 1 | Production Comp. Ex. 2 | Production Comp. Ex. 3 | Production Comp. Ex. 4 | Production Comp. Ex. 5 | Production Comp. Ex. 6 | Production Comp. Ex. 7 |
|---|---|---|---|---|---|---|---|
| Hydrogenated block polymer (I)-A | 50 | - | - | - | - | - | - |
| Hydrogenated block polymer (I)-B | - | 50 | - | - | - | - | - |
| Hydrogenated block polymer (I)-C | - | - | 50 | - | - | - | - |
| Hydrogenated block polymer (I)-D | - | - | - | 50 | - | - | - |
| Hydrogenated block polymer (I)-E | - | - | - | - | 50 | - | - |
| Hydrogenated block polymer (I)-F | - | - | - | - | - | 50 | - |
| Hydrogenated block polymer (I)-G | - | - | - | - | - | - | 50 |
| Olefine-based resin (II) | 40 | 40 | 40 | 40 | 40 | 40 | 40 |
| Thermoplastic resin (III) | 50 | 50 | 50 | 50 | 50 | 50 | 50 |
| Softener (IV) | 80 | 80 | 80 | 80 | 80 | 80 | 80 |
| Processability (MFR (230°C, 2.16kg)) | 20 | 105 | 100 | 100 | 109 | 98 | 103 |
| Evaluation of processability | 1 | 5 | 5 | 5 | 5 | 5 | 5 |
| Heat resistance(70°C C-Set(%)) | 68 | 69 | 93 | 68 | 98 | 67 | 87 |
| Evaluation of heat resistance | 7 | 7 | 2 | 7 | 1 | 7 | 3 |
| Abrasion resistance (mass reduction after rubbing(mg)) | 75 | 276 | 76 | 276 | 228 | 229 | 78 |
| Evaluation of abrasion resistance (1-6) | 5 | 1 | 5 | 1 | 2 | 2 | 5 |
| Oil resistance (swelling rate (%)) | 46 | 46 | 44 | 55 | 46 | 65 | 44 |
| Evaluation of oil resistance | 3 | 3 | 3 | 2 | 3 | 1 | 3 |
| Low temperature property (elongation at break at -30°C (%)) | 123 | 224 | 129 | 323 | 24 | 173 | 224 |
| Evaluation of low temperature property | 3 | 5 | 3 | 7 | 1 | 4 | 5 |

**[Table 19]**

| (parts by mass) | Production Example 95 | Production Example 96 | Production Example 97 | Production Example 98 | Production Example 99 | Production Example 100 |
|---|---|---|---|---|---|---|
| Hydrogenated block polymer (I)-95 | 50 | - | - | - | - | - |
| Hydrogenated block polymer (I)-96 | - | 50 | - | - | - | - |
| Hydrogenated block polymer (I)-97 | - | - | 50 | - | - | - |
| Hydrogenated block polymer (I)-98 | - | - | - | 50 | - | - |
| Hydrogenated block polymer (I)-99 | - | - | - | - | 50 | - |
| Hydrogenated block polymer (I)-100 | - | - | - | - | - | 50 |
| Olefine-based resin (II) | 40 | 40 | 40 | 40 | 40 | 40 |
| Thermoplastic resin (III) | 50 | 50 | 50 | 50 | 50 | 50 |
| Softener (IV) | 80 | 80 | 80 | 80 | 80 | 80 |
| Processability (MFR (230°C, 2.16kg)) | 103 | 103 | 107 | 100 | 109 | 102 |
| Evaluation of processability | 5 | 5 | 5 | 5 | 5 | 5 |
| Heat resistance(70°C C-Set(%)) | 69 | 68 | 94 | 69 | 69 | 69 |
| Evaluation of heat resistance | 7 | 7 | 2 | 7 | 7 | 7 |
| Abrasion resistance (mass reduction after rubbing(mg)) | 179 | 175 | 29 | 79 | 74 | 78 |
| Evaluation of abrasion resistance | 3 | 3 | 6 | 5 | 5 | 5 |
| Oil resistance (swelling rate (%)) | 45 | 44 | 55 | 45 | 45 | 45 |
| Evaluation of oil resistance | 3 | 3 | 2 | 3 | 3 | 3 |
| Low temperature property (elongation at break at -30°C (%)) | 122 | 224 | 207 | 225 | 123 | 124 |
| Evaluation of low temperature property | 3 | 5 | 4.7 | 5 | 3 | 3 |

### [Production of Tube]

### (Production Examples 55 to 70, and Production Comparative Examples 9 to 11)

Based on compounding ratios (parts by mass) of Production Examples 55 to 70 and Production Comparative Examples 9 to 11 shown in Table 20, molding was performed with a single screw extruder provided with a tube die at an extrusion temperature of 210°C and a take-off speed of 20 m/min, and the resultant was cooled with water in a cooling tank, and thus, a single layer tube having an outer diameter of 4.0 mm, an inner diameter of 2.7 mm, and a thickness of 0.65 mm was obtained.

In each Production Example shown in Table 20, the above-described hydrogenated block copolymer (I) and the other following styrene-based thermoplastic elastomers A and B were blended:
Styrene-based thermoplastic elastomer A: "S.O.E.(R) S1605" manufactured by Asahi Kasei Corporation (hydrogenated product of a styrene/butadiene/styrene block copolymer) [MFR (ISO 1133 (230°C, load: 2.16 kg)): 5.0 g/10 min, hardness A (ISO 7619): 87]
Styrene-based thermoplastic elastomer B: "S.O.E.(R) S1606" manufactured by Asahi Kasei Corporation (hydrogenated product of a styrene/butadiene/styrene block copolymer) [MFR (ISO 1133 (230°C, load: 2.16 kg)): 4.0 g/10 min, hardness A (ISO 7619): 67]

The tubes produced as described above were evaluated for physical properties.

### (Evaluation of Physical Properties of Tube)

### <Processability>

The MFR of the hydrogenated block copolymer was measured at 230°C and a load of 2.16 Kg in accordance with ISO 1133 to be used as an index of processability.
○: The MFR was 15 or more.
△: The MFR was 8 or more and less than 15.
×: The MFR was less than 8.

### <Kink Resistance>

Each tube was cut into a length of 200 mm, and the both ends of the resultant tube were fasten together with a clip. From the clipped ends of the tube, the tube was slowly traced with a finger toward the center of the tube with the two tube portions kept in contact and in parallel with each other, and when the center of the tube buckled during the tracing, the finger was stopped, and a distance from the center of the tube was measured. As the distance is smaller, kink resistance is more excellent.
○: The distance was 8 cm or more.
△: The distance was 5 cm or more and less than 8 cm.
×: The distance was less than 5 cm.

### <Solvent Adhesion>

Each tube was heat pressed at 200°C, and the resultant was cut into a sheet (10 mm × 10 mm × 0.5 mm) to be used as a test piece. The test piece was dipped for 1 second in each of four solvents of tetrahydrofuran (THF), methyl ethyl ketone (MEK), cyclohexanone, and cyclohexane (c-Hex), the resultant was sandwiched between two adherends (PC plate, 10 mm × 70 mm × 1 mm) to be adhered, and then dried for 24 hours at 23°C. With the adherends gripped, measurement was performed with a tensile testing machine under a condition of a peeling speed of 300 mm/min, and the maximum strength thus obtained was used as an index of solvent adhesion.
○: The maximum strength was 50 N or more in the four solvents.
×: The maximum strength was less than 50 N in the four solvents.

### <Sense of Touch>

Feel obtained by touching the tube with a finger (moist feeling, smooth feeling, and softness) was used as an index of the sense of touch, and sensory evaluation with a full score of 5 was performed by ten persons, and one having an average score of 3 or more was evaluated as O, and one having an average score less than 3 was evaluated as ×.

### <Clamping Property>

Each tube was closed with medical tube forceps at 23°C for 24 hours, then the forceps were removed, and a time necessary for the inner walls of the tube to restore the shape and be away from each other was measured, and was used as an index of a clamping property.
○: The restoration time was less than 20 seconds.
×: The restoration time was 20 seconds or more.

### <Stickiness>

Stress caused in unrolling the tube from a roll on which the molded tube had been rolled up was measured with a digital force gauge (ZTS-100N, manufactured by Imada Co., Ltd.).
○: The stress was less than 5 N.
×: The stress was 5 N or more.

### <Transparency>

A sheet (with a thickness of 0.5 mm) obtained by heat pressing the hydrogenated block copolymer and the other materials used in the tube at 200°C was measured for a haze value with a haze meter (NDH-1001DP, manufactured by Nippon Denshoku Industries Co., Ltd.) to be used as an index of transparency. Evaluation was performed in accordance with the thus obtained haze value on the basis of the following criteria:
O: The haze value was less than 10%.
×: The haze value was 10% or more.

**[Table 20]**

| Hydrogenated block copolymer | Production Example 55 | Production Example 56 | Production Example 57 | Production Example 58 | Production Example 59 | Production Example 60 | Production Example 61 | Production Example 62 | Production Example 60 | Production Example 64 | Production Example 65 | Production Example 66 | Production Example 67 | Production Example 68 | Production Example 69 | Production Example 70 | Production Comp. Ex. 9 | Production Comp. Ex. 10 | Production Comp. Ex. 11 |
|---|---|---|---|---|---|---|---|---|---|---|---|---|---|---|---|---|---|---|---|
| (I)-8 | 100 | | | | | | | | | | | | | | | | | | |
| (I)-1 | | 100 | | | | | | | | | | | | | | | | | |
| (I)-2 | | | 100 | 70 | 30 | 70 | 30 | | | | | | | | | | | | |
| (I)-45 | | | | | | | | 100 | | | | | | | | | | | |
| (I)-46 | | | | | | | | | 100 | | | | | | | | | | |
| (I)-47 | | | | | | | | | | 100 | | | | | | | | | |
| (I)-48 | | | | | | | | | | | 100 | | | | | | | | |
| (I)-49 | | | | | | | | | | | | 100 | | | | | | | |
| (I)-50 | | | | | | | | | | | | | 100 | | | | | | |
| (I)-51 | | | | | | | | | | | | | | 100 | | | | | |
| (I)-52 | | | | | | | | | | | | | | | 100 | | | | |
| (I)-39 | | | | | | | | | | | | | | | | 100 | | | |
| (I)-A | | | | | | | | | | | | | | | | | 100 | | |
| A.S1605 | | | | 30 | 70 | | | | | | | | | | | | | 100 | |
| B:S1606 | | | | | | 30 | 70 | | | | | | | | | | | | 100 |
| | | | | | | | | | | | | | | | | | | | |
| Processability | Δ | Δ | ○ | ○ | ○ | ○ | ○ | ○ | ○ | ○ | ○ | ○ | ○ | ○ | ○ | ○ | × | × | × |
| Kink resistance | Δ | Δ | ○ | ○ | ○ | ○ | ○ | ○ | ○ | ○ | ○ | ○ | ○ | ○ | ○ | ○ | × | × | × |
| Solvent adhesiveness | ○ | ○ | ○ | ○ | ○ | ○ | ○ | ○ | ○ | ○ | ○ | ○ | ○ | ○ | ○ | ○ | ○ | ○ | × |
| Sense of touch | ○ | ○ | ○ | ○ | ○ | ○ | ○ | ○ | ○ | ○ | ○ | ○ | ○ | ○ | ○ | ○ | ○ | ○ | × |
| Clamping property | ○ | ○ | ○ | ○ | ○ | ○ | ○ | ○ | ○ | ○ | ○ | ○ | ○ | ○ | ○ | ○ | ○ | × | ○ |
| Stickiness | ○ | ○ | ○ | ○ | ○ | ○ | ○ | ○ | ○ | ○ | ○ | ○ | ○ | ○ | ○ | ○ | ○ | × | × |
| Transparency | ○ | ○ | ○ | ○ | ○ | ○ | ○ | ○ | ○ | ○ | ○ | ○ | ○ | ○ | ○ | ○ | ○ | ○ | ○ |

| | | | | | | | | | | | | | | | | | | | |
|---|---|---|---|---|---|---|---|---|---|---|---|---|---|---|---|---|---|---|---|
| (parts by mass) | | | | | | | | | | | | | | | | | | | |

### [Production of Adhesive Sheet]

### (Production Examples 71 to 82, and Production Comparative Example 12)

Polypropylene (PC684S, manufactured by Sum Allomer, Ltd., MFR (230°C, load of 2.16 kg): 6.0 g/10 min) constituting a base layer, and the hydrogenated block copolymer (I) constituting an adhesive layer were supplied to an extruder, and these layers were integrally coextruded (210°C) by a T die coextrusion method, and thus, an adhesive sheet including the base layer with a thickness of 40 µm and the adhesive layer with a thickness of 10 µm was produced, and rolled up around a winding roll.

Table 21 shows compounding ratios (parts by mass) employed in Production Examples 71 to 82 and Production Comparative Example 12.

### (Evaluation of Physical Properties of Adhesive Sheet)

### <Initial Tack Strength>

As a measurement apparatus, a universal tension and compression testing machine "Technograph TGE-500N, manufactured by Minebea" was used. A sample of the produced adhesive sheet cut into a width of 25 mm was adhered onto a PMMA plate (surface arithmetic average roughness: 0.1 µm) with a rubber roller (diameter: 10 cm) having a weight of 2 kg rolled thereon, and the resultant was allowed to stand at a temperature of 23°C and a relative humidity of 50% for 30 minutes. Thereafter, the sheet was peeled at a peeling speed of 300 mm/min at an angle of 180 degrees, and initial tack strength was measured in accordance with a test of JIS K6854-2, and evaluated as follows:
○: The initial tack strength was 500 (g/25 mm) or more.
△: The initial tack strength was 250 (g/25 mm) or more and less than 500 (g/25 mm) .
×: The initial tack strength was less than 250 (g/25 mm) .

### <Adhesiveness Increase>

A sample of the produced adhesive sheet cut into a width of 25 mm was adhered onto a PMMA plate (surface arithmetic average roughness: 0.1 µm) with a rubber roller (diameter: 10 cm) having a weight of 2 kg rolled thereon. Thereafter, the resultant was stored in an oven at a temperature of 80°C for 1 hour, and then was allowed to stand at 23°C and a relative humidity of 50% for 30 minutes, and thereafter, the sheet was peeled at a peeling speed of 300 mm/min at an angle of 180 degrees, and tack strength was measured in accordance with a test of JIS K6854-2.

Adhesiveness increase was evaluated based on the following expression: Adhesiveness increase = (tack strength after heating at 80°C for 1 hour)/(initial tack strength)
O: The adhesive increase was 1.7 or less.
△: The adhesive increase was over 1.7 and 2.0 or less.
×: The adhesive increase was over 2.0.

### <Unrolling Property>

Unrolling of the adhesive sheet having been wound around a roll was evaluated as follows:
O: The sheet was smoothly unrolled with a small force.
△: The sheet could be unrolled without being extended although a slightly strong force was needed.
×: The sheet could not be unrolled because the adhesive layer adheres to the sheet substrate.

**[Table 21]**

| Hydrogenated block copolymer | Production Example 71 | Production Example 72 | Production Example 73 | Production Example 74 | Production Example 75 | Production Example 76 | Production Example 77 | Production Example 78 | Production Example 79 | Production Example 80 | Production Example 81 | Production Example 82 | Production Comp. Ex. 12 |
|---|---|---|---|---|---|---|---|---|---|---|---|---|---|
| (I)-8 | 100 | | | | | | | | | | | | |
| (I)-1 | | 100 | | | | | | | | | | | |
| (I)-2 | | | 100 | | | | | | | | | | |
| (I)-45 | | | | 100 | | | | | | | | | |
| (I)-46 | | | | | 100 | | | | | | | | |
| (I)-47 | | | | | | 100 | | | | | | | |
| (I)-48 | | | | | | | 100 | | | | | | |
| (I)-49 | | | | | | | | 100 | | | | | |
| (I)-50 | | | | | | | | | 100 | | | | |
| (I)-51 | | | | | | | | | | 100 | | | |
| (I)-52 | | | | | | | | | | | 100 | | |
| (I)-39 | | | | | | | | | | | | 100 | |
| (I)-A | | | | | | | | | | | | | 100 |
| | | | | | | | | | | | | | |
| Initial adhesive force | Δ | Δ | Δ | ○ | ○ | ○ | ○ | ○ | ○ | ○ | ○ | ○ | × |
| Adhesiveness increase | Δ | Δ | Δ | ○ | ○ | ○ | ○ | ○ | ○ | ○ | ○ | ○ | × |
| Unrolling property | Δ | Δ | Δ | ○ | ○ | ○ | ○ | ○ | ○ | ○ | ○ | ○ | × |

| | | | | | | | | | | | | | |
|---|---|---|---|---|---|---|---|---|---|---|---|---|---|
| (parts by mass) | | | | | | | | | | | | | |

### [Production of Thermoplastic Elastomer Composition, and Multilayer Structure]

### (Production Examples 83 to 94, and Production Comparative Example 13)

### (Production of Pellet of Thermoplastic Elastomer Composition)

Based on compounding ratios (parts by mass) shown in Table 22 below, melt kneading was performed with a twin screw extruder ("TEX-30αII" manufactured by The Japan Steel Works, Ltd., cylinder diameter: 30 mm) at a set temperature of 220°C to obtain a pellet of a thermoplastic elastomer composition.

As a rubbery polymer, a styrene-based thermoplastic elastomer, Tuftec N504 (styrene content: 32% by mass, manufactured by Asahi Kasei Corporation) was used.

As a polypropylene resin, PM801A (PP, manufactured by Sum Allomer; MFR: 15) was used.

As a softener, paraffin oil, PW-90 (manufactured by Idemitsu Kosan Co., Ltd.) was used.

### (Polar Resin: Adherend, and Multilayer Structure)

As an adherend, a polyamide resin: nylon 66: Leona 1300S (Asahi Kasei Corporation), glass fiber-reinforced nylon 66: Leona 1300G (Asahi Kasei Corporation), a polycarbonate resin: polycarbonate resin plate PC1600 (C.I. TAKIRON Corporation), and an ABS resin: ABS Toughace R EAR-003 (Sumitomo Bakelite Co., Ltd.) were used.

As an adherend (polar resin substrate) of a multilayer test piece, a mold of 150 mm × 100 mm × 2 mm (length × width × thickness) was used to produce, by injection molding, substrates of various polar resins.

In each of Production Examples 83 to 94 and Production Comparative Example 13, a substrate with a thickness of 2 mm of each of the various polar resins was fixed in a mold of 150 mm × 100 mm × 3 mm (length × width × thickness). A thermoplastic elastomer composition was injected into the mold by injection molding at a cylinder set temperature of 280°C and a mold set temperature of 40°C, and thus, a multilayer structure including a polar resin layer with a thickness of 2 mm, and a thermoplastic elastomer composition layer with a thickness of 1 mm using the hydrogenated block copolymer was obtained.

Table 22 shows compounding ratios (parts by mass) of Production Examples 83 to 94 and Production Comparative Example 13.

### (Evaluation of Multilayer Structure of Thermoplastic Elastomer Composition and Polar Resin)

### <Interfacial Peel Strength>

Interfacial peel strength of a multilayer structure of a thermoplastic elastomer composition and a polar resin was measured by a 180-degree peel test using a multilayer structure obtained by heat welding a thermoplastic elastomer composition to a polar resin.

A flat plate with a thickness of 2 mm of each of various polar resins was fixed in an injection molding mold (mold temperature: 40°C) with a depth of 3 mm, and the thermoplastic elastomer composition was injected into this mold by injection molding, and thus, a multilayer structure including the polar resin with a thickness of 2 mm and the thermoplastic elastomer composition with a thickness of 1 mm was produced.

On a surface of the thus obtained multilayer structure on the side of the thermoplastic elastomer composition, a cut with a width of 10 mm was formed, and the end of the layer of the thermoplastic elastomer composition was peeled off by several cm. In this peeled portion, the layer of the thermoplastic elastomer composition and the layer of the polar resin were respectively separately fixed on chucks of a tensile testing machine [TGE-500N500N, MinebeaMitsumi Inc.]. The layer of the thermoplastic elastomer composition and the layer of the polar resin were peeled off from each other by pulling these two layers at 300 mm/min in a direction of 180°. A tensile force applied in the peeling was defined as interfacial peel strength (N/cm) of the multilayer structure of the thermoplastic elastomer composition and the polar resin, and was evaluated based on the following evaluation criteria:

### [Evaluation Criteria]

O: 10 N/cm or more
△: 5 N/cm or more and less than 10 N/cm
×: less than 5 N/cm

### <Peeling Residue>

After the peel test of the multilayer structure of the thermoplastic elastomer composition and the polar resin, the peeled polar resin substrate was visually observed. A peeling residue of the thermoplastic elastomer composition remaining on the polar resin substrate was evaluated based on the following evaluation criteria:

### [Evaluation Criteria]

O: The peeling residue remained on 70% or more of the peeled surface.
△: The peeling residue remained on 10% or more and less than 70% of the peeled surface.
×: The peeling residue remained on less than 10% of the peeled surface, or no peeling residue was observed.

**Table 22]**

| | | Production Example 83 | Production Example 84 | Production Example 85 | Production Example 86 | Production Example 87 | Production Example 88 | Production Example 89 | Production Example 90 | Production Example 91 | Production Example 92 | Production Example 93 | Production Example 94 | Production Comp. Ex. 13 |
|---|---|---|---|---|---|---|---|---|---|---|---|---|---|---|
| Rubbery polymer | | 50 | | | | | | | | | | | | |
| Polypropylene resin | | 25 | | | | | | | | | | | | |
| Paraffin oil | | 75 | | | | | | | | | | | | |
| | (I)-8 | 100 | | | | | | | | | | | | |
| | (I)-1 | | 100 | | | | | | | | | | | |
| | (I)-2 | | | 100 | | | | | | | | | | |
| | (I)-45 | | | | 100 | | | | | | | | | |
| | (I)-46 | | | | | 100 | | | | | | | | |
| Hydrogenated block copolymer | (I)-47 | | | | | | 100 | | | | | | | |
| | (I)-48 | | | | | | | 100 | | | | | | |
| | (I)-49 | | | | | | | | 100 | | | | | |
| | (I)-50 | | | | | | | | | 100 | | | | |
| | (I)-51 | | | | | | | | | | 100 | | | |
| | (I)-52 | | | | | | | | | | | 100 | | |
| | (I)-39 | | | | | | | | | | | | 100 | |
| | (I)-A | | | | | | | | | | | | | 100 |
| Polyamide resin (nylon 66) | Strength | Δ | Δ | Δ | ○ | ○ | ○ | ○ | ○ | ○ | ○ | ○ | ○ | × |
| | Peeling residue | Δ | Δ | Δ | ○ | ○ | ○ | ○ | ○ | ○ | ○ | ○ | ○ | × |
| Glass fiber reinforced nylon 66 | Strength | Δ | Δ | Δ | ○ | ○ | ○ | ○ | ○ | ○ | ○ | ○ | ○ | × |
| | Peeling residue | Δ | Δ | Δ | ○ | ○ | ○ | ○ | ○ | ○ | ○ | ○ | ○ | × |
| Polycarbonate resin | Strength | Δ | Δ | Δ | ○ | ○ | ○ | ○ | ○ | ○ | ○ | ○ | ○ | × |
| | Peeling residue | Δ | Δ | Δ | ○ | ○ | ○ | ○ | ○ | ○ | ○ | ○ | ○ | × |
| ABS resin | Stength | Δ | Δ | Δ | ○ | ○ | ○ | ○ | ○ | ○ | ○ | ○ | ○ | × |
| | Peeling residue | Δ | Δ | Δ | ○ | ○ | ○ | ○ | ○ | ○ | ○ | ○ | ○ | × |

| | | | | | | | | | | | | | | |
|---|---|---|---|---|---|---|---|---|---|---|---|---|---|---|
| (parts by mass) | | | | | | | | | | | | | | |

### [Evaluation of Tube]

Referring to Table 20, the tubes containing the hydrogenated block copolymers of Examples and the other materials were excellent in the processability, the transparency, the flexibility, the kink resistance, and the solvent adhesion, and free from evaluation "×", and thus, the balance among these properties was favorable at a high level.

### [Evaluation of Adhesive Sheet]

Referring to Table 21, the adhesive sheets including the adhesive layers using the hydrogenated block copolymers of Examples were free from evaluation "×" in the initial tackiness, the adhesiveness increase, and the unrolling property, and the balance among these performances were favorable at a high level.

### [Evaluation of Multilayer Structure (overmolded article)]

Referring to Table 22, the multilayer structures (overmolded articles) containing the thermoplastic elastomer compositions using the hydrogenated block copolymers of Examples were favorable in adhesion to the various polar resins at a high level.

### [Production of Hydrogenated Block Copolymer Composition, and Foam Body]

### (Production Examples 101 to 118, and Production Comparative Example 14)

### (Production of Pellet of Hydrogenated Block Copolymer Composition)

Based on compounding ratios (parts by mass) shown in Tables 23 and 24 below, melt kneading was performed with a twin screw extruder ("TEX-30αII" manufactured by The Japan Steel Works, Ltd., cylinder diameter: 30 mm) at a set temperature of 220°C to obtain a pellet of a thermoplastic elastomer composition.

As a thermoplastic resin, a styrene-based thermoplastic elastomers (III)-1: Tuftec N504 (styrene content: 32% by mass, manufactured by Asahi Kasei Corporation) and (III)-2 were used. As the structure of the (III)-2, a styrene content was 20% by mass, a weight average molecular weight was 210,000, a vinyl bond content was 60% by mass, and a hydrogenation rate was 98% by mass.

As an olefin-based resin (II), PM801A (PP, manufactured by Sum Allomer; MFR: 15) was used.

As a softener (IV), paraffin oil, PW-90 (manufactured by Idemitsu Kosan Co., Ltd.) was used.

As a nucleating foaming agent, MICRO ACE P-3 (manufactured by Nippon Talc Co., Ltd., particle size: 5.0 µm) was used.

### (Production of Foam Body)

To the pellets of the hydrogenated block copolymer compositions produced based on the compounding ratios (parts by mass) shown in Tables 23 and 24, a sodium bicarbonate-based foaming agent, polystyrene: EE-25C (manufactured by EIWA CHEMICAL IND. CO., LTD.) was added in an amount, in terms of an outside amount, of 4 parts by mass with respect to 100 parts by mass of the hydrogenated block copolymer composition, and the resultant was dry-blended.

The thus obtained dry-blended product of the pellet of the hydrogenated block copolymer composition and the foaming agent was molded with an injection molding machine having a core back function (MS series manufactured by Mitsubishi Heavy Industries, Ltd.).

After performing injection molding, by the full shot method, of the dry-blended product in a mold with a thickness of 2 mm at a nozzle temperature of 200°C and a mold temperature of 60°C, a movable portion of the mold was moved to form a void portion, and the resultant molded product was foamed at a prescribed foaming ratio (1.5-fold or 1.75-fold), thereby molding an objective foam body.

### (Evaluation of Foam Body)

### <Foaming Ratio>

The foaming ratio was calculated as a value obtained by dividing the thickness (mm) of a foam layer (foam body) after the foam molding by the thickness (mm) of the void portion in filling the hydrogenated block copolymer composition for the foam layer in the mold.

### <Molded Appearance>

It was confirmed, in the foam layer (foam body) obtained by the injection molding of the hydrogenated block copolymer composition for the foam layer, whether or not there was a pock mark (gas release), or transfer unevenness such as a leather-like surface, or a sink mark caused by the mold.

As the evaluation of the appearance of the foam layer, a sample having no practical problem was evaluated as O, a sample that was slightly defective, and might have a practical problem was evaluated as △, and a sample having a practical problem was evaluated as ×.

### <Foaming Property>

The foam layer (foam body) obtained by the injection molding of the hydrogenated block copolymer composition for the foam layer was cut out, and a state of foam (cell) generation was confirmed with a stereomicroscope (magnification ratio: 100x).

As the evaluation of the foaming property, a sample in which foams were broken to form a hollow layer, or there was a cell of 1 mm or more was evaluated as ×, and a sample in which there was no cell of 1 mm or more, and foams were homogeneously formed was evaluated as O.

**[Table 23]**

| | parts by mass | Production Example 101 | | Production Example 102 | | Production Example 103 | | Production Example 104 | | Production Example 105 | | Production Example 106 | | Production Example 107 | | Production Example 108 | | Production Example 109 | | Production Example 110 | |
|---|---|---|---|---|---|---|---|---|---|---|---|---|---|---|---|---|---|---|---|---|---|
| | Hyrkogenated block polymer (I)-8 | 50 | | - | | - | | 0 | | - | | - | | - | | - | | - | | - | |
| | Hyrkogenated block polymer (I)-1 | - | | 50 | | - | | 0 | | - | | - | | - | | - | | - | | - | |
| | Hyrkogenated block polymer (I)-2 | - | | - | | 50 | | 25 | | 75 | | 50 | | 50 | | 50 | | 50 | | - | |
| | Hydrogenatad block polymer (I)-45 | - | | - | | - | | - | | - | | - | | - | | - | | - | | 50 | |
| | Hyrkogenated block polymer (I)-46 | - | | - | | - | | - | | - | | - | | - | | - | | - | | - | |
| | Hyrkogenated block polymer (I)-47 | - | | - | | - | | - | | - | | - | | - | | - | | - | | - | |
| | Hyrkogenated block polymer (I)-48 | - | | - | | - | | - | | - | | - | | - | | - | | - | | - | |
| | Hyrkogenated block polymer (I)-49 | - | | - | | - | | - | | - | | - | | - | | - | | - | | - | |
| Hyrkogenated block copolymer composition(parts by mass) | Hyrkogenated block polymer (I)-50 | - | | - | | - | | - | | - | | 0 | | - | | - | | - | | - | |
| | Hyrkogenated block polymer (I)-51 | - | | - | | - | | - | | - | | - | | - | | - | | - | | - | |
| | Hyrkogenated block polymer (I)-52 | - | | - | | - | | - | | - | | - | | - | | - | | - | | - | |
| | Hyrkogenated block polymer (I)-39 | - | | - | | - | | - | | - | | - | | - | | - | | - | | - | |
| | Hydrogenatad block polymer (I)-A | - | | - | | - | | - | | - | | - | | - | | - | | - | | - | |
| | Olefine-based resin (II) PM801A | 40 | | 40 | | 40 | | 45 | | 36 | | 50 | | 30 | | 40 | | 30 | | 40 | |
| | Thermoplastic resin (III)-1 N504 | 50 | | 50 | | 50 | | 55 | | 37 | | 50 | | 50 | | - | | 50 | | 50 | |
| | Thermoplastic resin (III)-2 | - | | - | | - | | - | | - | | - | | - | | 50 | | - | | - | |
| | Softener (IV) PW-90 | 80 | | 80 | | 80 | | 90 | | 72 | | 70 | | 90 | | 80 | | 90 | | 80 | |
| | Nucleating foaming agent P-3 | - | | - | | - | | - | | - | | - | | - | | - | | 2.2 | | - | |
| Foaming agent (V) Polythrene EE25-C(parts by mass) | | 8.8 | | 8.8 | | 8.8 | | 8.8 | | 8.8 | | 8.8 | | 8.8 | | 8.8 | | 8.8 | | 8.8 | |
| Physical properties of foam body | Foaming ratio (fold) | 1.5 | 1.75 | 1.5 | 1.75 | 1.5 | 1.75 | 1.5 | 1.75 | 1.5 | 1.75 | 1.5 | 1.75 | 1.5 | 1.75 | 1.5 | 1.75 | 1.5 | 1.75 | 1.5 | 1.75 |
| | Appearance of molded article | Δ | Δ | ○ | Δ | ○ | ○ | ○ | ○ | ○ | ○ | ○ | ○ | ○ | ○ | ○ | ○ | ○ | ○ | ○ | ○ |
| | Foaming property | ○ | ○ | ○ | ○ | ○ | ○ | ○ | ○ | ○ | ○ | ○ | ○ | ○ | ○ | ○ | ○ | ○ | ○ | ○ | ○ |

**[Table 24]**

| | parts by mass | Production Example 111 | | Production Example 112 | | Production Example 113 | | Production Example 114 | | Production Example 115 | | Production Example 116 | | Production Example 117 | | Production Example 118 | | Production Comp. Ex. 14 |
|---|---|---|---|---|---|---|---|---|---|---|---|---|---|---|---|---|---|---|
| | Hyrkogenated block polymer (I)-8 | - | | - | | - | | - | | - | | - | | - | | - | | - |
| | Hydrogenated block polymer (I)-1 | - | | - | | - | | - | | - | | - | | - | | - | | - |
| | Hydrogenated block polymer (I)-2 | - | | - | | - | | - | | - | | - | | - | | - | | - |
| | Hydrogenated block polymer (I)-45 | - | | - | | - | | - | | - | | - | | - | | - | | - |
| | Hydrogenated block polymer (I)-46 | 50 | | - | | - | | - | | - | | - | | - | | - | | - |
| | Hyrkogenated block polymer (I)-47 | - | | 50 | | - | | - | | - | | - | | - | | - | | - |
| | Hydrogenated block polymer (I)-48 | - | | - | | 50 | | - | | - | | - | | - | | - | | - |
| | Hydrogenated block polymer (I)-49 | - | | - | | - | | 50 | | - | | - | | - | | - | | - |
| Hyrkogenated block copolymer composition(parts by mass) | Hydrogenated block polymer (I)-50 | - | | - | | - | | - | | 50 | | - | | - | | - | | - |
| | Hydrogenated block polymer (I)-51 | - | | - | | - | | - | | - | | 50 | | - | | - | | - |
| | Hydrogenated block polymer (I)-52 | - | | - | | - | | - | | - | | - | | 50 | | - | | - |
| | Hydrogenated block polymer (I)-39 | - | | - | | - | | - | | - | | - | | - | | 50 | | - |
| | Hydrogenatad block polymer (I)-A | - | | - | | - | | - | | - | | - | | - | | - | | 50 |
| | Olefine-based resin (II) PM801A | 40 | | 40 | | 40 | | 40 | | 40 | | 40 | | 40 | | 40 | | 40 |
| | Thermoplastic resin (III)-1 N504 | 50 | | 50 | | 50 | | 50 | | 50 | | 50 | | 50 | | 50 | | 50 |
| | Thermoplastic resin (III)-2 | - | | - | | - | | - | | - | | - | | - | | - | | - |
| | Softener (IV) PW-90 | 80 | | 80 | | 80 | | 80 | | 80 | | 80 | | 80 | | 80 | | 80 |
| | Nucleating foaming agent P-3 | - | | - | | - | | - | | - | | - | | - | | - | | - |
| Foaming agent (V) Polythrene EE25-C(parts by mass) | | 8.8 | | 8.8 | | 8.8 | | 8.8 | | 8.8 | | 8.8 | | 8.8 | | 8.8 | | 8.8 |
| Physical properties of foam body | Foaming ratio (fold) | 1.5 | 1.75 | 1.5 | 1.75 | 1.5 | 1.75 | 1.5 | 1.75 | 1.5 | 1.75 | 1.5 | 1.75 | 1.5 | 1.75 | 1.5 | 1.75 | 1.5 |
| | Appearance of molded article | ○ | ○ | ○ | ○ | ○ | ○ | ○ | ○ | ○ | ○ | ○ | ○ | ○ | ○ | ○ | ○ | × |
| | Foaming property | ○ | ○ | ○ | ○ | ○ | ○ | ○ | ○ | ○ | ○ | ○ | ○ | ○ | ○ | ○ | ○ | × |

It was understood, from Tables 23 and 24, that the foam bodies using the hydrogenated block copolymer compositions of Production Examples were good in the foaming ratio, the molded appearance, and the foaming property at a high level.

This application is based upon Japanese Patent Application (No. 2022-009153), filed on January 25, 2022, the entire contents of which are incorporated herein by reference.

### Industrial Applicability

A hydrogenated block copolymer and a composition thereof according to the present invention is industrially applicable in the fields of vehicle components (vehicle interior materials and vehicle exterior materials), materials of medical instruments, various containers including food packaging containers, home appliances, industrial components, toys and the like.

## Claims

1. A hydrogenated block copolymer that is a hydrogenated product of a block copolymer comprising a vinyl aromatic monomer unit and a conjugated diene monomer unit, satisfying the following conditions (1) to (4) :
<Condition (1)>:
the hydrogenated block copolymer comprises at least one polymer block (a) principally containing a vinyl aromatic monomer unit, and a content of the polymer block (a) principally containing the vinyl aromatic monomer unit is 10% by mass or more and 40% by mass or less;
<Condition (2)>:
the hydrogenated block copolymer comprises at least one hydrogenated copolymer block (b) containing a vinyl aromatic monomer unit and a conjugated diene monomer unit, and a content of the vinyl aromatic monomer unit in the hydrogenated copolymer block (b) is 30% by mass or more and 79% by mass or less;
<Condition (3)>:
the hydrogenated block copolymer has a value of instantaneous hardness measured with a type A durometer in accordance with JIS K6253 of 60 or more, and a value of instantaneous hardness measured with a type D durometer of 65 or less; and
<Condition (4)>:
the hydrogenated block copolymer has an MFR value measured under conditions of a temperature of 230°C and a load of 2.16 kg in accordance with JIS K7210 of 10 or more.

2. The hydrogenated block copolymer according to claim 1,
wherein the value of instantaneous hardness measured with a type A durometer in accordance with JIS K6253 is 85 or more, and the value of instantaneous hardness measured with a type D durometer is 45 or less.

3. The hydrogenated block copolymer according to claim 1,
wherein the content of the polymer block (a) principally containing the vinyl aromatic monomer unit is 25% by mass or more and 35% by mass or less.

4. The hydrogenated block copolymer according to claim 1,
wherein the MFR value measured under conditions of a temperature of 230°C and a load of 2.16 kg in accordance with JIS K7210 is 50 or more.

5. The hydrogenated block copolymer according to claim 1,
wherein the content of the vinyl aromatic monomer unit in the hydrogenated copolymer block (b) is 45% by mass or more and 70% by mass or less.

6. The hydrogenated block copolymer according to claim 1, wherein a content of all vinyl aromatic monomer units is 60% by mass or more and 80% by mass or less.

7. The hydrogenated block copolymer according to claim 1, wherein a vinyl bond content in the hydrogenated copolymer block (b) is 30% by mass or more.

8. The hydrogenated block copolymer according to claim 1, comprising:
at least one hydrogenated polymer block (c) principally containing a conjugated diene monomer unit,
wherein a content of the hydrogenated polymer block (c) principally containing the conjugated diene monomer unit is 3% by mass or more.

9. The hydrogenated block copolymer according to claim 1, comprising:
at least one hydrogenated polymer block (c) principally containing a conjugated diene monomer unit,
wherein a content of the hydrogenated polymer block (c) principally containing the conjugated diene monomer unit is 3% by mass or more and 20% by mass or less.

10. A hydrogenated block copolymer composition, comprising:
1% by mass or more and 50% by mass or less of the hydrogenated block copolymer (I) according to any one of claims 1 to 9;
5% by mass or more and 90% by mass or less of at least one olefine-based resin (II);
1% by mass or more and 50% by mass or less of at least one thermoplastic resin (III); and
5% by mass or more and 90% by mass or less of at least one softener (IV).

11. The hydrogenated block copolymer composition according to claim 10,
wherein the olefine-based resin (II) comprises at least one polypropylene-based resin.

12. A molded article of the hydrogenated block copolymer composition according to claim 10.

13. The molded article according to claim 12, being a foam body.
